(19) **Europäisches Patentamt**

**European Patent Office**

**Office européen des brevets**

(11) Publication number: **0 230 116 B1**

(12) **EUROPEAN PATENT SPECIFICATION**

(45) Date of publication of patent specification:
24.04.91 Bulletin 91/17

(51) Int. Cl.$^5$: **H04L 12/42**

(21) Application number: 86309379.5

(22) Date of filing: 02.12.86

(54) TDM ring communication medium.

(30) Priority: 09.12.85 US 807075

(43) Date of publication of application:
29.07.87 Bulletin 87/31

(45) Publication of the grant of the patent:
24.04.91 Bulletin 91/17

(84) Designated Contracting States:
DE FR GB

(56) References cited:
EP-A- 0 112 425
DE-A- 2 743 854
FR-A- 2 575 881
PATENTS ABSTRACTS OF JAPAN, vol. 9, no.
201 (E-336)[1924], 17th August 1985; & JP-A-60
65 640

(56) References cited:
PROCEEDINGS IEEE GLOBAL TELECOM-
MUNICATIONS CONFERENCE, New Orleans,
US, 2nd-5th December 1985, vol. 1 of 3, pages
451-456, IEEE, New York, US; R. Mednick:
"Office information network: an integrated
lan"
IDEM
PROCEEDINGS TWENTY-FIFTH IEEE COM-
PUTER SOCIETY INTERNATIONAL CONFER-
ENCE, COMP CON 82 FALL, Washington, US,
20th-23rd September 1982, pages 615-624,
IEEE, New York, US; D.W. ANDREWS et al.: "A
token-ring architecture for local-area net-
works: an update"

(73) Proprietor: AMP INCORPORATED
P.O. Box 3608 470 Friendship Road
Harrisburg Pennsylvania 17105 (US)

(72) Inventor: Rypinski, Chandos Arthur
139 Stewart Drive
Tiburon California 94920 (US)
Inventor: Funke, Klaus Ernst
335 Ironstone Court
San Rafel California 94903 (US)

(74) Representative: Warren, Keith Stanley et al
BARON & WARREN 18 South End Kensington
London W8 5BU (GB)

## Description

This invention relates, generally, to a manner of common medium data and voice communication. In particular, it relates to a common medium time division multiplex ring communication system supporting local communication between devices connected to a single node in the ring, and providing unique diagnostic features including dynamic addressing for assessing or controlling the status of the system.

Presently, there are a number of methods, systems and devices which attempt to pass information from one point to another. Therefore, in a manner of speaking, present systems may be considered or viewed as "local" area networks. Types of systems which use this type of communication are PBX's, IEEE-488 busses, ethernet and RS-232 to name a few. Further, with the significant proliferation of test instrumentation, desk top computers, minicomputers, microcomputers, and networks as well as general data communication, the need for various types of equipment to communicate is becoming quite acute. Accordingly, and attendant with this need, is a proliferation of different types of protocol or networking schemes, some of which have been mentioned above, or may be found, for example, in U. S. Patent No. 4, 470, 140 "Distributed Switching Network" issued September 4, 1984 to Coffey ; U.S. Patent No. 4,468,767 " Drop-and-Insert Multiplex Digital Communications System" issued August 28, 1984 to Warren et al ; and U.S. Patent No. 4,443,663 "Filtering of Port Data in a Switching System Employing Interactive Processors" issued April 17, 1984 to Ellis et al. Modern communications require exchange of data from a number of different types of devices For example, voice communications via telephone systems often exist in parallel with data communication systems supporting work stations, data terminals, and distributed peripherals. Such equipment operates on varying protocols and differing baud rates. While typical systems often provide independent communications media for such types of equipment, the result is overly complex and costly.

As a result, it is desirable to provide a common medium for supporting communication between such types of equipment at numerous locations. In order to support the volume of desired communications between devices of the various types, it is desirable to provide hundreds of channels of access for each new user to greatly reduce the probability that no communications path is immediately available, and to reduce the waiting time for a channel when all channels are busy at the instant of demand.

In particular, it has been found desirable to provide a common medium time division multiplex ring communication system wherein data is passed unidirectionally between interconnected nodes in a high rate serial digital format, preferably via optical cable. One node serves as a master to control timing and buffering functions required in support of the communication protocol, while the remaining nodes serve as slaves which permit access by peripheral devices attached to the serial data stream as appropriate.

An inherent problem, however, in any ring system is the overall reliability of the communication network. Specifically, failure of a single node may disable an entire ring communication system by disrupting the unidirectional data transfer. Thus it is important to provide means for monitoring and controlling the status of the individual nodes on a ring. Further, it is desirable to reduce the number of such nodes, thereby reducing the possibility of disruptive failure.

It is desirable to provide nodes which may support a plurality of attached devices, including devices of different types. For example, a single node might support several telephone sets, as well as data terminals, work stations, and peripheral devices of various types. In this manner, the total number of nodes in the high speed serial ring is minimized, while a flexible system supporting many user devices is nevertheless provided.

Because communications in such a system are provided by interfacing through the node to the ring communication system, previous systems have suffered from a limitation in the total system flexibility. Specifically, communication between individual devices connected to a single common node is not available. Thus user stations must be selected and grouped into subsets wherein local communications are not required. Where this requirement is not easily met, the number of individual nodes on the ring must then be increased to reduce the number of devices supported by an individual node and increase the number of communications paths available. This, in turn, increases the hardware requirement of the system and reduces its reliability, while also wasting bandwith on the ring itself to support highly localized communication.

Accordingly, it is an object of the present invention to provide a common medium time division multiplex ring system which permits highly localized communication without involving the ring itself. Specifically, it is an object to provide such a system wherein each node may support a range of possible adaptors to enable connection of telephone lines, data terminal equipment, computers, etc. A specific object is to provide such a communication system wherein devices attached to a single such node on the ring may communicate with each other by involving only that individual node, without requiring any communication band width on the ring itself. Thus it is a general object of the present invention to provide a system in which a common medium time division multiplex ring using local logic for information subset usage comprises a common medium time division multiplex ring device (CMRD) which receives and retransmits serial bit stream data for transmission to additional CMRD's connected by a communication medium thereto wherein a plurality of peripheral and/or interface devices are connected to each CMRD such that each peripheral and/or interface device may communicate with said serial bit stream data and thereby other peripheral and/or interface devices associated with other CMRD's, characterized in that a peripheral and/or interface device associated with a CMRD may communicate with another peripheral and/or interface device associated with the same CMRD without the utilization of a CMRD other than the CMRD with which it is associated.

It is further an object to provide such a common medium time division multiplex ring communication system providing for improved diagnostic and status monitoring to increase reliability of the serial system and permit greater repair facilities when needed. A further object is to provide such an improved system retaining flexibility to add or remove nodes from the ring without affecting the diagnostic scheme.

DE-A-2 743 854 and EP-A-0 112 425, disclose a common medium time division multiplex ring communication system including a plurality of common medium time division multiplex ring devices, hereinafter referred to as CMRD's, which receive, monitor, and retransmit serial bit stream data during a plurality of first time slots and a plurality of second time slots for communication with other such CMRD's connected by a common communication medium, wherein a plurality of peripheral devices are connected to a CMRD such that each peripheral device may communicate with other peripheral devices associated with other CMRD's only during said first time slots by means of said serial bit stream data over the common medium.

A common medium time division multiplex ring communication according to the present invention is characterized by means for allowing one of said peripheral devices associated with a given CMRD to communicate locally with another peripherical device associated with the same CMRD during said second time slots without utilization of the common medium or any other CMRD.

Neither DE-A-2 743 845 nor EP-A-0 112 425 discloses that there is advantage in confining local communication to periods other than those during which peripheral devices communicate with each other by way of the ring.

For a better understanding of the present invention and to show how it may be carried into effect reference will now be made by way of example to the accompanying drawings in which :

Figure 1a is a general network plan showing utilization of the present invention ;
Figures 1b and 1c show a more detailed layout of one multiplex device with various function adapters and system utilizers ;
Figure 2 is a simplified system diagram of the present invention ;
Figure 3a is a timing diagram of the framing data used in the present invention ;
Figure 3b is a simplified chart showing data flow through the present invention in relation to timing ;
Figures 4a-4k are block diagrams of the present invention ;
Figures 5a and 5b are a schematic diagram of the fiber optic transmitter for use with the present invention;
Figures 6a-6c are a schematic diagram of the fiber optic receiver for use with the present invention ;
Figures 7a-7j are a schematic diagram of the frame detection and timing circuitry of the present invention;
FIGURES 8a-8i are a schematic diagram of the state control and address decoding circuitry of the present invention ;
FIGURES 9a-9i are a schematic diagram of the register and memory circuitry of the present invention ;
FIGURES 10a-10c are a schematic diagram of the input and output control circuitry of the multiplex device of the present invention ;
FIGURES 11a-11i are a schematic diagram of the input and output buffer circuitry of the present invention;
FIGURES 12a and 12b are I/O data bus timing diagrams ;
FIGURES 13a-13c are data flow diagrams for the present invention in a master mode ; and
FIGURES 14a-14d are data flow diagrams for the present invention in a slave mode.

## I : SYSTEM OVERVIEW

The present invention concerns a Common Medium Time Division Multiplex Ring System (hereinafter called CMRS) although it may be classified as a number of other types of systems such as a Time Division Shared Use Multiplex Ring system without departing from the spirit and scope of the present invention. The present invention utilizes a Common Medium Time Division Multiplex Ring Device (hereinafter called CMRD) as its heart or smallest building block. Accordingly, the present invention will use a system and device for using common medium data and voice communications where the common medium is preferably fiber optic cable although wire (twisted pair, coax or the like) may be utilized. Each CMRD is capable of being either a slave or a master, although only one master per CMRS would be designated. A plurality of CMRD's are interconnected serially with peripheral devices being connected to each CMRD thereby forming a CMRS. Further a plurality of CMRS's may be interconnected or a CMRS may be interconnected with other types of systems or networks such as, for example, a PBX, a communications network, mainframe computers or the like. Since the CMRD's are serially interconnected, the signals in the common medium are repeated and regenerated at each CMRD, thereby representing a greatly lengthened backplane as well as dictating that the size limit of the ring is only limited by the amount of information inserted or deleted at each CMRD and the speed of data transfer of the overall system.

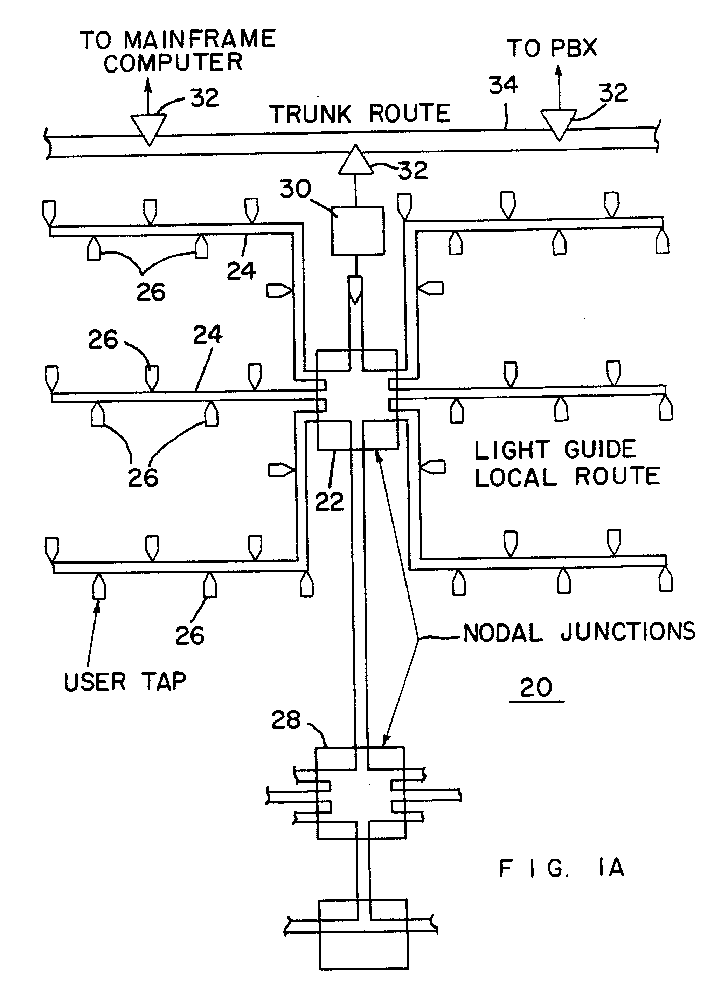

Referring now to Figure 1a, there may be seen a generalized network plan utilizing a CMRS. A CMRS may be described in the context of one quadrant of a floor, one floor, one office building, or a town or region without departing from the spirit and scope of the present invention. For simplicity purposes it will be assumed that a CMRS will only be part of one floor in an office building. Accordingly, in Figure 1a there can be seen a CMRS 20. Nodal junction boxes 22, 28 where the nodal junction boxes may be installed in, for example, a main hallway or at the service entry for a large room are utilized as central points for main signal mediums 24 which are preferably fiber optic cable emanating therefrom. These main signal mediums 24 interconnect CMRD's 26 in a serial fashion. Also shown is a primary interface device 30 which would be interconnected with a CMRD 26 which facilitates communication with a trunk interface device 32 and thereafter a trunk route or medium 34. The trunk route or medium 34 may be interconnected with a mainframe computer, a PBX, or even another CMRS thereby essentially providing a CMRS which is independent with respect to another, although facilitating communication therebetween.

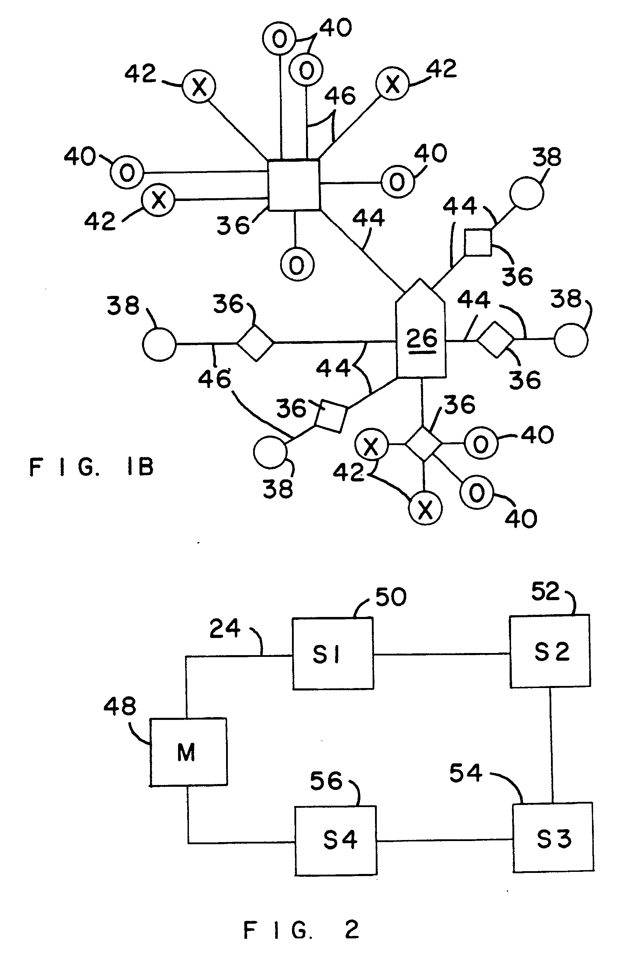

Referring now to Figure 1b, more detailed use of a CMRD 26 may be shown. Accordingly, a CMRD 26 would communicate with one or more secondary interface devices (function adaptors) 36. Thereafter, the secondary interface devices 36 would inter act with various equipment such as 38 which may be a large work or test station. A secondary interface device 36 may also interconnect other devices 40 which may be test or peripheral equipment, printers, terminals, or the like, or may interconnect analog devices such as telephony equipment, i.e., telephones 42. Interconnection between the CMRD and the secondary interface device 36 is via a secondary signal medium 44 which is preferably wire such as coax, ribbon cable, twisted pairs, although optical fiber may also be utilized. Interconnecting the secondary interface devices 36 with the work or test stations 38 or the peripheral equipment or analog devices 40, 42 respectively is a tertiary signal medium 46 which is also preferably wire.

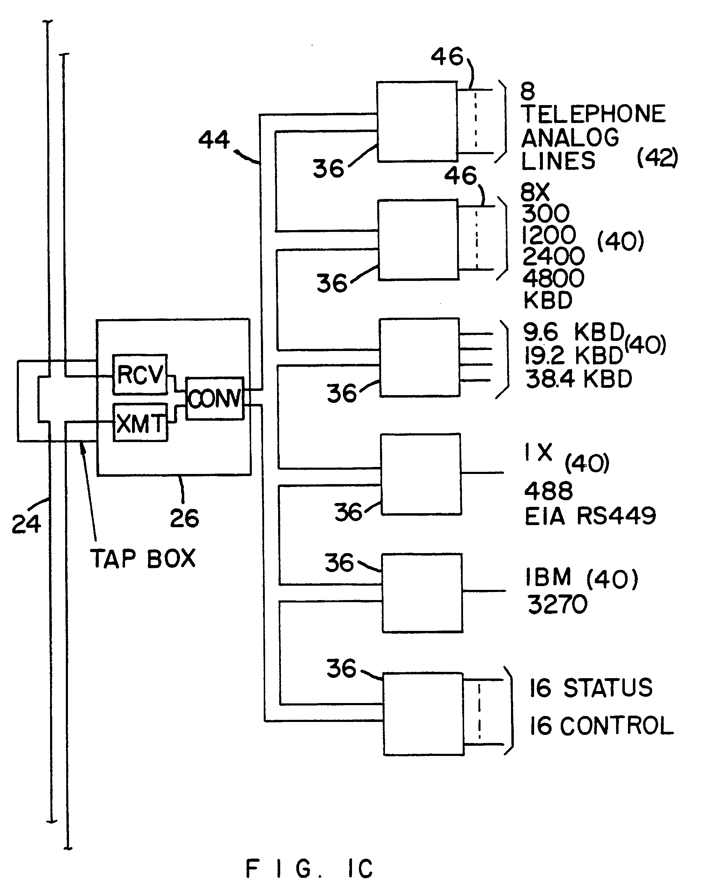

Referring now to Figure 1c, another representation of the distribution in a CMRS as shown in Figures 1a and 1b may be seen. A main signal medium 24 is interconnected with a CMRD 26. The CMRD (described in more detail below) has receive and transmit circuitry contained therein for communication with the main signal medium 24 and also would have conversion circuitry for communication with the main signal medium 24. A secondary signal medium 44 interconnects secondary interface devices 36 with the secondary interface devices then interconnecting, via a tertiary signal medium 46, various pieces of equipment. This equipment may include, as shown, telephone analog lines 42, a number of RS-232 serial interfaces at rates for example from 300 to 4800 baud, a data port interface at, for example, 9.6, 19.2, 38.4 and 56 kilobaud, or an EIA/RS-449 interface as well as an interface port with a mainframe computer such as an IBM 3270 and a number of status monitoring inputs and control outputs. All of these interfaces may be extended with additional circuit modules and may be added to or subtracted from as necessary with the secondary interface devices 36 merely serving as a format device between external equipment and 38, 40 and 42 and a CMRD.

The operation of the CMRD's is substantially identical, although one CMRD need be designated as a master for basically timing and control purposes (described more fully below).

## II : DEVICE OVERVIEW

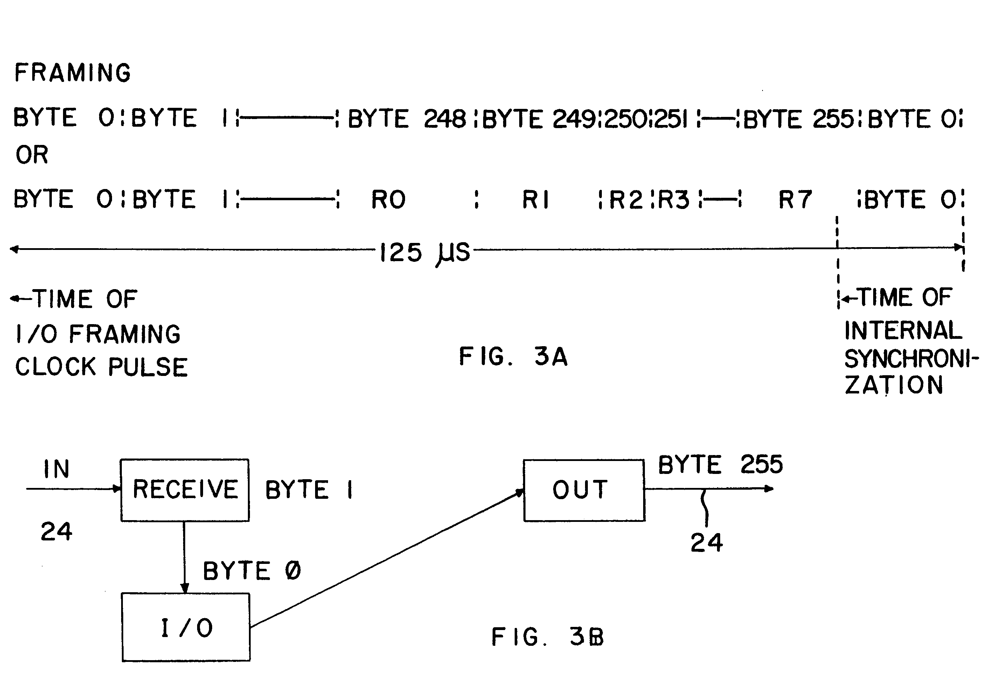

Referring now to Figure 2 there can be seen a simplified CMRS which should aid in understanding the communication system of the present invention. A CMRD master 48 is serially inserted with CMRD slave unit 1, CMRD slave unit 2, CMRD slave unit 3 and CMRD slave unit 4 (50, 52, 54 and 56 respectively) with a main signal medium 24 interconnecting each of them. Disposed in the medium 24 and through the CMRD's 48-56 is information in the form of a serial bit stream. The serial bit stream contains data bytes, status bytes and synchronization bytes. This bit stream would leave the CMRD master 48 and go through the CMRD slave units 50-56 with each slave unit 50-56 either altering, or merely passing on portions or all of the serial bit stream as desired. In the preferred embodiment of the present invention an eight KHz bandwidth has been chosen in order to be compatible with present day telephony bandwidths. However, it is to be understood that higher or lower bandwidths may be practiced. Accordingly, due to this 8 KHz bandwidth any bit which leaves the CMRD master 48 must cycle through the CMRD slave units 50-56, experiencing any propagation delays and return to the CMRD master 48 in a total time of FRAME of 125 microseconds. Accordingly, the number of CMRD slave units may be increased or decreased to any amount as long as the total FRAME time is equal to or less than 125 microseconds. However, should the FRAME time be adjusted, then the maximum number of CMRD slave units may also be adjusted. It has been found that allowing for reception of the bit stream, retransmission of the data

4

and for reasonable gate delay times, a propagation delay per CMRD (whether it is a slave or a master) is approximately 1.25 microseconds. This therefore means that an approximate maximum of one hundred CMRD master and slave units may be placed onto an individual CMRS 20 (not shown), although as mentioned previously, any number of CMRS's may be interconnected.

Referring now to Figure 3a there can be seen a representative timing scheme for a FRAME of serial data. Each FRAME is comprised of 256 bytes with each byte being 9 bits wide. The ninth bit is used for parity purposes, and is preferably an odd parity bit, although even parity or no parity bit could be utilized. Bytes 0 through 247 contain data while bytes 248 through 255 (also called R0 through R7 respectively) contain synchronization, status and diagnostic bytes. Bytes 248 through 255 of the serial data on the ring are not normally accessible to the user(s) of a CMRD, and do not contain data for exchange with the user(s). Thus the users may be isolated from the ring during these periods, for example, for exchange of data between such users locally without involving the ring itself (as described more fully below).

Referring now to Figure 3b there is shown a simplified bit stream flow chart. It should be remembered that in order for a CMRD to receive, act on and retransmit the bit stream contained in a FRAME in the maximum preferred time of approximately 1.25 microseconds, simultaneous operations must be performed. Accordingly, at the same time that byte 1 is being received in a CMRD, byte 0 is being acted upon in the parallel I/O port of the CMRD (thereby providing communication with external devices as described more fully below) and simultaneously byte 255 from the previous FRAME is being put onto the main signal medium 24. Accordingly, bytes of information flow through a CMRD in the manner representative of Figure 3b, that is, receipt, parallel I/O and then out.

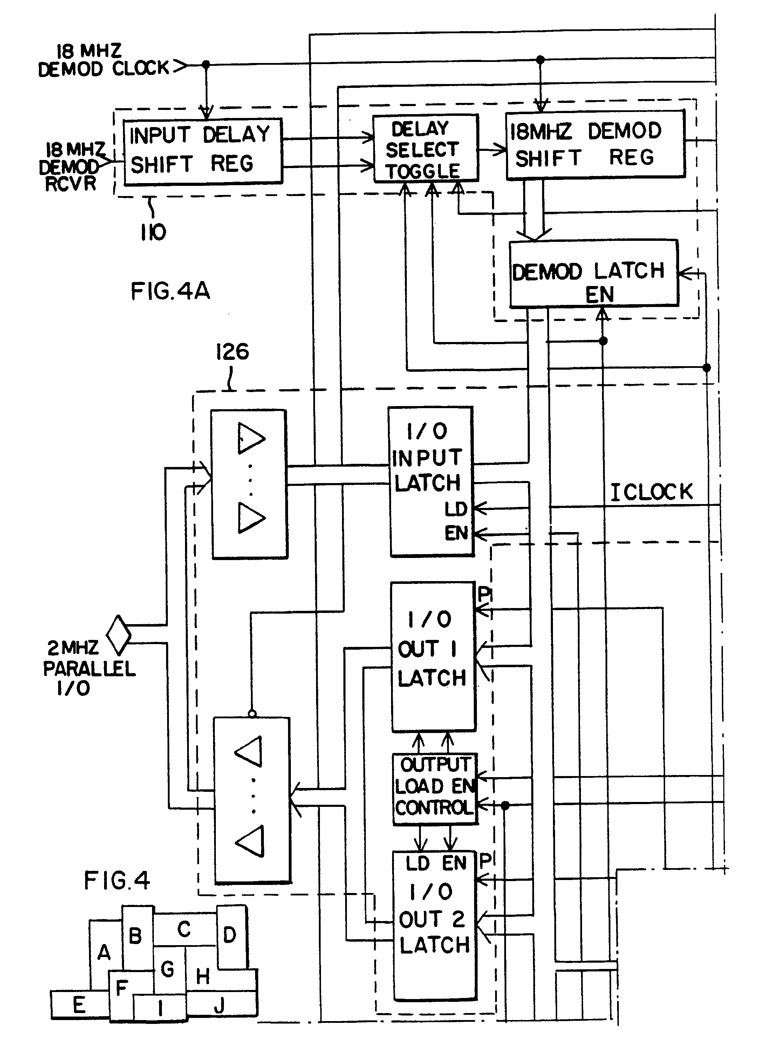

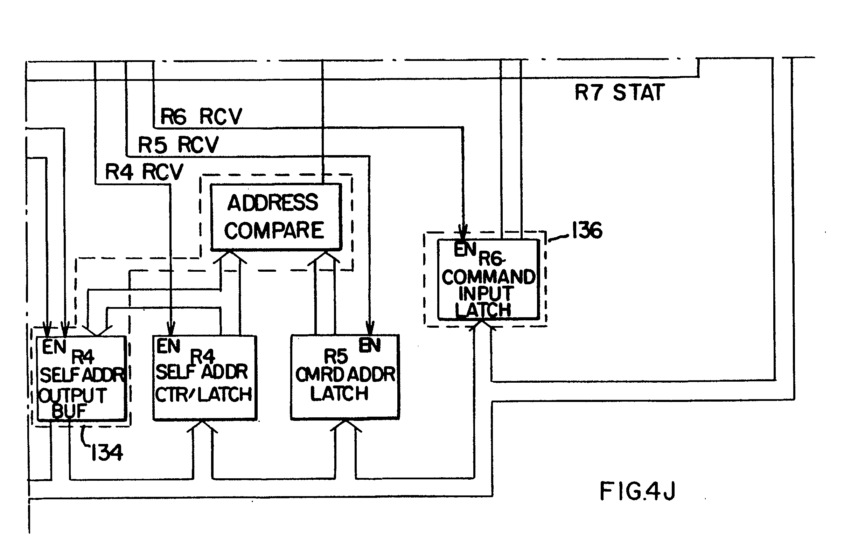

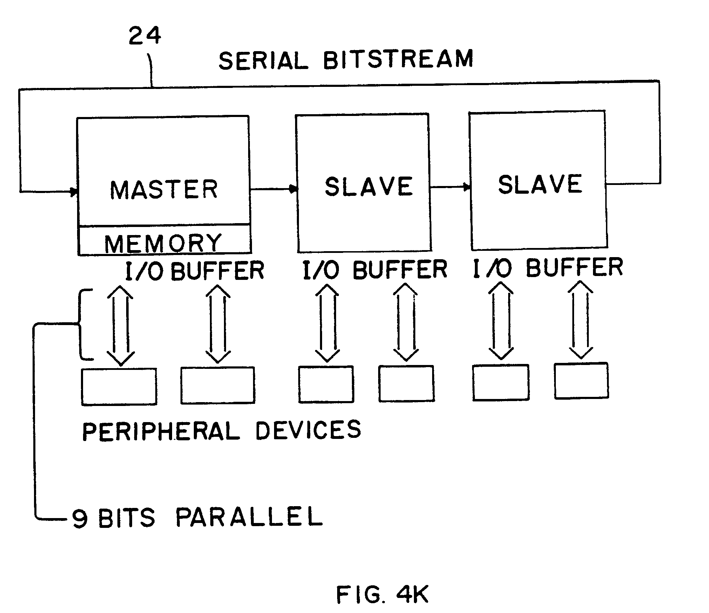

Referring now to Figures 4a-4k there is shown a block diagram of the circuitry of the CMRD. These blocks or components include :

| BLOCK NO. | DESCRIPTION |
|---|---|
| 110 | FRAME input delay circuitry including serial to parallel data conversion and associated latches |
| 112 | receive bit counter and address counter |
| 114 | synchronization detector and alarm detector |
| 116 | synchronization counter |
| 118 | transmit bit counter and address bit |

|  |  |
|---|---|
|  | counter including byte clock and FRAME clock supply for I/O |
| 120 | phased lock loop (PLL) clock source using references from the receive clock when the CMRD is in the slave mode or from a free running oscillator or external byte clock when the CMRD is in the master mode |
| 122 | 256 X 9 bit frame memory for operation of the CMRD in the master mode |
| 124 | synchronization pattern generator |
| 126 | parallel input and output buffers, line drivers and receivers and I/O control circuitry |
| 128 | parity bit control, parity bit generator and all ONE's detector |
| 130 | dual buffered parallel to serial convertor for serial data transmission |
| 132 | diagnostic command decoding and diagnostic timer |
| 134 | CMRD address recognition, automatic address register incrementing |
| 136 | diagnostic data transmit and receive registers |
| 138 | CMRD state controller |
| 142 | transmit counter synchronization |
| 144 | master/slave selection |
| 146 | external frame synchronization |
| 148 | external clock input enable |
| 150 | CMRD internal status interrogation |

Referring now to Figure 4k, there is shown an architectural overview in block diagram form of a CMRD master and two slaves. Generally, each CMRD acts as a serial-to-parallel and parallel-to-serial converter with a serial bit stream present in the main signal medium 24 and parallel data flow being used with the peripheral devices. Accordingly, in this manner serial transmission minimizes the number of signal paths between CMRD's while utilizing parallel paths between a CMRD and peripheral devices for speed of information transfer where medium lengths are preferably and generally short. A CMRD in the master mode provides the ring timing and a bit stream memory buffer. The memory is necessary to hold incoming data until the next 125 microsecond period. As mentioned, there is only one CMRD master per CMRS. Communications from a CMRD to a peripheral device is accomplished through an I/O buffer.

## III : CMRD CIRCUIT DESCRIPTION

Reference may now be had to Table II entitled "Circuit Components and Designations" which, generally, tabulates the active components by type utilized with the present invention. It is to be understood that "designations" refers to a device type or function which are readily available and known to one skilled in the art and are manufactured by a number of companies such as, for example, Texas Instruments of Dallas, Texas. Further, it is to be understood that any number of devices may be combined through the use of large scale integrated circuitry designed or custom circuitry thereby minimizing the number of components or producing hybrids.

## TABLE II – CIRCUIT COMPONENTS AND DESIGNATIONS

| Designation | Type/Description |
|---|---|
| V1 | 12VDC |
| V2 | 5VDC |
| Q1, Q3 | Transistors |
| Q2 | FET |
| L1,2,3 | Inductor |
| E1 | Light Emitter |
| U1,8,9,10,70 | Exclusive OR Gate |
| U2,3,20 | D-Type Flip-Flop |

| | |
|---|---|
| U4,5,7,16,18,19,<br>21,51,92,95,110,<br>112,783,61,81,82,<br>97,107,109,113,<br>64,73,80,98,99,102<br>111,128,43,59,67,68,<br>101,114,117,126,784 | NAND Gate |
| U6 | OR Gate |
| PD1 | Photodiode |
| U12 | OP AMP |
| U13,14 | AGC |
| U11 | Voltage Regulator |
| U17 | PLL |
| U84 | Bus Buffer (HC126 type) |
| U23 | Buffer (Line Driver)<br>(HC244 type) |
| U124,77,44,<br>45,62,63,65,<br>86,87,104,105,<br>119,12 | Binary Counter (HC163,<br><br>HC166, HC393 type) |
| U20,30,36,53,<br>57,71,72,74,78,<br>91,100,108,<br>129,780 | Inverter (HC04 type) |
| U125 | Voltage Controlled Oscillator<br>(1648 type) |
| U116 | Phase-frequency Detector<br>(4044 type) |
| U66 | RAM (256 x 9) |
| U26,27,28,29<br>93 | Parallel/Serial Converters,<br>Serial/Parallel Converters<br>(HC164, HC165 type) |
| U35 | Parity Generator<br>(HC280 type) |
| U38,39 | Up/Down Counter<br>(HC193 type) |

| | |
|---|---|
| U40,41,19,20, 21,24,49,50,54, 55,88 | Tri-State Flip-Flops (HC564, HC574 type) |
| U42,60,89,106, | Tri-State Line Drivers (HC241, LS31 type) |
| U22,25 | Magnitude Comparators (HC688 type) |
| U31,37,46,47,69,96, 103,118,122,123 | Positive Triggered Flip-Flops (HC74 type) |
| U4,5,6,7,8,9,10,83 | Tri-State Buffers (HC365 type) |
| U130,131,132 | Resistor Pack |
| Y1 | Crystal (2.048 MHz) |

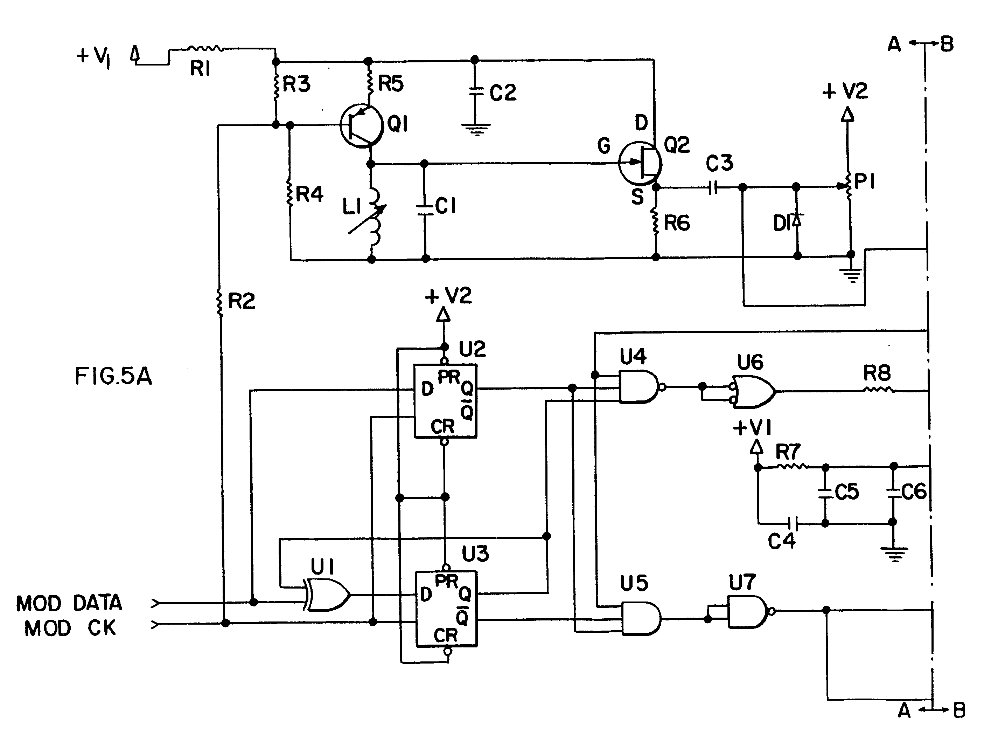

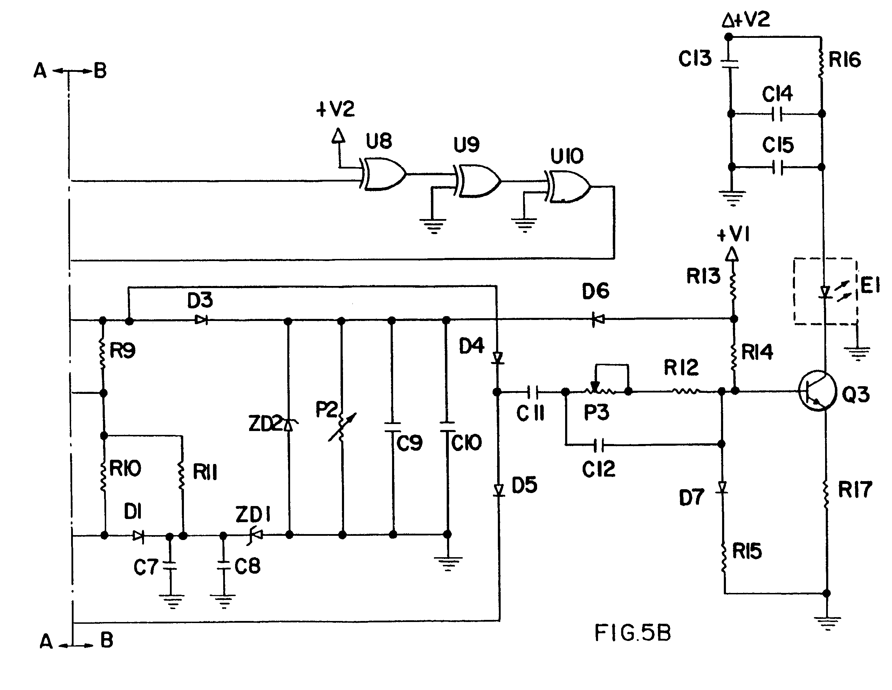

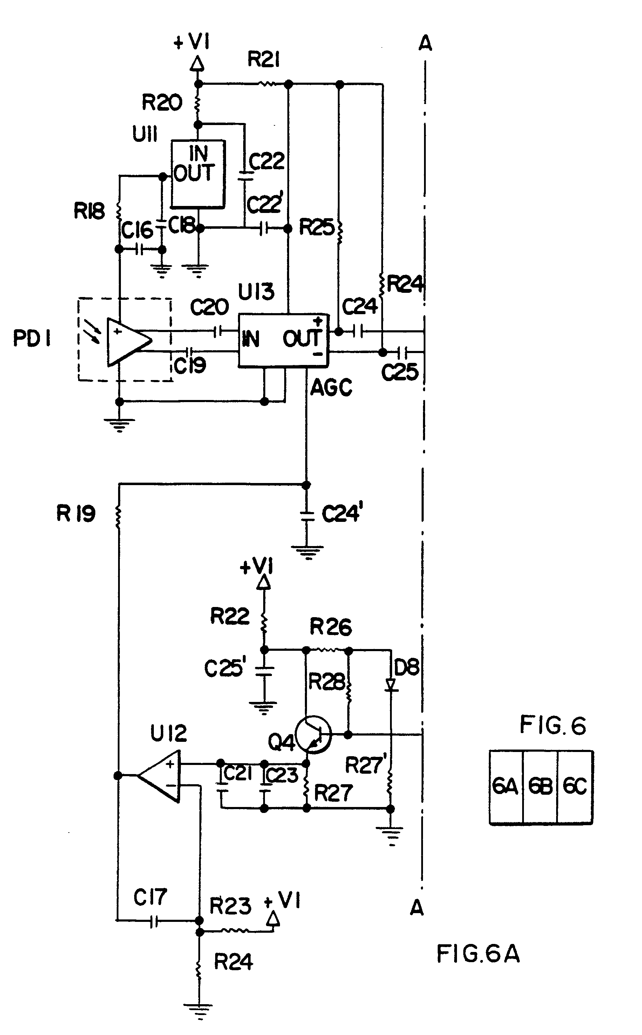

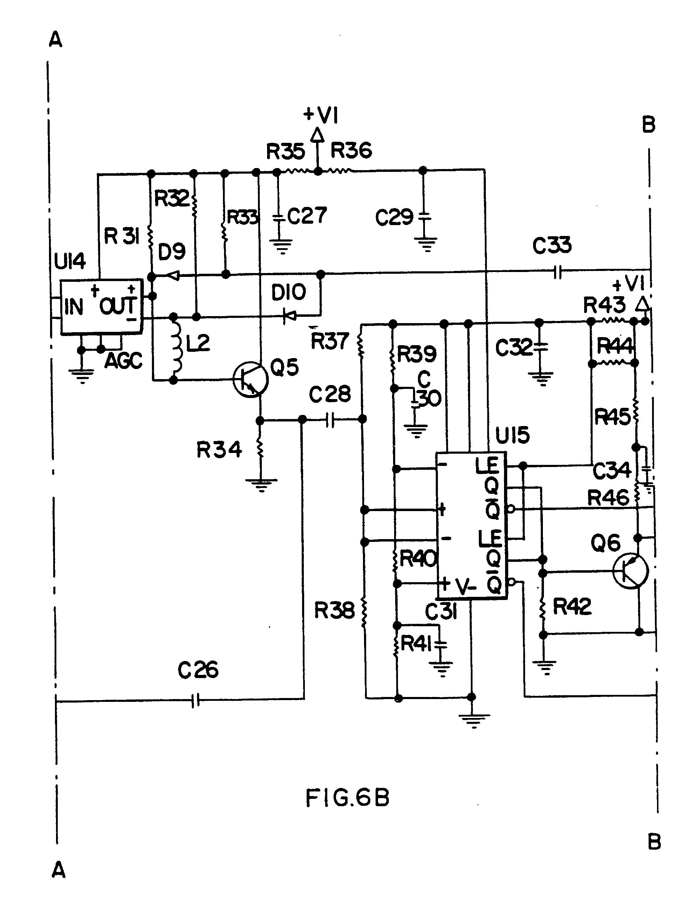

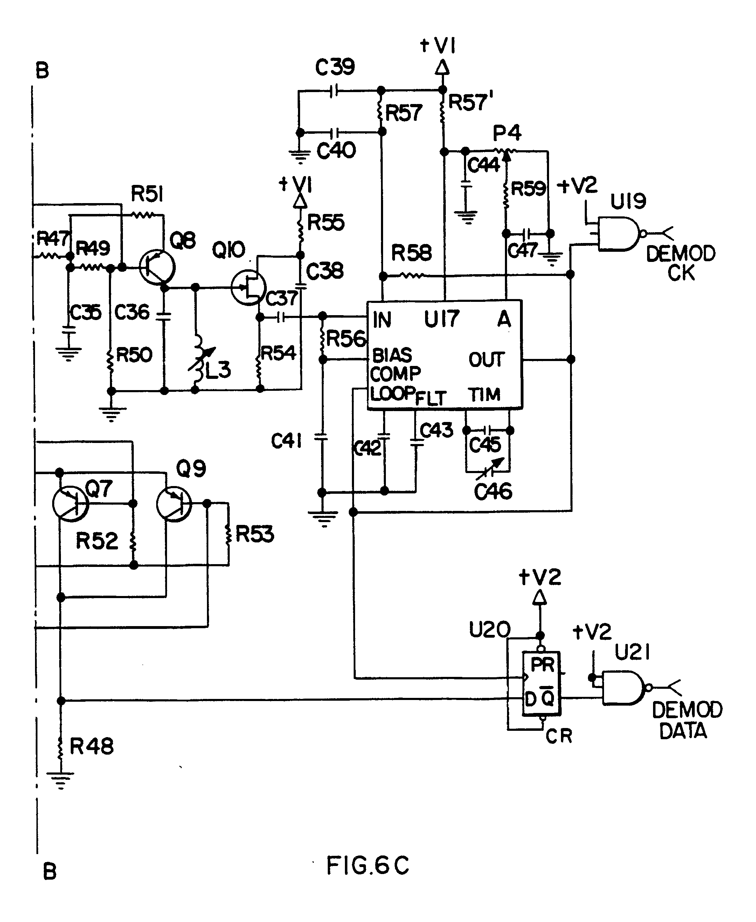

Referring now to Figure 5, there is shown a schematic diagram of a fiber optic transmitter which may be used with a preferred embodiment present invention. Figure 6 similarly shows a schematic, diagram of a fiber optic receiver which may be used with a preferred embodiment of the present invention. Photodiode PD1 is preferably a combination photodiode amplifier, while U15 is a dual high-speed comparator. U17 is a phase locked loop used to extract the system clock for the slave. The phase comparator lead of U17 is connected to the clock input of D-type flip-flop U20 and to the VCO output of U17.

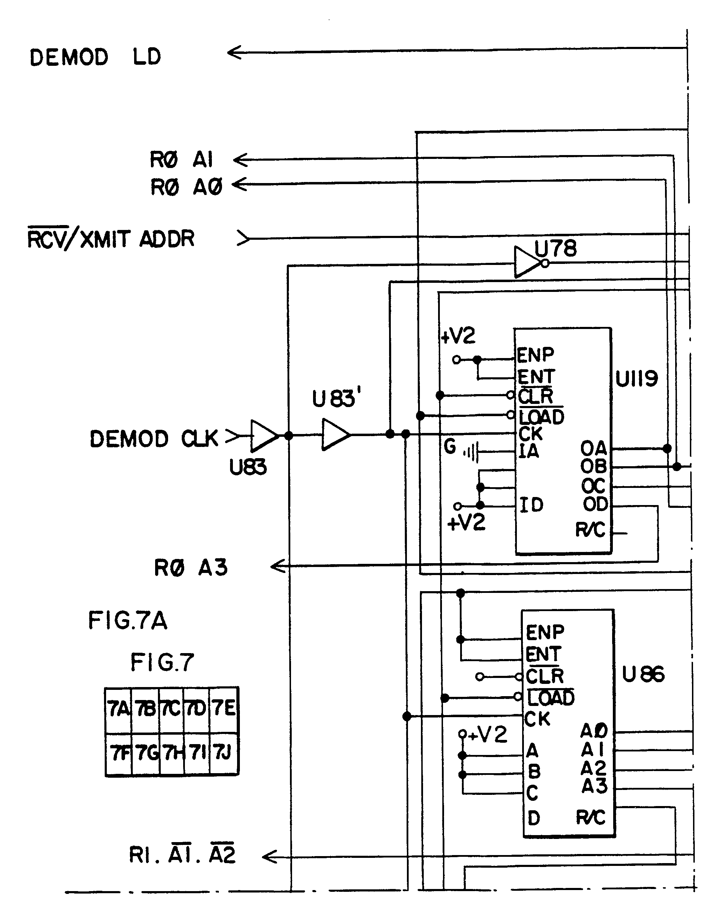

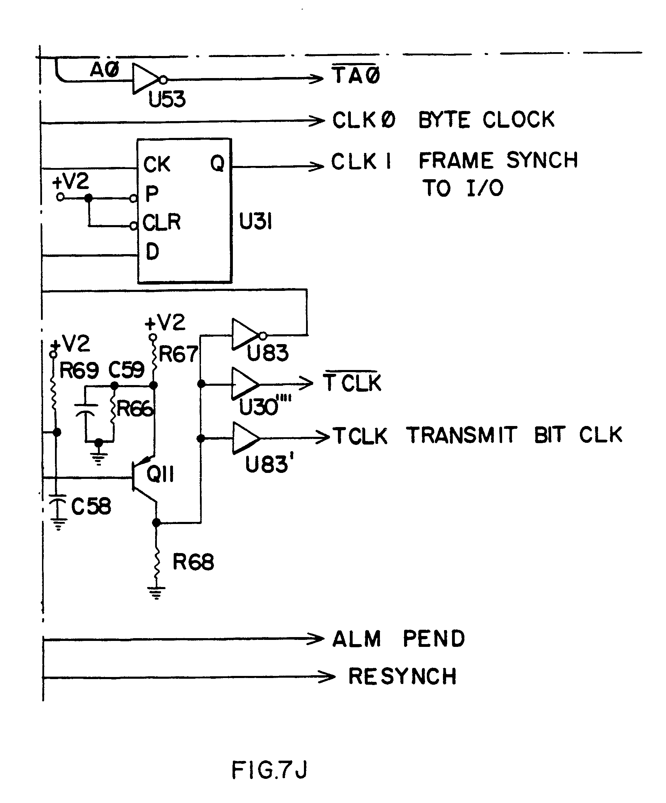

Referring now to Figures 7a through 7j, there is shown a schematic diagram of frame detection and timing circuitry which may be used with a preferred embodiment of the present invention. U44 is a 4-bit binary counter, and U89 is a tri-state octal noninverting device. The output of tri-state buffer U79 is connected to the output of tri-state buffer U84" which is also connected to an input lead of phase detector U116 as well as to the output of tri-state lead U79'". The input of tri-state buffer U79'" is connected to the output of inverter U30" and to one terminal of resistors R60 and R61. The input of inverter U30" is connected to the remaining terminal of resistor R60 and to one terminal of crystal Y1 (a 2.048 MHz crystal). One terminal of resistor R62 is connected to the tuning leads for U116 with the remaining terminal connected to one terminal of capacitor C53. One terminal of R63 connected to additional tuning inputs of U116 and thereafter to one terminal of resistors R65 and R64. U125 is a voltage control oscillator. Inductor L5 is connected to one terminal of capacitor C56 and to another tuning terminal for voltage control oscillator U125. One of the output terminals of voltage control oscillator U125 is connected to one terminal of resistor R69 and one terminal of capacitor C58, with the remaining terminals of resistor R69 and capacitor C58 being tied to +V2 and GROUND respectively. The remaining output terminal for voltage control oscillator U25 is connected to the base of transistor Q11 with the emitter of Q11 connected to one terminal of resistors R66 and R67 as well as one terminal of capacitor C59.

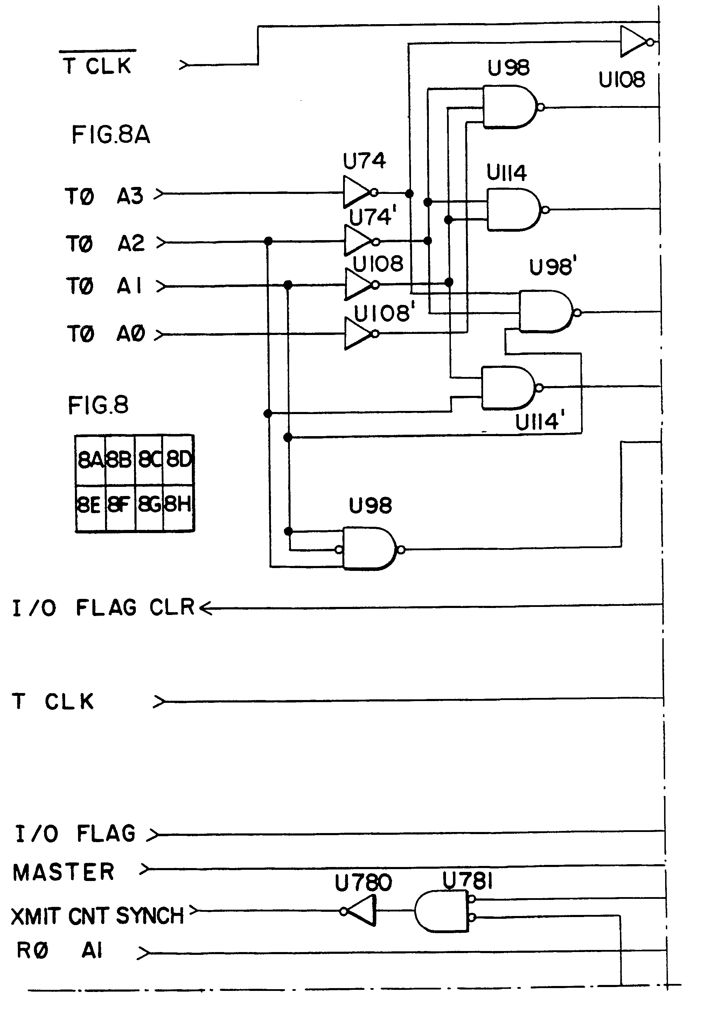

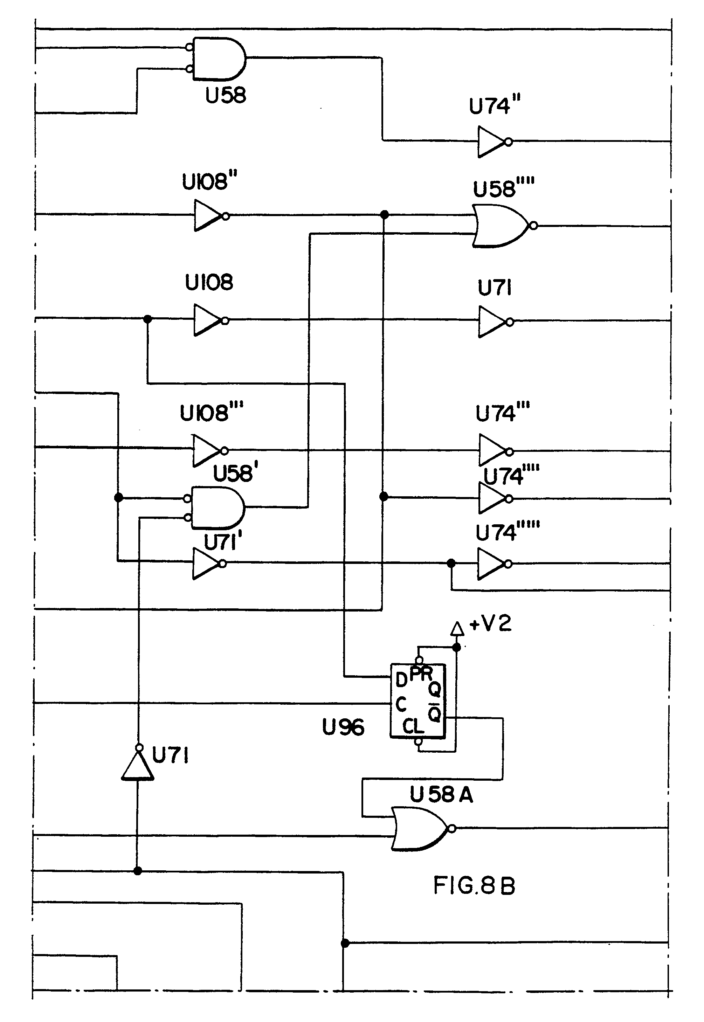

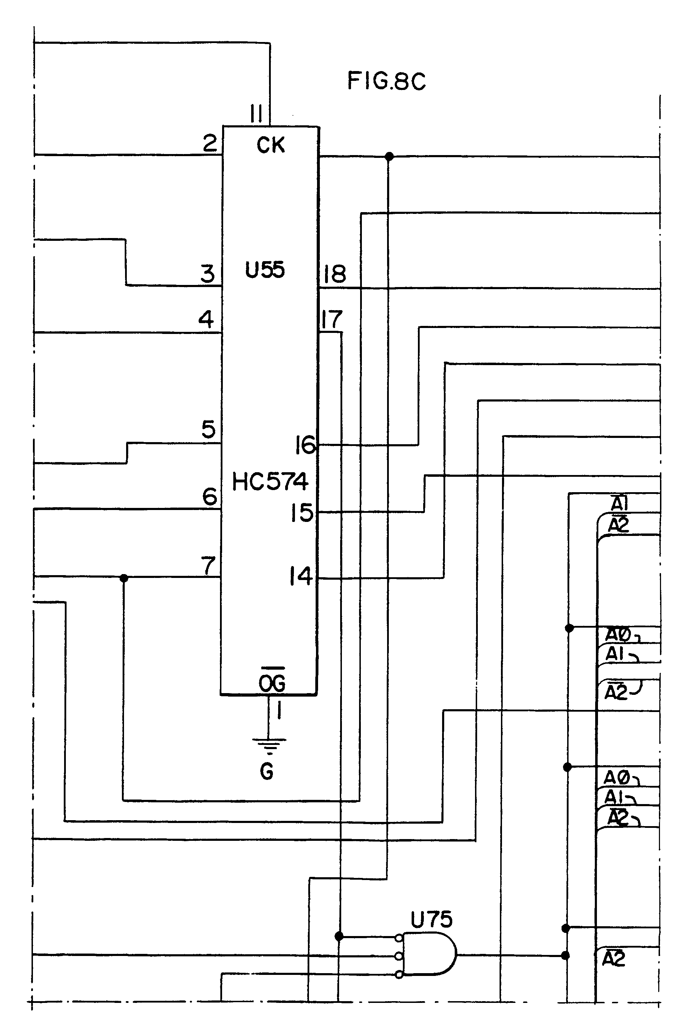

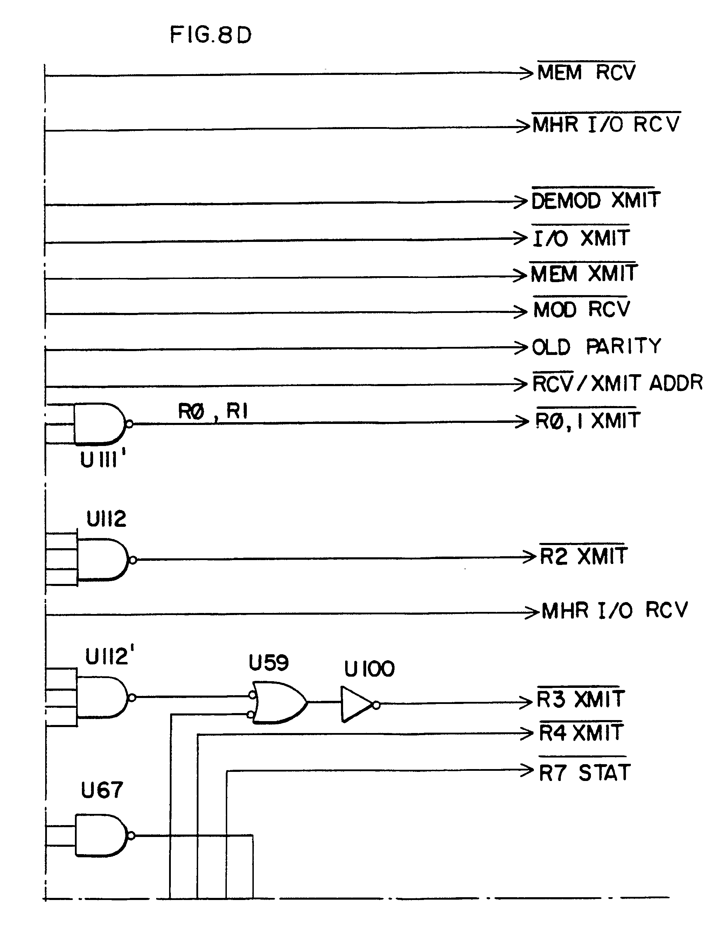

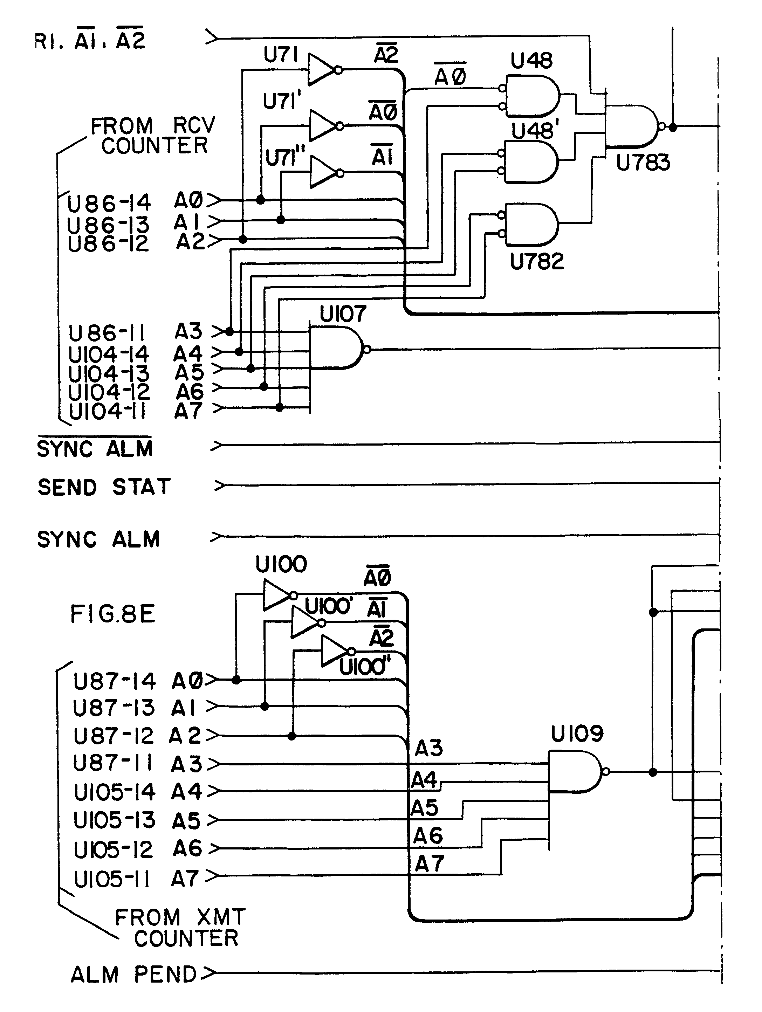

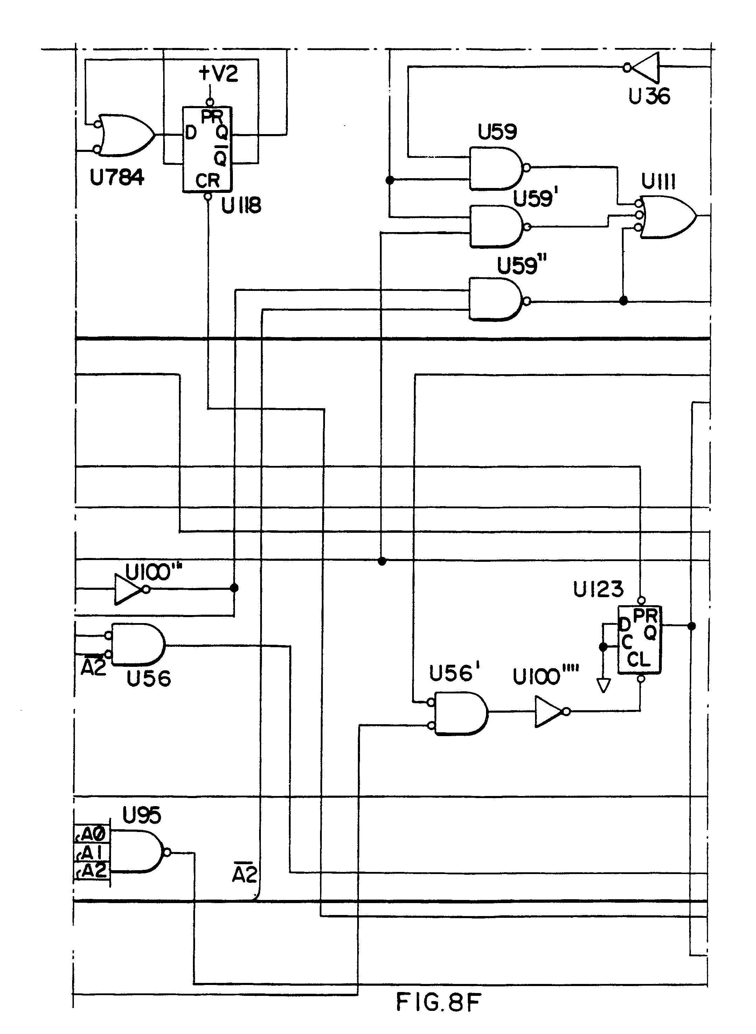

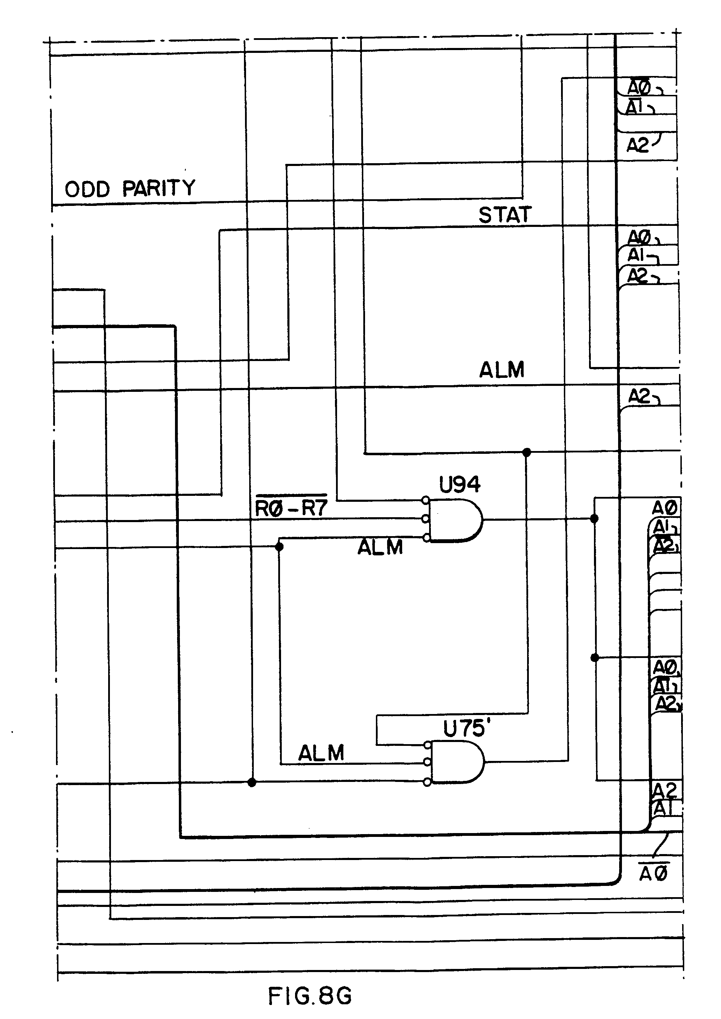

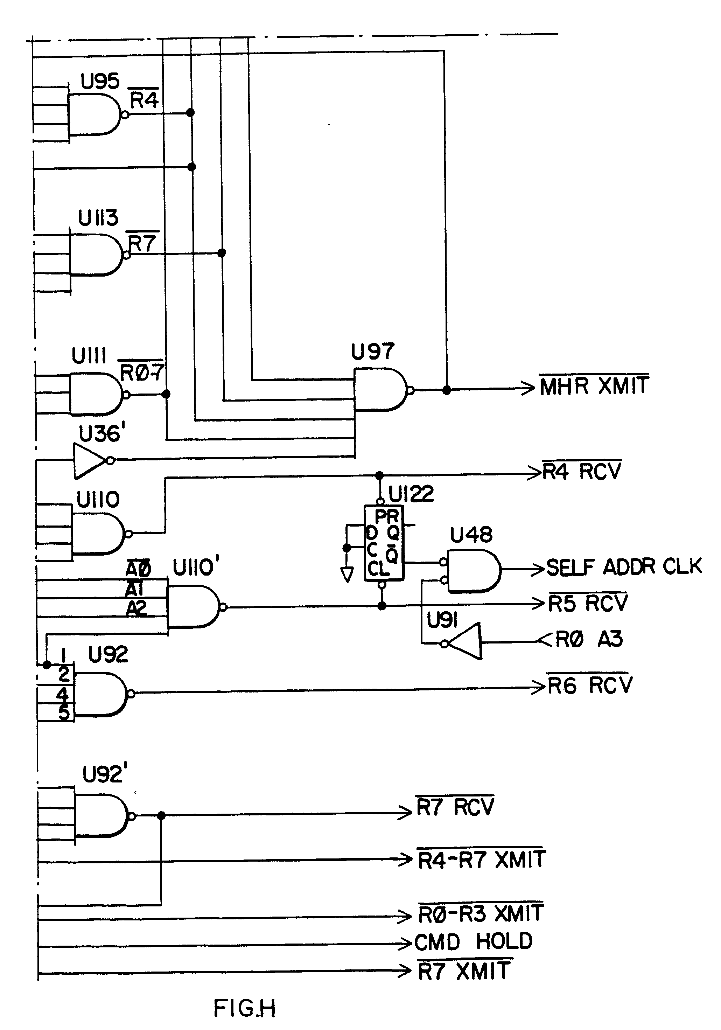

Referring now to Figure 8, there is shown a schematic diagram of state control and address decoding circuitry which may be used with a preferred embodiment of the present invention. U55 is an octal D-type edge-triggered flip-flop having tri-state outputs. Leads A0 through A7 are derived from the receive counter and more particularly device numbers U86 and U104. Leads A0 through A7 going to U100 are derived from U87 and U105 and are the XMT COUNTER. The output of inverters U71, U71' and U72' form leads A2 (bar), A0 (bar) and A1 (bar) respectively, with A0 (bar) presented as an input to NOR gate U48 and lead A2 (bar) presented to NAND gate U110 ; A1 (bar) is presented to NAND gate U92 and A0 (bar) is presented to NAND gate U92'. The word "bar" in parantheses following a symbol as used throughout the text of this application is equivalent to the symbol having a bar over it as used in the Drawings. A2, A0, A1, before their inversion at gates U71, U71'and U71", are presented as lines A0 and A1 at the input side of NAND gate U110, with A0 and A2 at the input side of NAND gate U92, and A1 and A2 to the input side of NAND gate U92'.

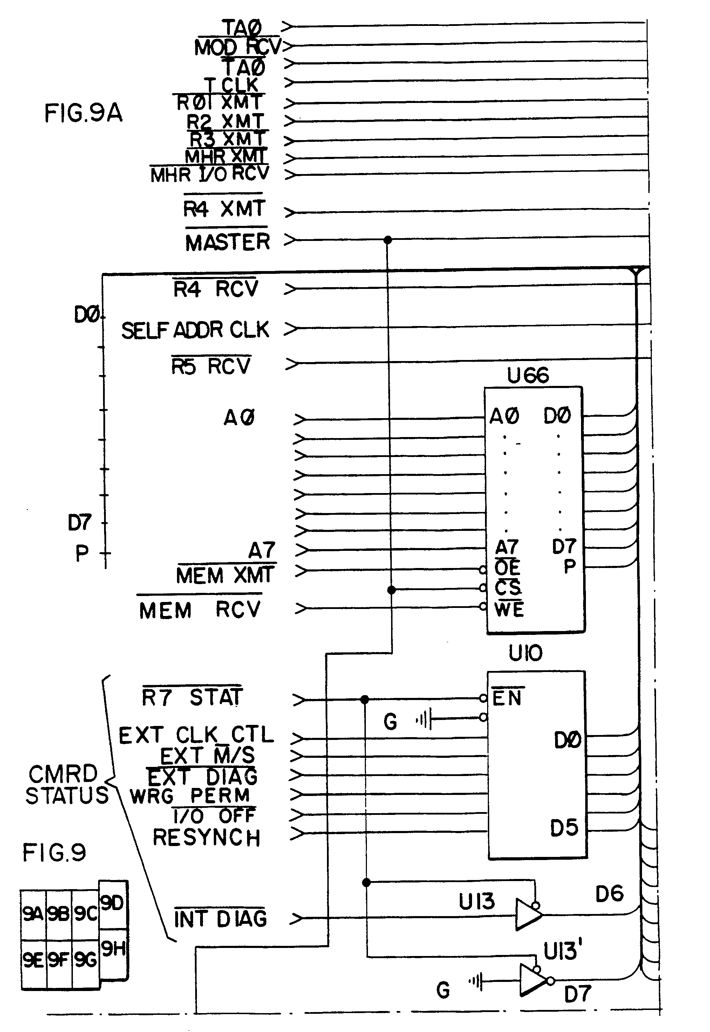

Referring now to Figures 9a through 9i, there is shown a schematic diagram of register and memory circuitry which may be used with the present invention. Transmit CLK is presented to the CLK input leads for D-type flip-flops U12 and U12' as well as to the CLK input for U26, U28, U27 and U29, all 8-bit parallel load shift registers, and thereafter to the input of inverter U57. The R01 XMT (bar) lead is presented to one of the EN leads of U4 and U5, which are hexagonal bus drivers with tri-state outputs. The MHR XMT (bar) lead is presented

9

to the tri-state lead of tri-state buffer U90 as well as to the EN OUT (bar) terminal of U88, an octal D-type edge-triggered flip-flop having tri-state outputs. U66 is a 256-by-9 random access memory (RAM) unit. Lines A0 through A7 are presented respectively to A0 through A7 inputs of RAM U66 while the MEM XMT (bar) lead is presented to the OE lead of U66. A MEM RCV (bar) lead is presented to the WRITE EN (bar) lead of U66. Lead R4 RCV (bar) is presented to the LOAD inputs of U38 and U39, binary synchronous up/down counters. U21 is an octal D-type edge-triggered flip-flop having tri-state outputs. A R7 STAT (bar) lead is presented to the tri-state leads of U13 and U13'as well as to an EN (bar) lead of U10, a hexagonal bus driver having tri-state outputs. The remaining EN lead of U10 is connected to GROUND while CMRD status leads entitled EXT CLK CTRL, EXT M/S, EXT DIAG (bar), WRQ PERM, I/O OFF (bar), and RESYNC are presented to the A1 through A6 inputs of U10. Additional CMRD status lead INT DIAG (bar) is presented to the input of tri-state buffer U13. A R6 RCV (bar) is presented to the input to inverter U72 and an internal D7 lead (INT D7) which is part of the synchronization detector and is derived from the D7 output lead of U3, an 8-bit parallel output serial shift register. An internal P (bar) line which is part of the synchronization detector and is derived from the Q (bar) output lead of D-type flip-flop U37. A DEMOD LOAD lead is presented as an input to NAND gate U73 while a DEMOD XMT (bar) is presented to the EN OUT (bar) lead of U20, an octal D-type edge-triggered flip-flop having tri-state outputs as well as to the EN (bar) lead of U54 and as an input to inverter U57'. A demodulated data lead (DEMOD DATA) is presented to the NAND gate inputs of U93, an 8-bit parallel out serial shift register. A MOD PARITY lead is presented to the P inputs of U28 and U29. Data lines D0 through D7 are connected in a data bus fashion as outputs D0 through D7 respectively of U66, U20 (octal D-type edge-triggered flip-flop having tri-state outputs), U23 (an octal buffer and line driver having tri-state outputs), and U88. Additionally, the outputs of tri-state buffer drivers U13 and U13'are connected to D6 and D7 respectively on the bus while a parity lead which is part of the data bus is derived from the parity lead or ninth bit type of output from U66, U54, U5, U7 and U9 as well as the output from tri-state buffer driver U90. Additionally, the data bus D0 through D7 is connected to one terminal of an equivalent number of resistors in resistor packs U132 and U139 with data leads D0 through D7 being presented respectively as input to U121, U24, U88, U26 and U27. The remaining terminals of the resistor packs are all tied to +V2.The carry output terminal of U39 is connected to CLK input terminal of U38 and the EN OUT (bar) terminal of U21 is connected to GROUND. Output leads D0 through D3 of U39 are presented as input leads D0 through D3 for U23 and the P input leads for U22, an 8-bit identity comparator. Output leads D4 through D7 of U38 are connected as input leads D4 through D7 of U23 as well as input leads D4 through D7 for the remaining P inputs of U22. Output leads D0 through D7 of U21 are connected as inputs D0 through D7 respectively for the Q input portion of U22. The EN lead of U22 is connected to the R7 RCV while the output, Q terminal of U22, is designated as the CMRD ADDR (bar) line.

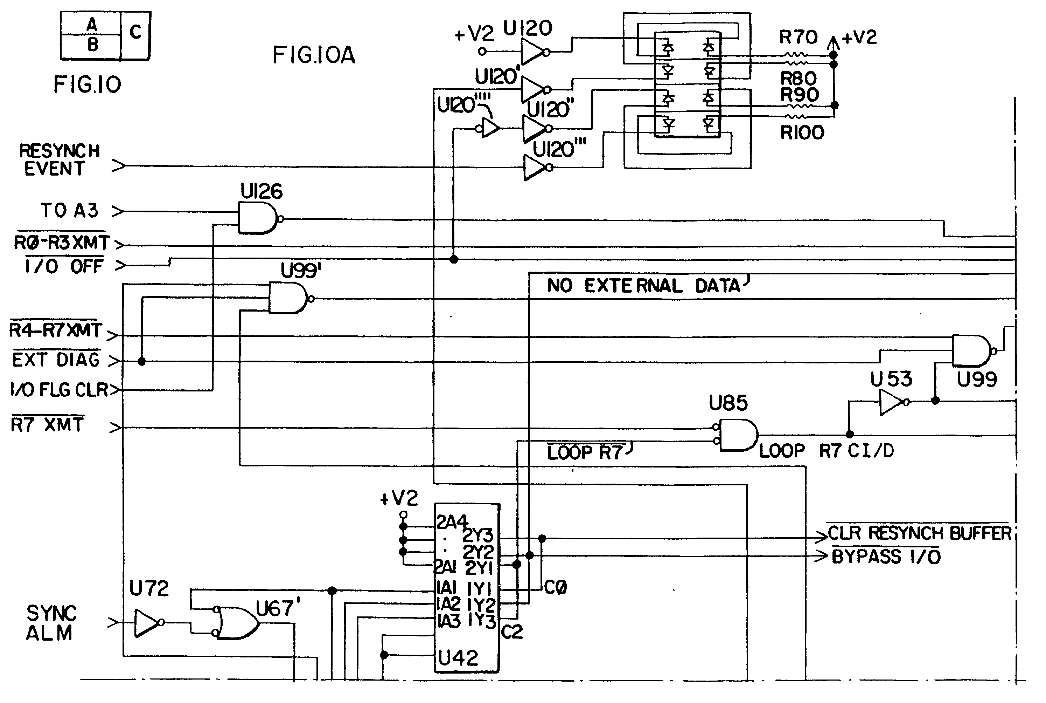

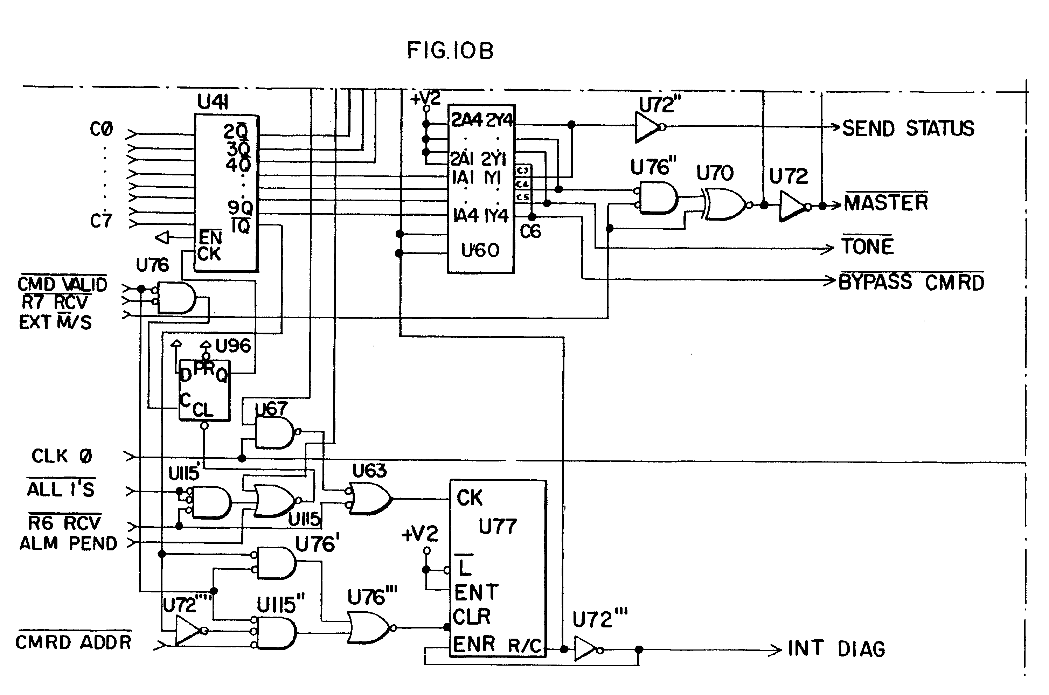

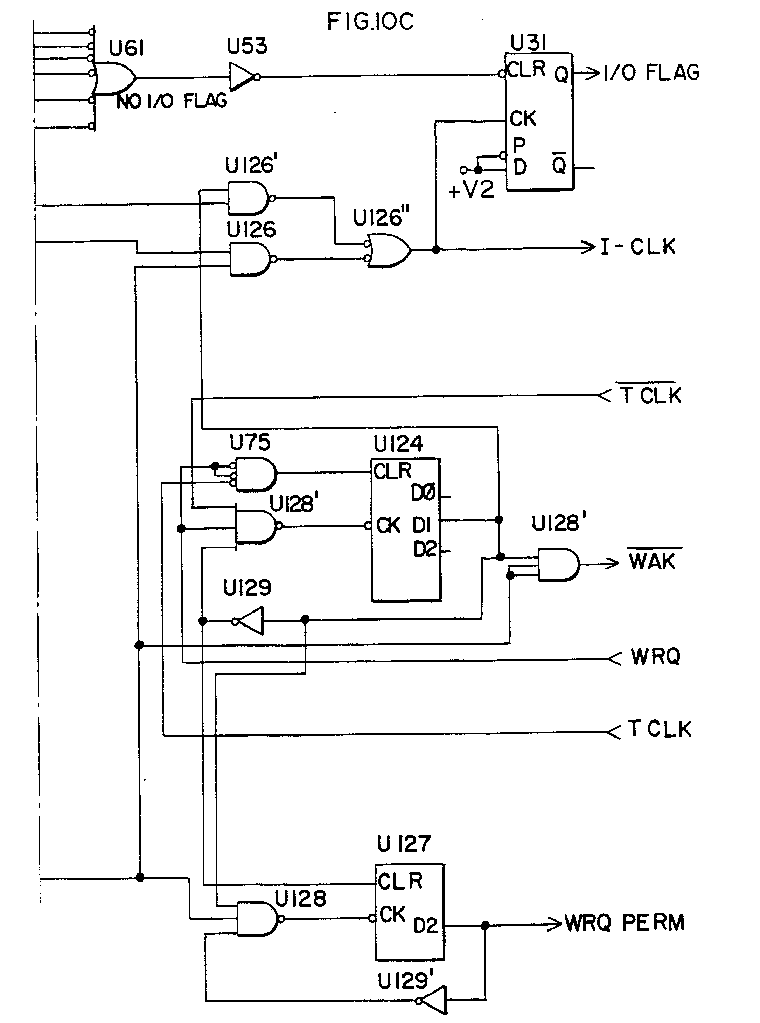

Referring now to Figure 10, there is shown a schematic diagram of input and output control circuitry of the multiplex device of a preferred embodiment of the present invention. The output of inverter U120 is connected to the cathode of the first input diode of opto-isolator DS201. The anode for the first input diode of DS201 is connected to the cathode of the first output diode. The anodes of all of the output diodes from DS201 are tied through resistors R70, R80, R90 and R100 respectively with the output terminals of resistors R70, R80, R90 and R100 being tied together and thereafter to +V2. The output of inverter U120' is connected to the cathode of a second diode of DS201 with the anode of the second input diode being connected to the cathode of the second output diode. Similarly, the output of inverter U120" and U120'''are connected to the input cathodes of the third and fourth input diodes of DS201 with the anodes of the third and fourth input diodes of DS201 being connected to the cathodes of the output diodes respectively of DS201. The output of NOR gate U76'''is presented to the CLR input of U77, a synchronous 4-bit binary counter. The EN lead of U42 and U60, both line drivers, are tied to each other and thereafter to the R/C terminal of U77 and as an input to inverter U72'''.

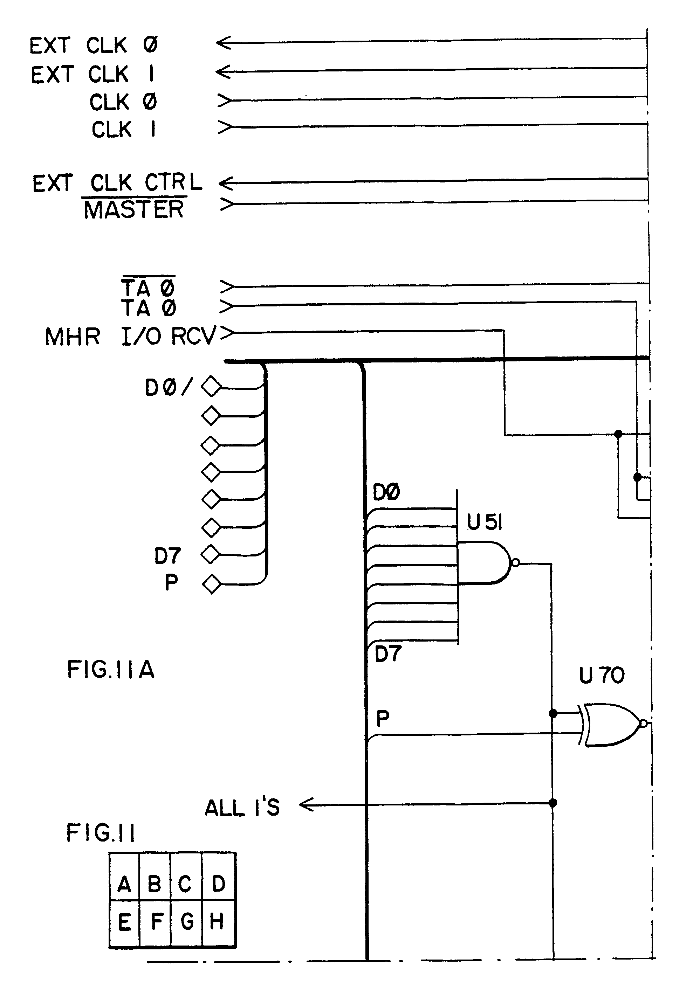

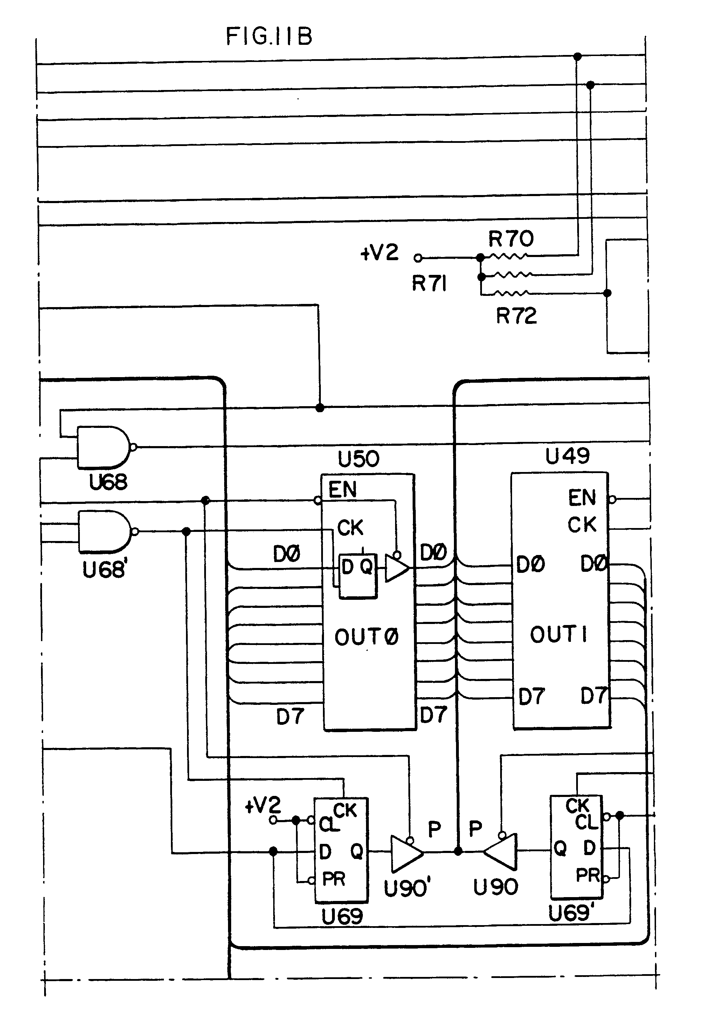

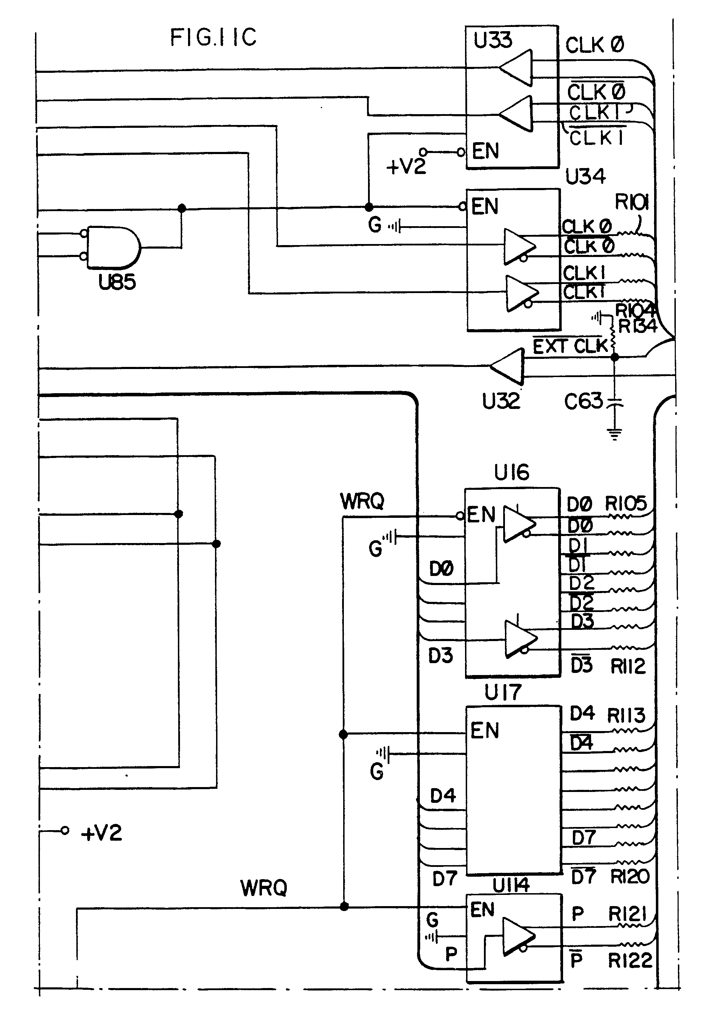

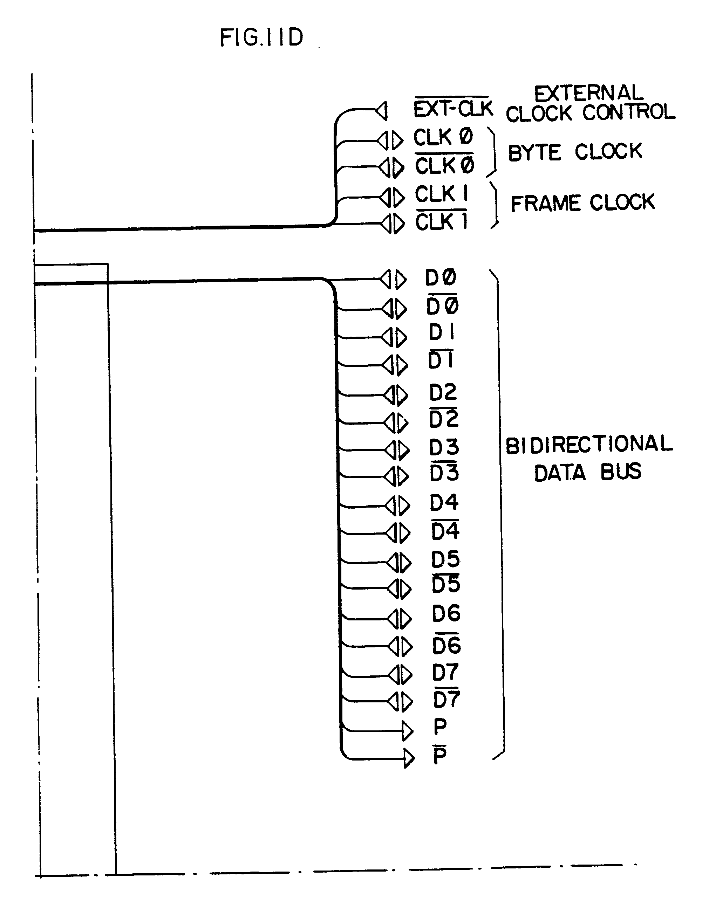

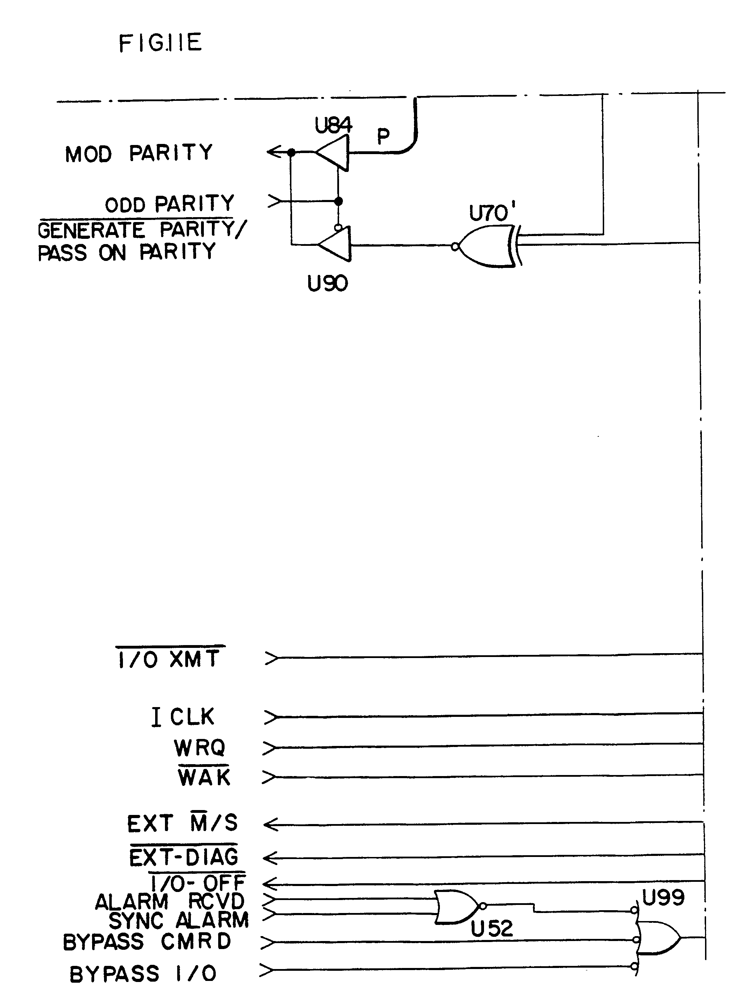

Referring now to Figure 11, there is shown a schematic diagram of input and output buffer circuitry which may be used with the present invention. The EXT CLK0 lead is connected to one terminal of resistor pack U131 and the output of the first unit of U33, a differential line receiver transmitter. The output of the second device in U33 is connected to one terminal of the second resistor in resistor pack U131 and is designated EXT CLK1. The CLK0 lead is connected to an input in the first device of U34 which is a differential line driver. The second line driver in U34 has its input connected to the CLK1 lead. U32 is a differential line transceiver. The input latch disable input buffer TA0 (bar) is connected to one input of NAND gate U68 and to the EN lead of U49, a tri-stateable flip-flop and to the tri-state lead of U90, a buffer. A transmit byte counter for A0 entitled TA0 is connected to one input of NAND gate U68' and to the EN lead of U50, another tri-stateable flip-flop. A terminal or lead entitled load data bus into output latch, MHR I/O RCV, is connected to the remaining input of NAND gate U68 and U68'. Data bus leads D0 through D7 are connected as input to NAND gate U51, and to the input leads of U49 and U50, the output or Q leads from U19, a D-type edge-triggered flip-flop having tri-state outputs, and also to the inputs of U35, an odd/even parity generator. A parity bit for the data bus is connected to an input of exclusive OR gate U70 and to the input of tri-state buffer U126. An ALL ONE's lead is connected to the input

EP 0 230 116 B1

of exclusive OR gate U70 and U70′ as well as to the output of NAND gate U51. A lead entitled I/O XMT (bar) is connected to the EN lead of U19, a D-type edge-triggered flip-flop having tri-state outputs. A lead I-CLK is connected to the CLK input of U19. A WRQ line is connected to one terminal of the fourth resistor of resistor pack U131 and also to the EN line of U14, U16 and U17 which are differential line drivers, as well as to the second output device of U32 which is a differential line transceiver. A WAK (bar) is connected to the input of the second device of U2 which is a differential line driver. The EXT M(bar)/S lead is connected to one terminal of the fifth resistor in resistor pack U131 and thereafter to the output of the first device in U1, a differential line transceiver. A EXT DIAG (bar) is connected to the first terminal of the sixth resistor in resistor pack U131 and to the output of the second evice in U1. A I/O OFF (bar) lead is connected to the first terminal of the seventh resistor in resistor pack U131 as well as to the output of the third device in U1. A BYPASS CMRD lead is connected to an input of NAND gate U99 and a BYPASS I/O lead is also connected to the NAND gate U99. The outputs U49 and U50 are designated D0 through D7 and are tied together in a bus fashion with the outputs of buffers U90 and U90′ being tied together and being designated P for parity. These outputs D0 through D7 and PARITY are connected to U16, U17 and U14 with D0 through D3 going to four inputs respectively for the four line drivers in U16, while D4 through D7 similarly are connected to the line drivers in U17 while the parity bit is connected to the input of the line driver in U14. The EN leads of U16, U17 and U14 are tied to GROUND. The D input leads for U19 entitled D0 through D7 are each connected to one terminal of eight resistors in resistor pack U130 with the remaining terminals for each resistor in resistor pack U130 being tied together and thereafter to +V2. Additionally, input leads D0 through D3 are connected to the outputs respectively for four devices in U15, a differential line transceiver, and D4 through D7 from U19 being connected to the output respectively of the four devices in U18, another differential line transceiver. The EN leads of U15, U18 and U32 are tied to each other and thereafter to +V2 while the EN leads of U15, U18 and U32 are connected to GROUND. Each device in U16 and U17 has two outputs with one being the complement of the other. All of these outputs, which number 16, are connected through resistors R105 through R120 respectively, with the remaining terminals for resistors R105 through R120 being designated D0, D0, D1, D1 through D7, D7 so as to form a bus. Similarly, the two outputs from the device in U14 which deal with parity are passed through resistors R121 and R122 with the remaining terminals of the resistors being designated P and P. Together D0, D0 through D7, D7, and P, P appear as leads on the bidirectional data bus with the same designations. Similarly, for U15 and U18 which are differential line transceivers each having four devices, the first input for the first device in U15 is entitled D0 and connects to the positive terminal of the first device while D0 connects to the remaining terminal of the first device in U15 such that lines D0, D0 through D3, D3 are presented as inputs to U15 while D4, D4 through D7, D7 are presented to U18 thereby also forming leads for the bidirectional data bus. A CLK0 and CLK0 lead are connected to the two inputs for the first device in U33 while CLK1 and CLK1 are connected as inputs to the second device in U33 which form a bus and are presented as byte clock and frame clock leads entitled CLK0, CLK0, and CLK1, CLK1 respectively.

Additionally, the output leads of U34 are entitled CLK0, CLK0 and CLK1, CLK1 and are each connected to one terminal of resistors R101 through R101 respectively with the output terminals of R101 and R104 forming part of the previously clock bus having byte clock and frame clock elements. The positive input terminal for U32 is designated EXT CLK (bar) which is connected to one terminal of resistor R134 and of capacitor C63. The remaining terminal of resistor R134 and capacitor C63 are connected to +V2 and GROUND respectively. The remaining input terminal for U32 is connected to the non-positive input for the first two devices in U1 as well as to one terminal of capacitor C62 and resistors R132 and R133 and is designated VB. The remaining terminals of capacitors C62 and R133 are connected to GROUND while the remaining terminal of resistor R132 is connected to +V2. The plus and non-positive input leads for U32′ are designated WRQ (bar) and WRQ respectively and form two of four data read-write control leads and are connected to one terminal of resistors R123 and R124 respectively. The remaining terminals of resistors R123 and R124 are connected to +V2. The plus input leads for the first two devices in U1 are designated M(bar)/S and EXT DIAG (bar) and permit or designate MASTER/SLAVE control and diagnostic register access with the M/S lead connected to one terminal of resistor R125 and capacitor C61. The remaining terminal of capacitor C61 is tied to GROUND while the remaining terminal of resistor R125 is tied to +V2. The EXT DIAG (bar) lead is tied to one terminal of resistor R126 with the remaining terminal of resistor R126 tied to +V2. The third device in U1 has an I/O OFF lead connected to the non-positive input while a lead entitled I/O OFF (bar) is tied to the positive input with each lead being tied to R127 and R128 respectively and designated I/O OFF and I/O OFF (bar) which are used as leads to denote I/O power off or CMRD in repeater mode The remaining terminals of resistors R127 and R128 are tied to +V2. The inverting output terminal of the first device in U2 is connected to one terminal of resistor R129 while the inverting and non-inverting output terminals respectively for the second device in U2 are connected to one terminal of resistors R130 and R131 respectively. The remaining terminals of resistors R129, R130 and R131 are designated ALARM, WAK and WAK (bar). The lead entitled ALARM is designated as a frame synchronization alarm

11

while the WAK and WAK (bar) leads are part of the data read/write control logic.

It is to be understood that many variations of the previously mentioned circuitry may be accomplished without departing from the scope of the present invention.

For example, the use of positive logic in some circumstances rather than negative logic may be used. Further, custom circuitry, which may eliminate the need for inversions of signals and the matching of signal levels, may be used which also accomplishes a greater minimization of circuitry and devices.

## IV : CMRD FEATURES AND CIRCUIT OPERATION

As mentioned previously, the CMRD's are connected in a serial fashion (as shown in Figures 2 and 4k) with one master CMRD and a plurality of slave CMRD's. Accordingly, in order for ease in understanding the present invention, a general configuration as exemplified in Figures 2 and 4k will be assumed with the serial bit stream transmit and receive portion (IV-A) discussed firstly, followed by I/O port and cable configuration (IV-B) ; master and slave data transfer (IV-C) ; diagnostics and system management (IV-D) ; and finally detailed circuit operation (IV-E).

## IV-A : SERIAL BIT STREAM TRANSMIT AND RECEIVE

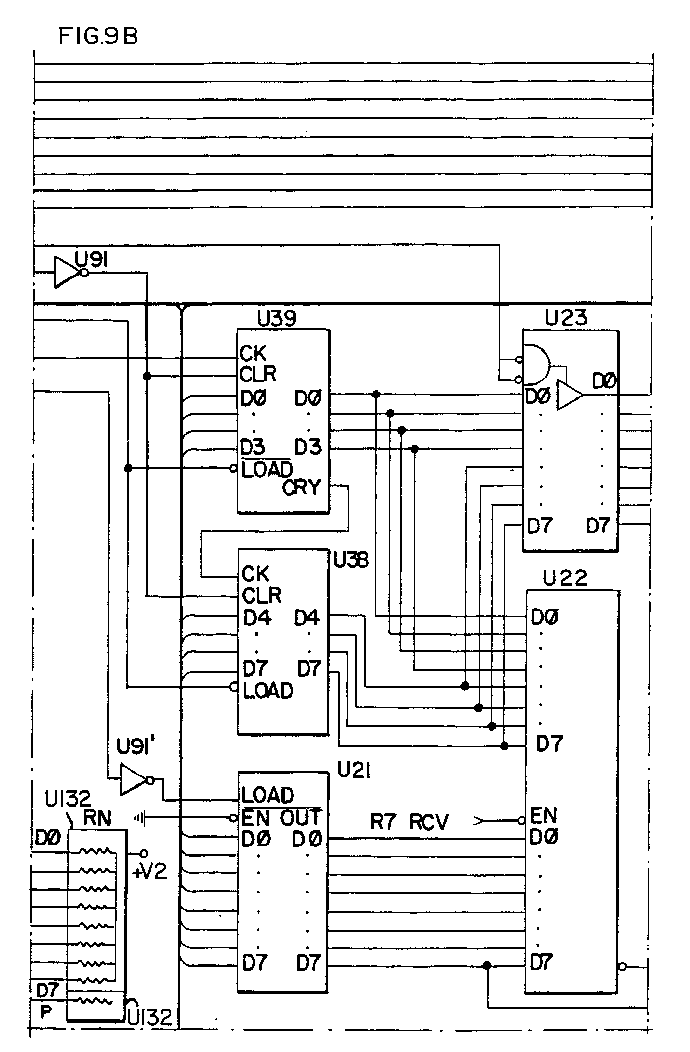

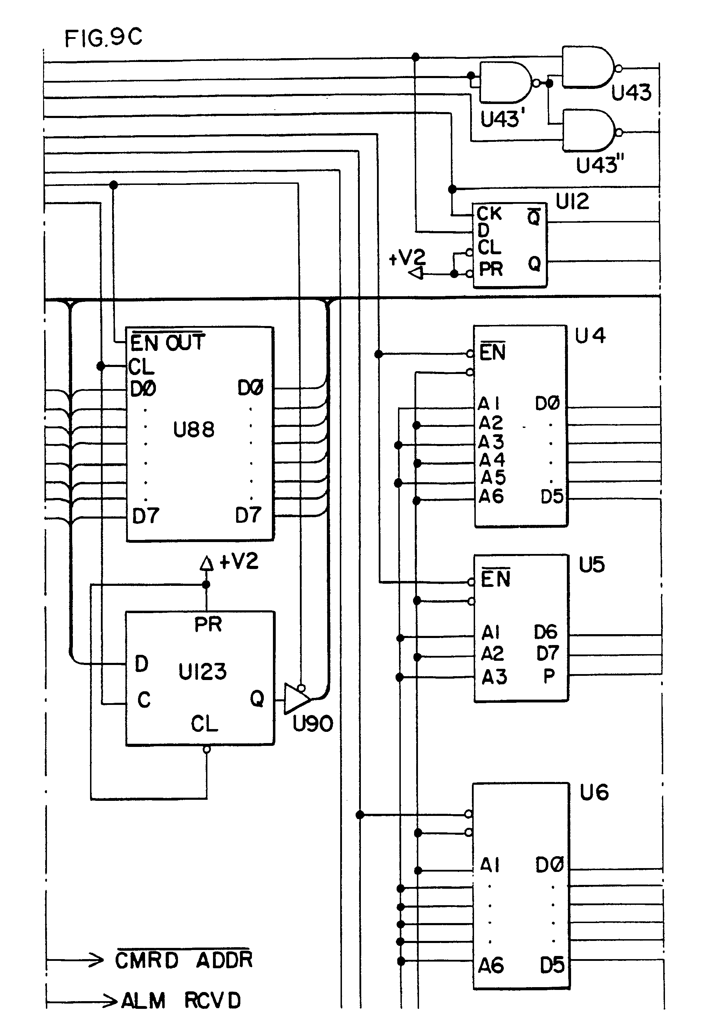

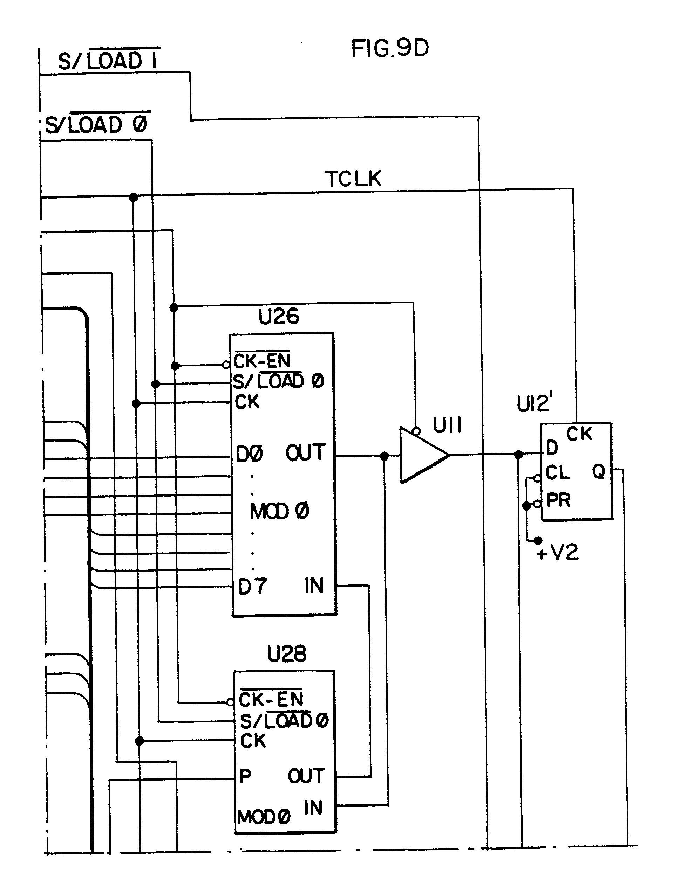

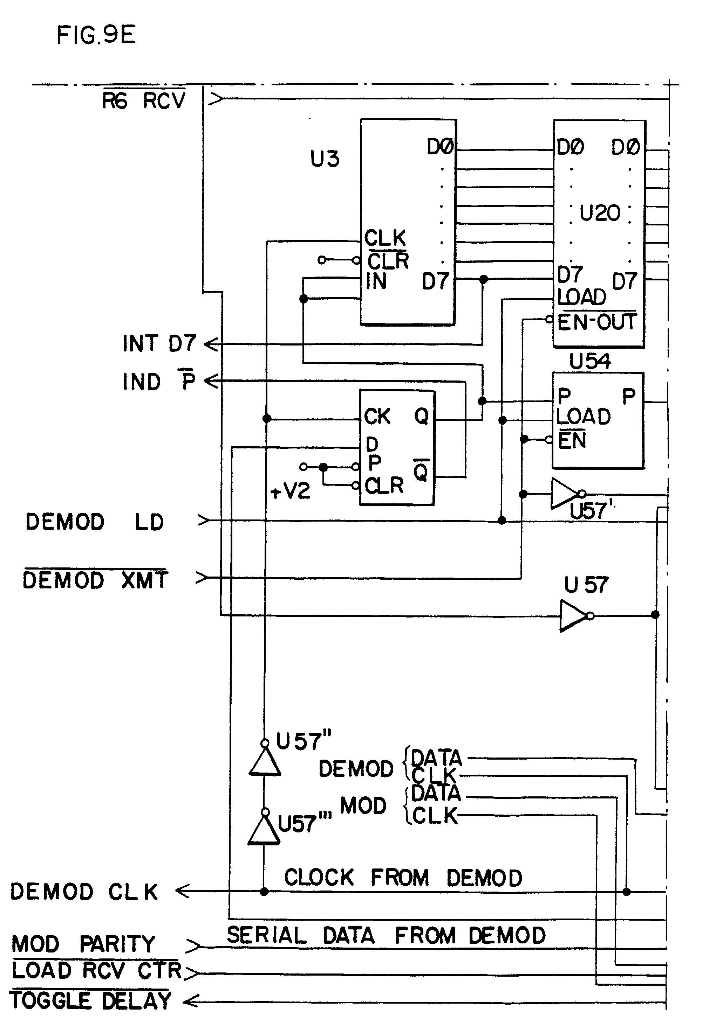

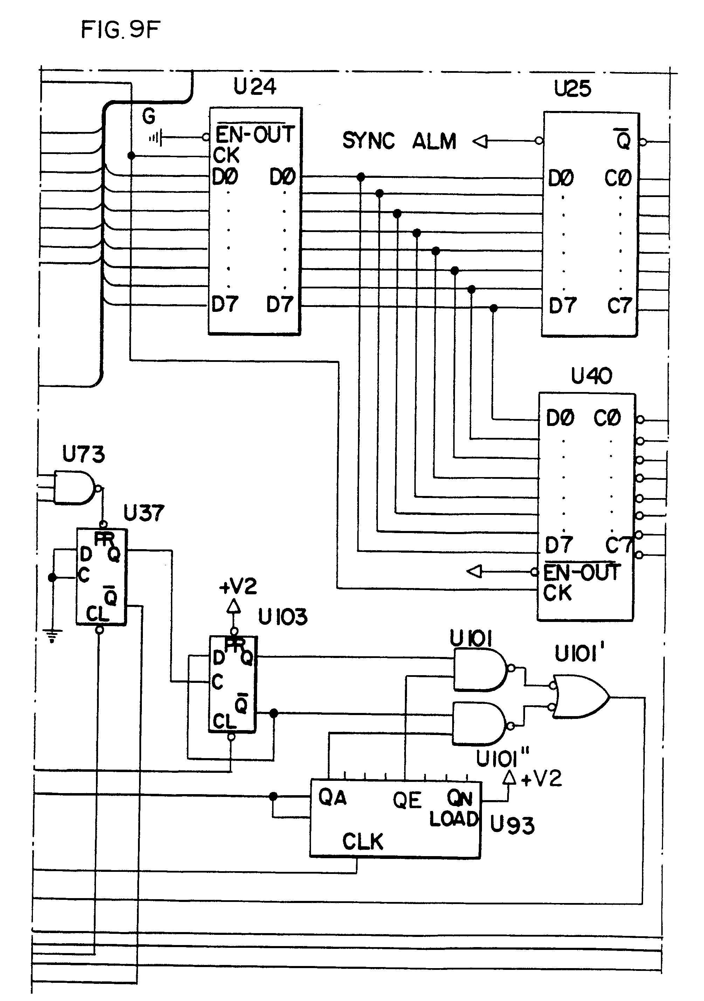

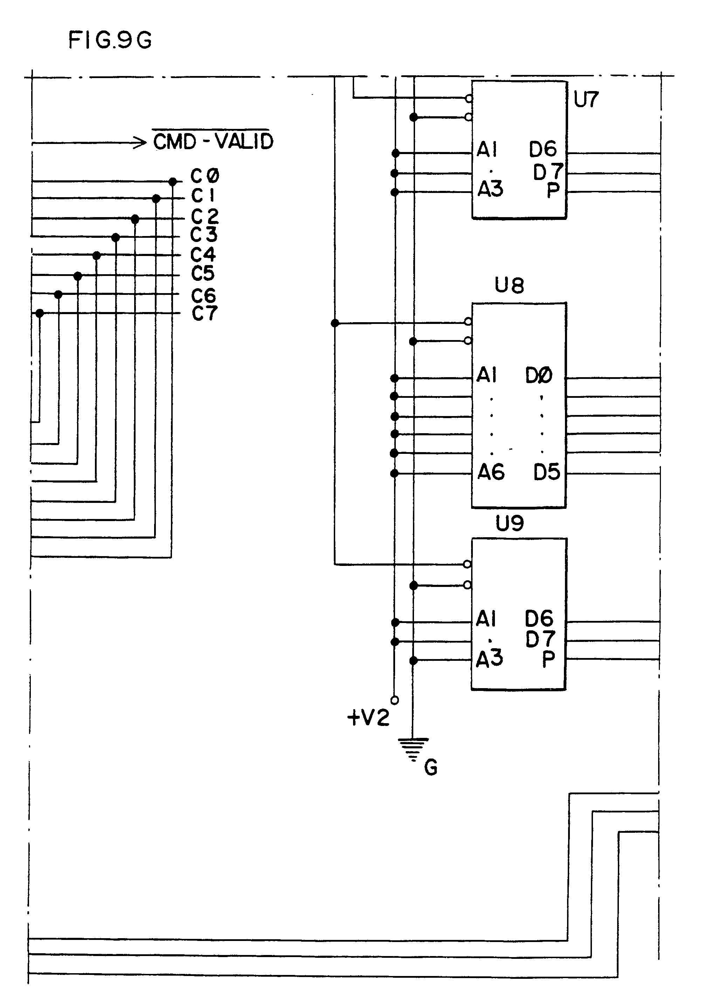

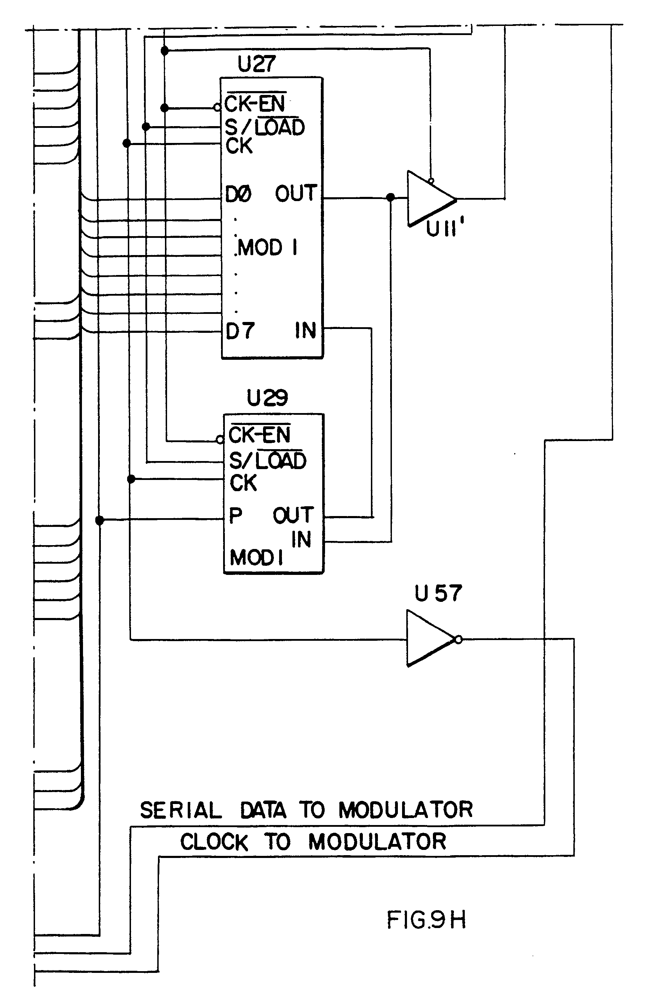

Referring now to the Figures and in particular to Figures 5 and 6, reception and transmission of the serial bit stream on the fiber 24 will be discussed. Accordingly, a fiber which is terminated with a suitable connector is received by photodiode PD1 which is thereafter brought to the proper gain levels through the use of automatic gain controls U13 and U14. Thereafter through use of the high speed comparator U15 a demodulated data signal is extracted, while through the use of the tank circuitry centering around Q8, Q10 and L3 in conjunction with the phase locked loop U17, a demodulated clock signal is extracted. In the preferred embodiment of the present invention, the data rate is 18.432 megabits per second while the distance between CMRD's is generally dictated by the type of optical fiber used and the detectors or emitters PD1 and E1 respectively. Accordingly, the demodulated clock line DEMOD CLK and the demodulated data line DEMOD DATA are submitted to a CMRD at J2 (Figure 9) to the DEMOD CLK and DATA pins respectively. Thereafter, a serial bit stream emanates from a CMRD at J2 via a modulated data and clock line which is then presented to the modulated data and clock lines respectively for the fiber optic transmitter circuitry (Figure 5). The fiber optic transmit circuitry through the use of tank circuitry via Q1, Q2 and L1 in conjunction with flip-flops U2 and U3 are used to modulate emitter E1. The modulated light from E1 is thereafter presented to the fiber optic cable 24 where the process of receive and transmit is performed in an identical manner at other CMRD's.

## IV-B : I/O PORT AND CABLE INTERFACE

As mentioned previously, each CMRD has an I/O port for communication with peripheral devices as well as providing a means for diagnostic and status control for each CMRD (Figure 4k). This interface with peripheral devices is where parallel data communication is exchanged with peripheral devices (such as secondary interface devices 36 via a secondary signal medium 44 and eventually to a tertiary signal medium 46 to various external devices 40, 42 as shown in Figures 1b and 1c). These signals and lines which are used for communication and control are found in Table 1 – Bidirectional Data Bus which follows.

## TABLE 1 -- BIDIRECTIONAL DATA BUS

FUNCTION

BIDIRECTIONAL DATA LEADS

D0
D0 (bar)
D1
D1 (bar)
D2
D2 (bar)
D3
D3 (bar)          (BIDIRECTIONAL DATA)
D4
D4 (bar)
D5
D5 (bar)
D6
D6 (bar)
D7
D7 (bar)
P                 (PARITY)
P (bar)

DATA READ/WRITE CONTROL LEADS
WRQ               (WRITE REQUEST)
WRQ (bar)

WAK               (WRITE ACKNOWLEDGE)
WAK (bar)

## TABLE I -- BIDIRECTIONAL DATA BUS (Cont'd)

BIDIRECTIONAL CLOCK LEADS
CLK0              (BYTE CLOCK)
CLK0 (bar)

CLK1              (FRAME CLOCK)
CLK1 (bar)

EXT-CLK           (CLOCK INPUT/OUTPUT)

GENERAL CONTROL LEADS
M/S               (MASTER SLAVE)

EXT-DIAG          (DIAGNOSTIC REGISTER ACCESS)

I/O OFF           (CMRD IN REPEATER MODE
I/O OFF (bar)     I/O POWER OFF)

ALARM             (FRAME SYNCHRONIZATION OF
                  I/O DISABLE)

| 5VDC | (5 VOLT MONITORING POINT) |
| GROUND | (POWER INPUT AND SIGNAL RETURN GROUND) |
| SUPPLY | |

The signals presented at this interface point are in two categories, dynamic and static. The dynamic signals are supplied via two conductors each to allow a balanced transmission line (e.g., D0, D0 (bar)). The static signal leads are signal conductors (e.g., GROUND and SUPPLY).

The serial bit stream from the fiber optic link (previously discussed) is preferably accumulated into groups of nine bits which are then presented simultaneously on the bidirectional I/O data bus (Figure 11) as bits labeled D0 through D7 and P. As previously mentioned, the P bit is an odd parity bit. Utilizing the data bits D0 through D7 in conjunction with the byte clock, CLK0, and the frame clock, CLK1, 256 bytes (nine bits wide each) can be identified. These 256 bytes are accessible every 125 microseconds in accordance with the preferred timing scheme of the CMRS as previously mentioned. Therefore, all information on the fiber optic cable 24 is made available at each and every CMRD regardless of whether it is a master or a slave. However, as mentioned previously, of the 256 bytes of information, only the first 248 (byte 0 through byte 247) contain data that is readily available for use by a peripheral device 36, that is, information may be inserted or extracted.

The remaining eight bytes in a preferred scheme are synchronization and diagnostic bytes utilized by the ring system, and would generally not be used by a peripheral device 36. According to the present invention, the time slots allocated to these bytes are used for communication between devices connected to a single node without utilizing the ring itself or affecting the capacity or timing of the TDM ring communication. Further, one or more of these bytes, such as byte 252 (R4), may be accessed and incremented up or down by some predetermined amount by each CMRD slave (and set to zero or some other selected value by the CMRD master), thereby providing a dynamic address CMRD count.

The actual use of the data (bytes 0-247) by a peripheral device 36 is dependent upon the software/firmware/hardware of peripheral devices 36. That is, for example, actual signaling that a message intended for a particular device has been received on the ring and made available on the parallel bus, or that certain bytes are or are not available for use, is determined by appropriate design of peripheral devices. Accordingly, the CMRS merely "facilitates communication" without setting up a particular external hierarchy or protocol scheme. The bidirectional data bus is preferably akin to a RS-422 bus using RS-422 type drivers and receivers. However it is to be understood that other types of schemes can and may be utilized without departing from the scope of the present invention.

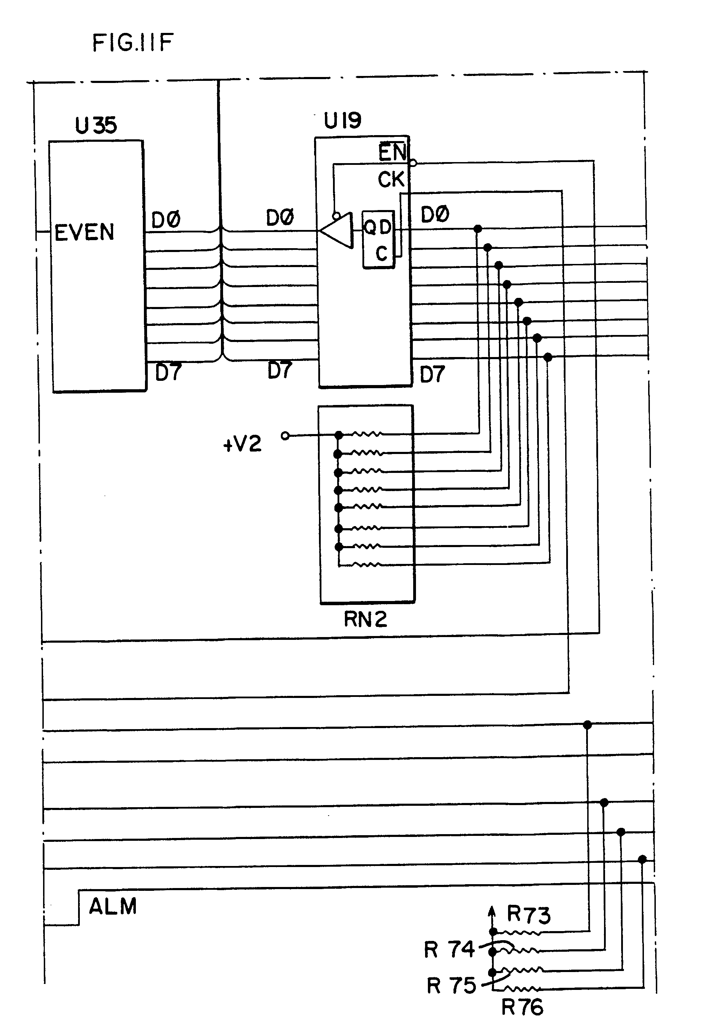

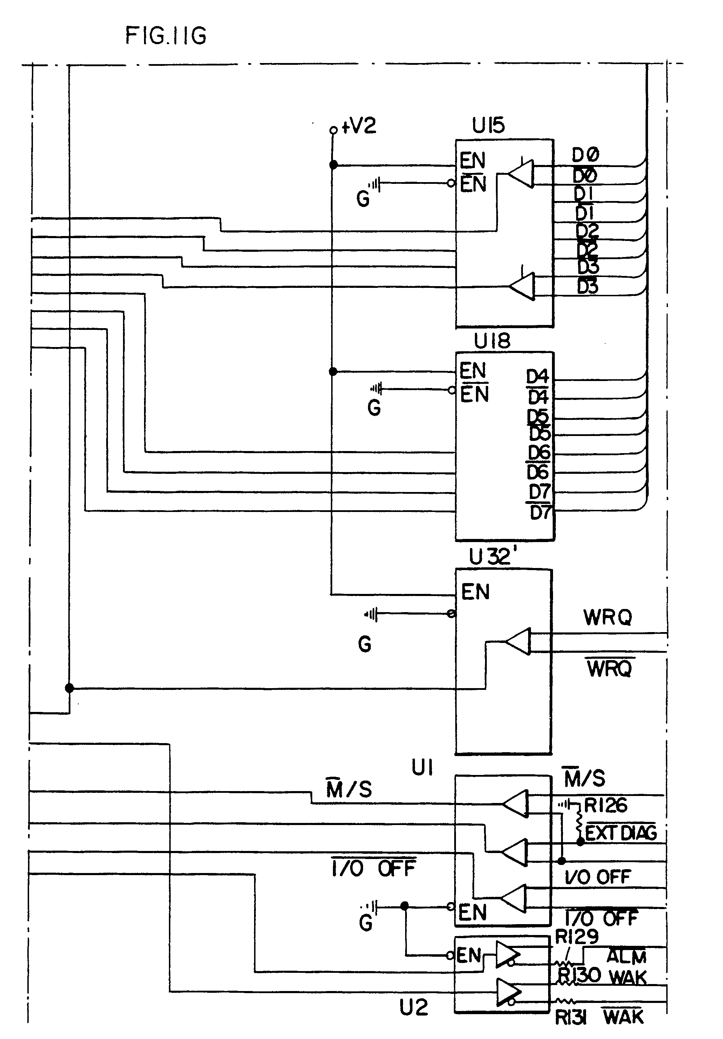

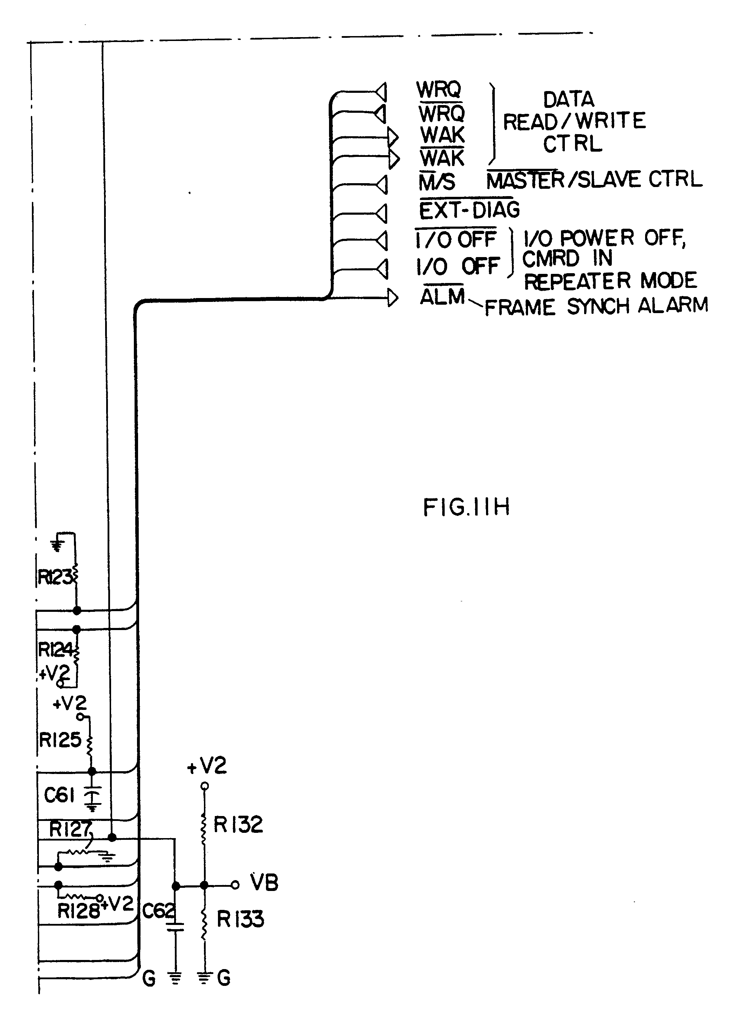

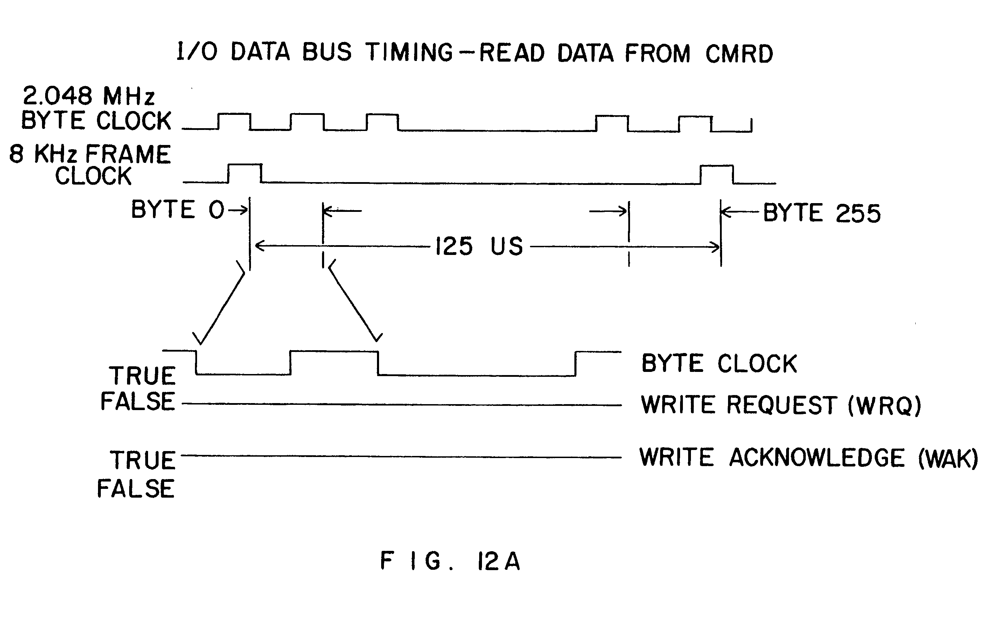

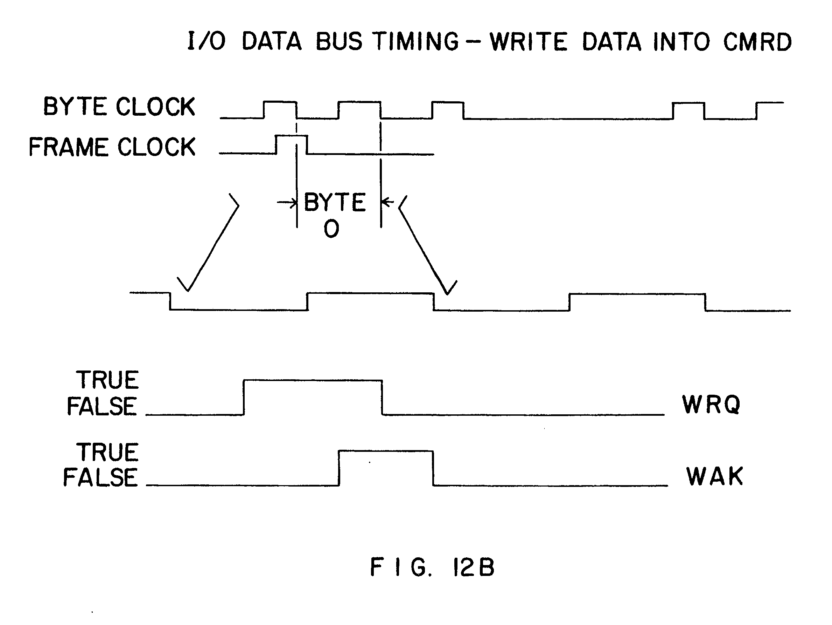

In order to understand how to change information on the peripheral data bus it is appropriate to discuss the various control and clock leads. Accordingly, the write request lead WRQ is as mentioned a dynamic signal, and basically tells the CMRD to accept data on the peripheral data bus. The data on the peripheral data bus is in the form of an 8 bit byte with the ninth bit used for parity. However, the parity bit is not designated by the peripheral but only by the CMRD. The WRQ must be made true during the first half of the byte clock period (Figure 12b) or up to 100 nanoseconds after the rising edge at the center of a byte clock cycle. At all other times the peripherals driver of the WRQ should be in a tri-state mode when not in use.

The write acknowledge WAK signal is also dynamic and is transmitted by the CMRD and signifies that the data put onto the I/O bus has been accepted and stored by the CMRD. The WAK signal is a pulse which is up to one half of the byte clock cycle and will continue until a WRQ signal is no longer true. In the event that there is more than one device attached to the peripheral device 36, then proper safeguards such as software or hardware should be used to ensure that not more than one device attempts to write data onto the bus while either the WAK or the WRQ are true. Otherwise to allow such an attempt would in effect allow one device to write over the data of another while still in the same FRAME byte.

The byte clock (CLK0) is a 2048 MHZ clock signal which is supplied by each CMRD to its peripheral device 36. However, in the event that the CMRD is a master CMRD and the EXT-CLK lead is true (set to low), then CLK0 must be supplied from outside the master CMRD. This may be desirable when the CMRS is to be operated in conjunction with another system or the like.

The FRAME clock (CLK1) is an 8 KHz synchronization pulse supplied by the CMRD and is used to identify a time slot or byte 0. Similar to CLK0, if the CMRD is a master CMRD and the EXT-CLK lead is true (set to low), then CLK1 must be supplied from outside the master CMRD and may again be desirable when the CMRS is to be operated in conjunction with another system or the like.

The MASTER/SLAVE control (M/S) is a static signal to the CMRD and if left open or pulled up to supply voltage +V2 allows the CMRD to operate as a slave. As mentioned previously, only one CMRD in a CMRS may be designated as the master. When the M/S is grounded the CMRD will act as a master and therefore provide system timing and a synchronization bit pattern (described more fully below). Additionally, if a CMRD is in the master mode, then an external clock signal may be utilized to provide system timing.

The external diagnostic input signal (EXT DIAG) is a static lead and when grounded allows access to normally write protected bytes (bytes 248-255), although in effect only byte slots 252-255 are accessible since bytes 248-251 are synchronization while bytes 252-255 are status and control.

The I/O OFF lead is a dynamic control input lead and is used for several purposes. One purpose is for static monitoring to determine if there are peripheral devices attached to the CMRD. If there are no peripheral devices than the CMRD will perform ring repeater type functions and power down the I/O drivers and receivers.

A second purpose in conjunction with the present invention is to allow communication between a plurality of peripheral devices which are attached to the same CMRD I/O port. This would be accomplished by making the I/O lead go to the off mode thereby tri-stating the transmit part of the data bus drivers on the CMRD, thereby prohibiting the transfer of data into the CMRD ring. This facilitates the transfer of data in the byte slots which are write protected (bytes 248-255) and also provides the capability of transferring data in locally unused byte slots.

The ALARM lead is essentially a data invalid signal lead and facilitates the CMRD transmitting an alarm condition when a CMRD receiver (50, 52, 54, 56) is not synchronized to the incoming serial bit stream. It should be pointed out that the ALARM lead only becomes true for the CMRD to which it is associated with. Therefore, if there is a downstream problem, any upstream CMRD will not be in an alarm condition since each CMRD slave is independent of each other. Further, the CMRD master will correct synchronization problems in problem frames as they pass through it (described more fully below). An alarm condition would exist however if an upstream CMRD passed on an error when a synchronization problem exists. Further, an alarm condition will also be generated when an internal diagnostic process (described more fully below) prevents data from being accepted on all time slots during an I/O bypass mode or the CMRD is in a fiber-optic bypass mode (the fiber optic bypass mode would be utilized to physically bypass a CMRD either through an alarm condition or as a result of an instruction such as a test isolation feature during a diagnostic routine).

Accordingly, no data may be entered into the CMRD serial bit stream when an alarm condition exists.

The +5VDC and Ground/Supply leads provide a convenient mechanism of supplying and receiving power both to the CMRD and to a peripheral device where practicable.

Should a peripheral device 36 desire to read data from the data bus, all that is required is the proper timing as shown if Figure 12a be followed. However, should a peripheral device 36 desire to change data, then the proper timing as shown in Figure 12b should be followed. This requires that the write request (WRQ) line be made true followed by the peripheral device 36 putting data onto the bus. After the end of the byte clock cycle following the WRQ, the WAK (which is generated by the CMRD) becomes true. The leading edge of the WRQ may happen anywhere in time during the first half of the byte clock or up to 100 nanoseconds after the rising edge at the center of the byte clock. The WRQ must remain true until the WAK signal is transmitted by the CMRD and in fact the WRQ may be removed as soon as WAK becomes true. The leading edge of the WRQ indicates that the data has been entered into the CMRD input buffer. The WAK is ended by removal of the WRQ or by the trailing edge of the applicable byte clock cycle. As a default, the WRQ signal may remain true until the end of the byte clock cycle thereby allowing the peripheral device to ignore the WAK signal. However, in order for a peripheral device to write into all available bytes (bytes 0-247), the WRQ line must go to the false state before it is allowed to write into the following byte slot, and thereby a steady true WRQ will be ignored. Further, if it is desired, a peripheral device 36 may initiate a WRQ, enter data onto the data bus and then read this data, thereby ensuring that the data is correct, prior to the WAK signal simply by knowing at what portion of the byte clock pulse train, the operation presently is in.

As described in greater detail in Section IV-C, below, communication between devices connected to different nodes of the present ring system is accomplished by presenting such information by means of the parallel bidirectional data bus of a first CMRD to the CMRD, which serializes the data and transmits it in one or more available data byte slots in one or more successive frames, as required. The data so transmitted in the TDM ring system is received by each subsequent node, including the desired node which extracts the data, deserializes it, and presents it via its own bidirectional data bus to the addressed peripheral. Full duplex communication is possible because the addressed peripheral may present its own data via the parallel bus to its CMRD, which then replaces the received data byte with the transmission information and transmits it serially on the ring to the calling CMRD.

Localized communication, however, presents a problem in that according to the normal communication scheme a CMRD must address itself for transmission and reception. Although such complexity could be handled by appropriate protocol, the resulting system would inherently be inefficient in utilizing the overall CMRS for highly localized communication. Thus, the present invention provides for highly localized communication between devices connected to a single CMRD, without involving the common medium ring itself. Specifically, in the preferred system described herein, eight bytes in each frame are assigned to synchronization and other housekeeping functions, including diagnostic functions. These bytes therefore do not typically contain data which is addressed to any attached peripheral, and will not typically accept data from the peripherals during normal communication. Thus, there exists a window of eight bytes during each 125 microsecond frame during which communication on the parallel bus is idle with respect to the common medium ring. The parallel bus is then isolated from the CMRD during this period, such as by means of the I/O OFF lead previously discussed. Data is then be transmitted between individual peripherals attached to the same CMIRD during this available time slot in each frame. Standard techniques known in the art may be utilized to limit use of the parallel data bus as required to prevent contention between multiple devices, and to direct the highly localized communication between connected devices during the available idle byte time slots of each frame in synchrony with the CMRD, by means of its recovered byte and frame clocks.

In addition, during periods in which no connected device or peripheral is being addressed, or desires to transmit, on the CMRS, the system according to the present invention may similarly provide for highly localized communication during the time normally allocated to bytes 0-247 as well, in the manners previously described. When a peripheral desires, however, to transmit to a device connected to another CMRD, control of the parallel bus is returned to the local CMRD as required. In this manner, allocation of the available communication channels, both between devices connected to a single CMRD, and between devices connected to remote CMRD's, may be flexibly allocated to support communication between any pair of devices without requiring each such device to have its own CMRD in the serial ring.

## IV-C : CMRD MASTER AND SLAVE DATA TRANSFER

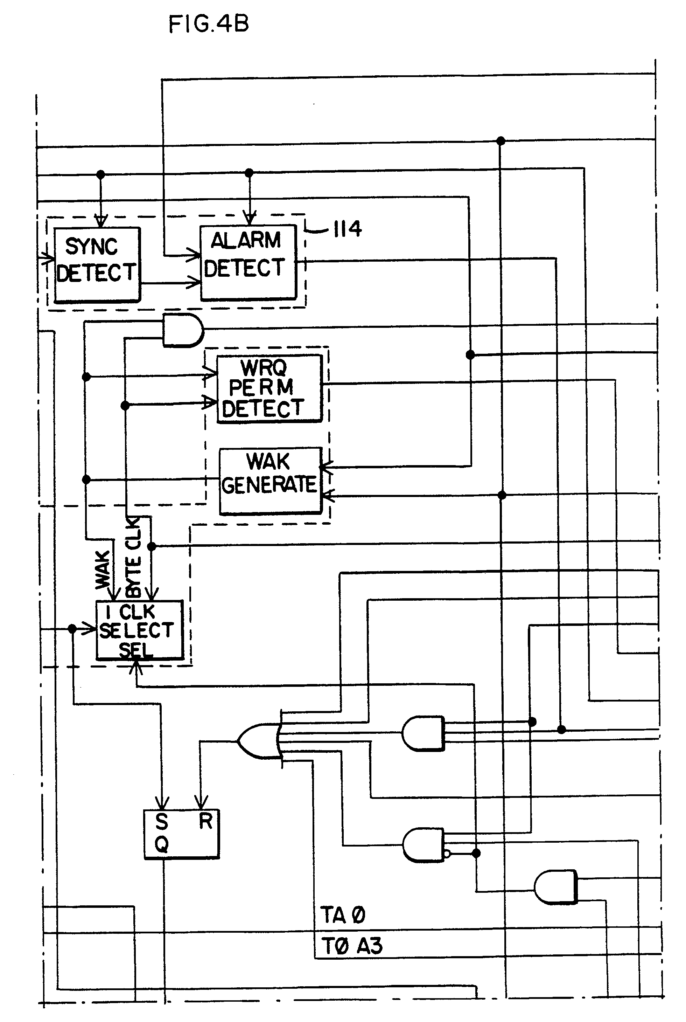

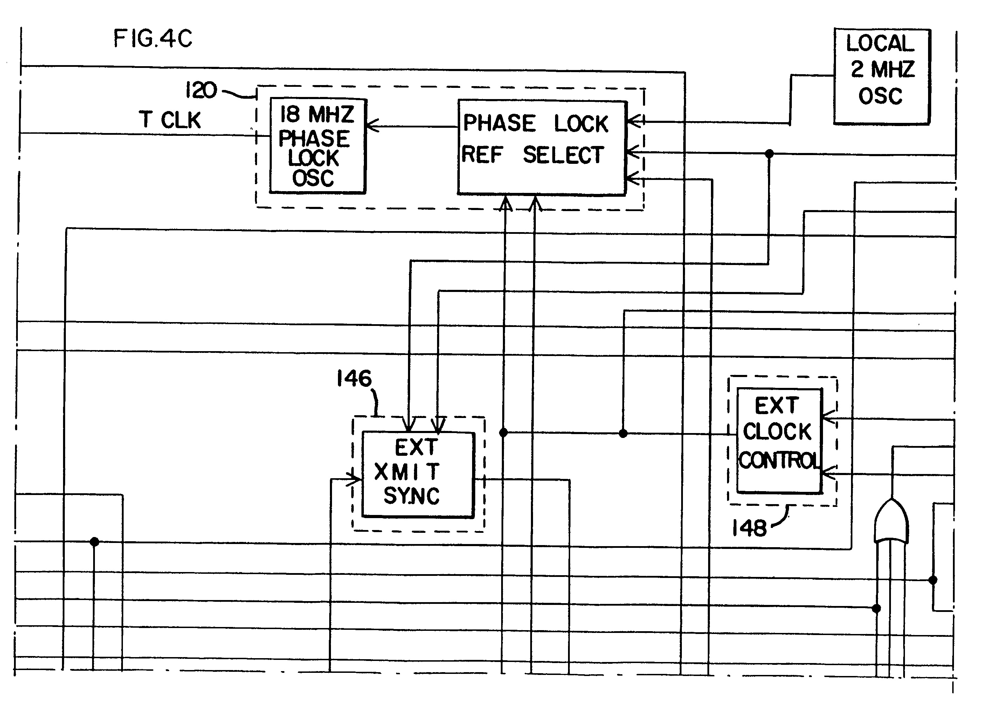

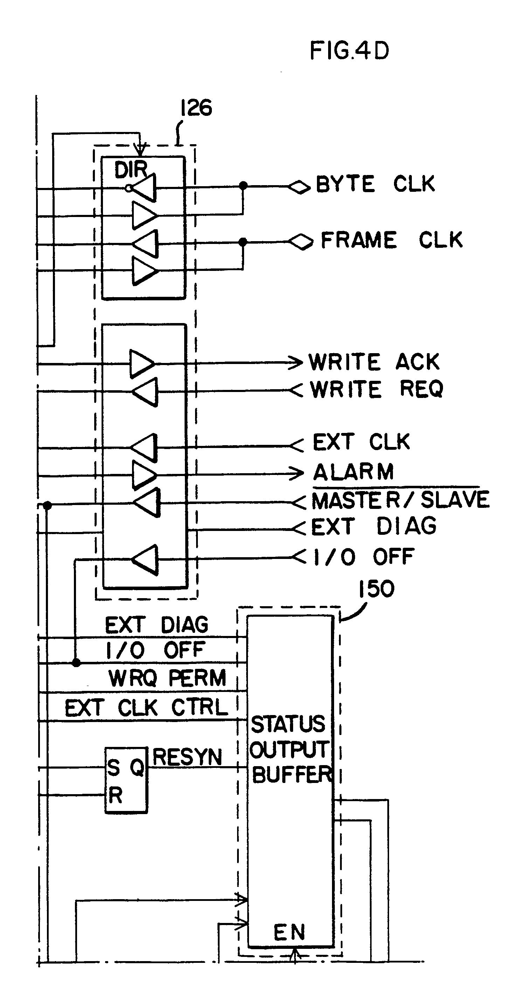

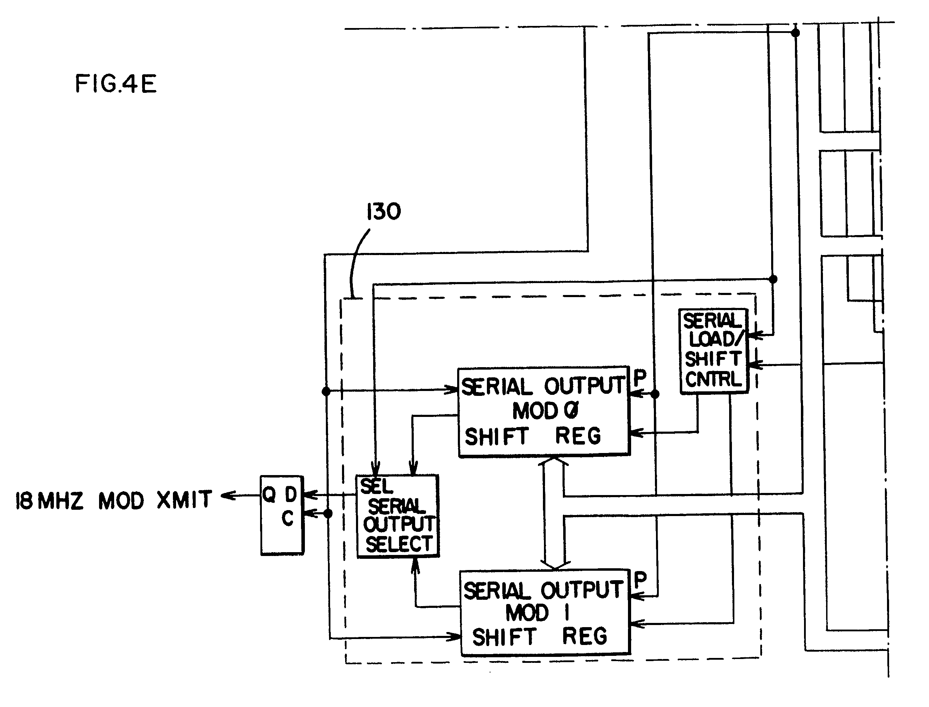

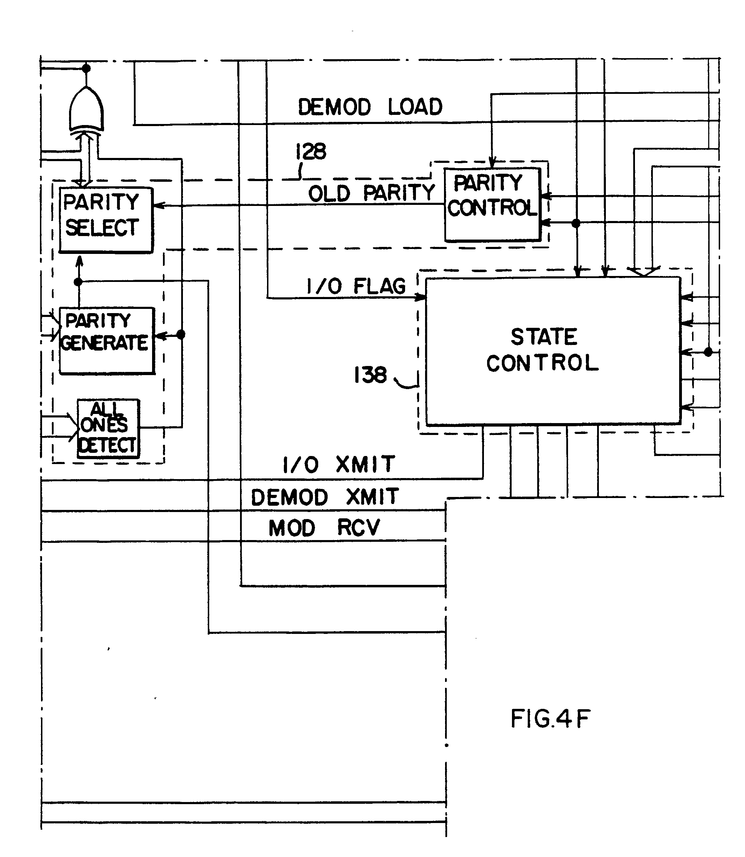

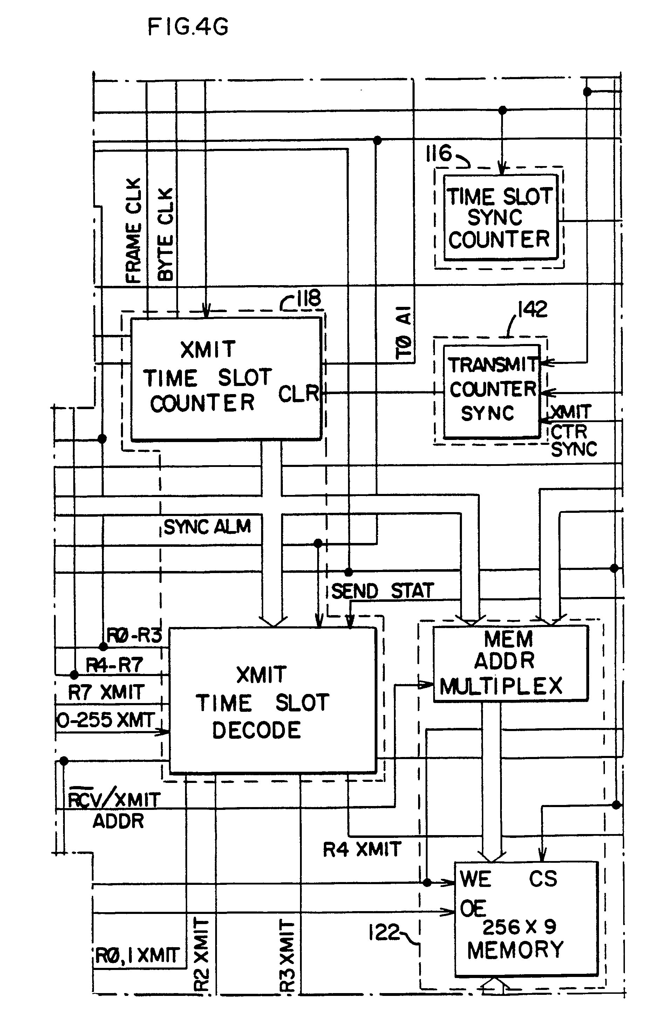

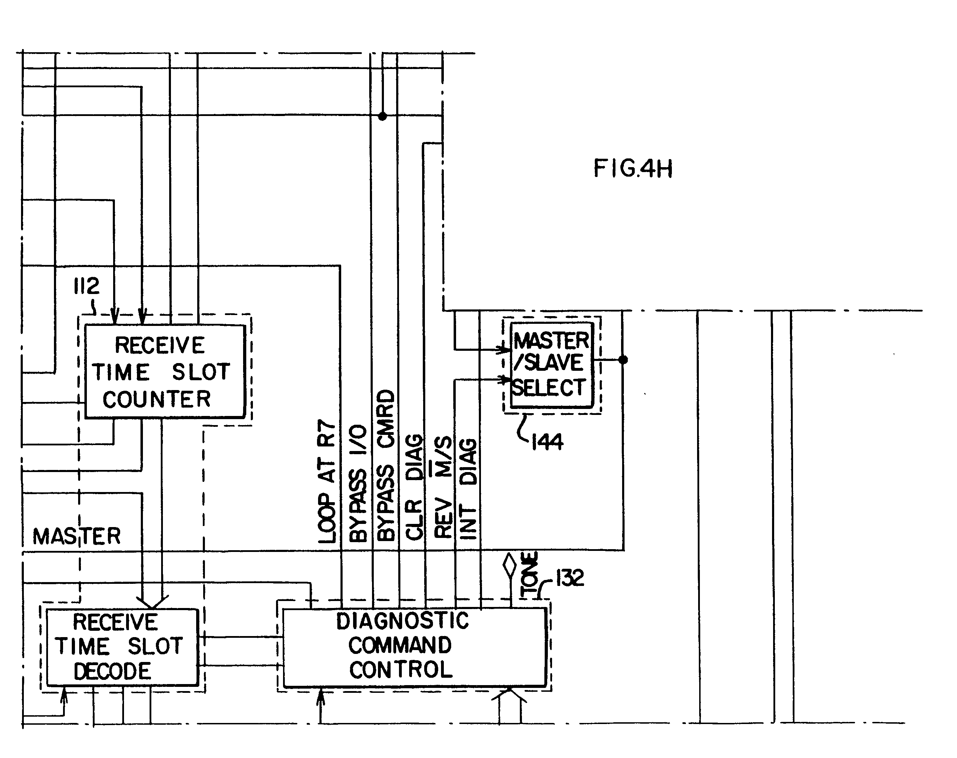

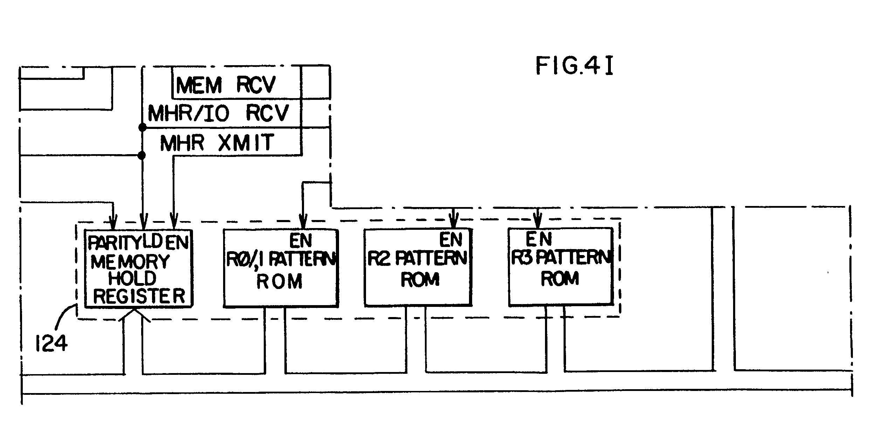

The transfer of FRAME bytes (bytes 0-255) through a CMRD master or a slave unit is substantially identical during normal operation with the only difference being the use of memory with a CMRD master unit 48. It should be noted that normally, it would not be apparent to use memory in any CMRD since information is passed through with the I/O port merely only altering data while it is passing through a CMRD. However, it has been found that memory (block 122 in Figure 4) is necessary since the timing of a FRAME is 125 microseconds. Accordingly, if the propagation delay for all master and slave CMRD's 48-52 is less than 125 microseconds, then memory is necessary to store frame bytes, with the memory contents then passed on with the next 125 microsecond time period. It has been found that it is convenient to use memory in the master CMRD 48 since the FRAME timing is controlled by a master CMRD anyway. Therefore, using the configuration of Figure 2 as an example, there would be five propagation delay times used (the master CMRD 48 and four slave CMRD's 50-56). This would mean that the master CMRD 48 would have to store 251 bytes of information in order to utilize the full 125 microseconds of frame time.

One byte period before data for a particular time slot is visible to a peripheral device on the I/O port, the previously received data in the CMRS for that time slot will be read out of memory in the memory hold register (block 124 in Figure 4) and placed into the standby parallel I/O output buffer (block 126 in Figure 4). During the time that data is visible to a user (a peripheral device) the previous data will be read out of the memory hold register (block 124 in Figure 4) and into the serial transmit buffer (block 130 in Figure 4). In the event that data is to be changed by the peripheral device at the I/O port, the changed data (bytes 0-247) is entered into the I/O input data buffer (block 126 in Figure 4) which is then loaded into a standby serial transmit buffer (block 130 in Figure 4).

Data transfer through a CMRD may take one of several paths depending upon whether a master or slave CMRD is utilized and which series of bytes are being transferred. Generally, however, one byte period before data for a particular time slot is visible to the user on an I/O(10 port, the previously received data for that time slot will be read out of the memory into the memory hold register as well as the standby parallel I/O output buffer. During the time this data is visible to the user, the previous data is read out of the memory hold register and placed into the serial transmit buffer. If new data is entered from a peripheral device into the input data buffer, the contents of this buffer would be loaded into the standby serial transmit buffer thereby overriding the previous contents so as to allow information in a time slot to be altered or transmitted as is. One byte period after the data is visible to the user, the standby serial transmit buffer becomes active and the data is sent to the medium 24. This process is basically the same for master and slave CMRD with the exception that when a slave CMRD is utilized, transfers to the memory hold register and to the standby parallel I/O buffer are made from the input serial/parallel converter instead of memory. It should be noted, however, that in the preferred embodiment of the present invention master and slave CMRD's are the same and therefore in a slave CMRD while memory is actually loaded the outputs of the slave CMRD memory are disabled.

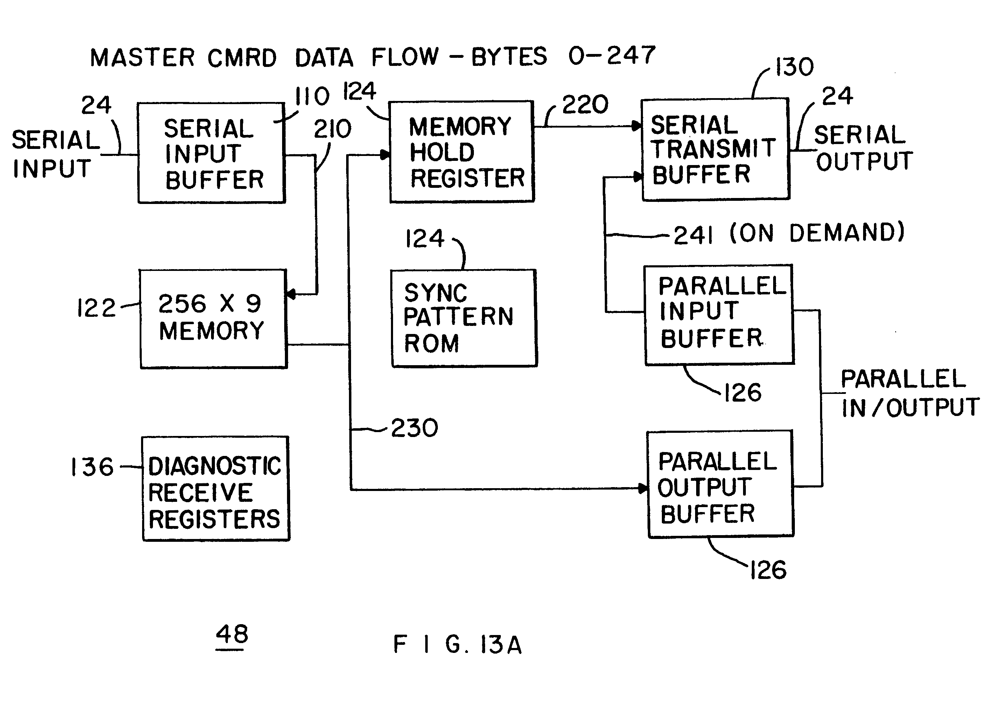

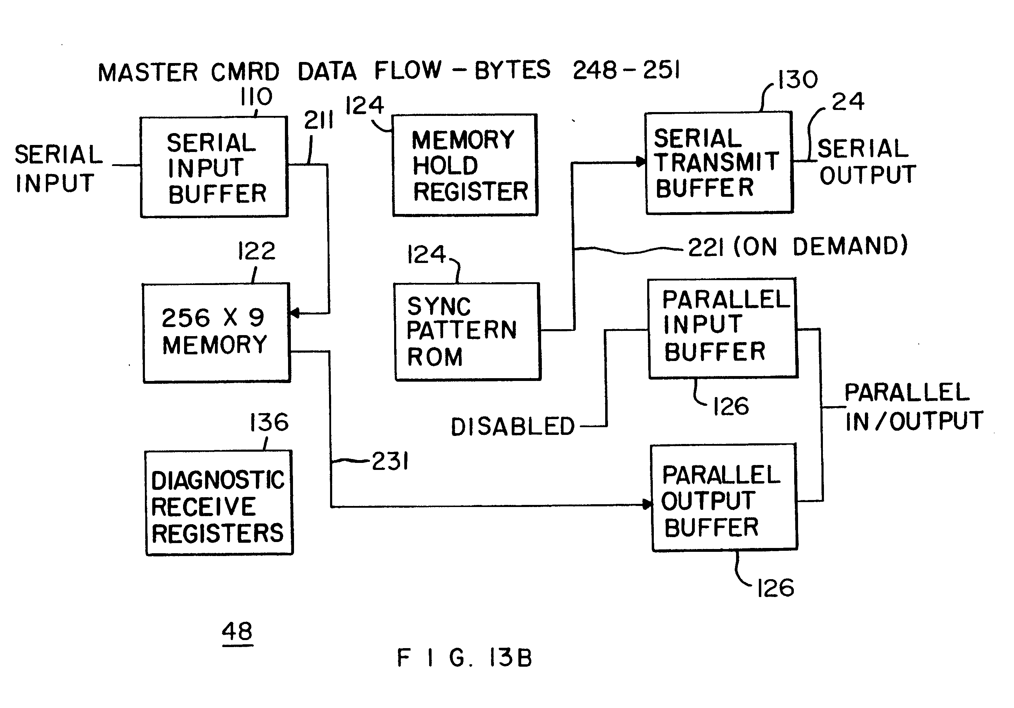

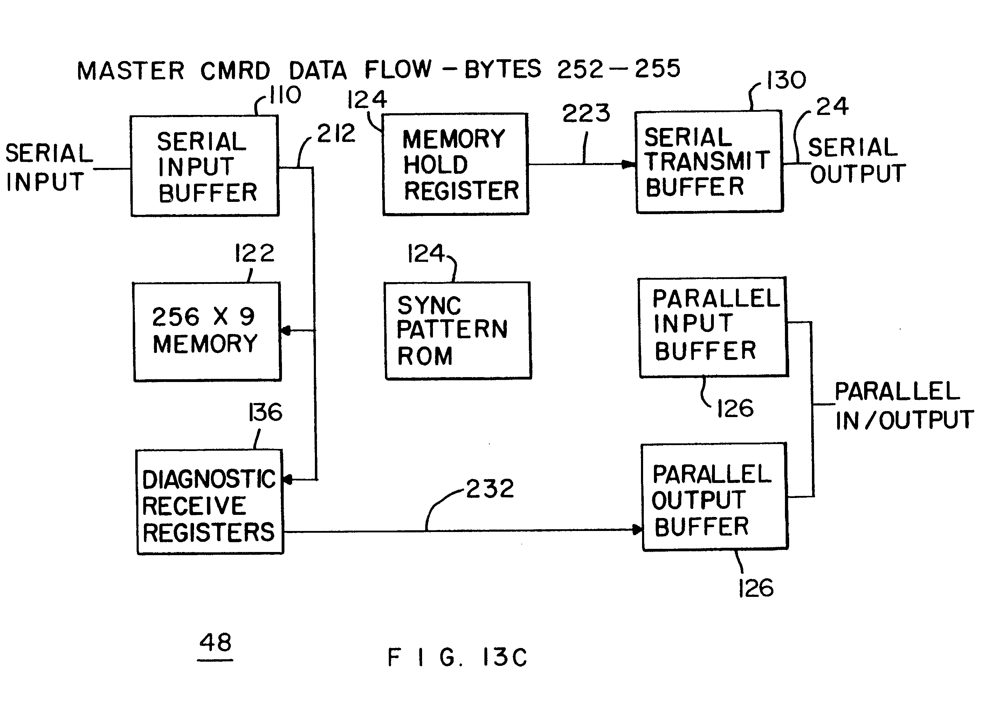

Accordingly, referring now to Figures 13-13c, data transfer for a CMRD in a master mode can be seen.

When in the master mode, all incoming data is loaded from the input delay buffer circuit (shown generally at Block 110 in Figure 4). Thereafter, previously held memory data which is disposed in the memory hold register (Block 124 in Figure 4) is loaded into the serial transmit buffer (Block 130 in Figure 4). Thereafter, memory from the 256-by-9 bit memory (Block 122 in Figure 4) is loaded into the memory hold register and the parallel output buffer (Blocks 124, 126 respectively in Figure 4). As is shown in Figure 13a, during bytes 0 through 247, information may be entered from a peripheral device and therefore would be entered into the serial transmit buffer (Block 130 in Figure 4) so as to overwrite the memory data previously entered from the memory hold register and thereafter placed onto the medium 24. Therefore, data flow for a master CMRD for bytes 0 through 247 is shifted from Block 110 to Block 122 on Line 210, Block 124 to Block 130 on Line 220, Block 122 to Blocks 124 and 126 on Line 230, and thereafter Block 126 to Block 130 on Line 241. For data flow through a master CMRD for bytes 248 through 241, information is transferred from the serial input buffer at Block 110 over Line 211 to the 256-by-9 memory, Block 122. Thereafter, if a synchronization pattern is necessary (as discussed more fully below), a synchronization pattern from the synchronization pattern ROM of Block 124 is sent over Line 221 to the serial transmit buffer, Block 130. The memory is then downloaded from Block 122 over Line 231 to the parallel output buffer which would then be available to a peripheral device under some diagnostic read conditions, but would not enable the change of any information with the result that the parallel input buffer at Block 126 is disabled. The transfer of data flow for a master CMRD for bytes 252 through 255 is performed by transferring data from Block 110, serial input buffer, over Line 212 to the memory and the diagnostic receive registers at Block 122, 136 respectively. Thereafter, the memory hold register, Block 124, would present one of the applicable bytes over Line 223 to the serial transmit buffer at Block 130. Thereafter, data from the diagnostic receive registers at Block 136 would present data over Line 232 to the parallel output buffer at Block 126 which would then be available for interrogation at the parallel I/O port.

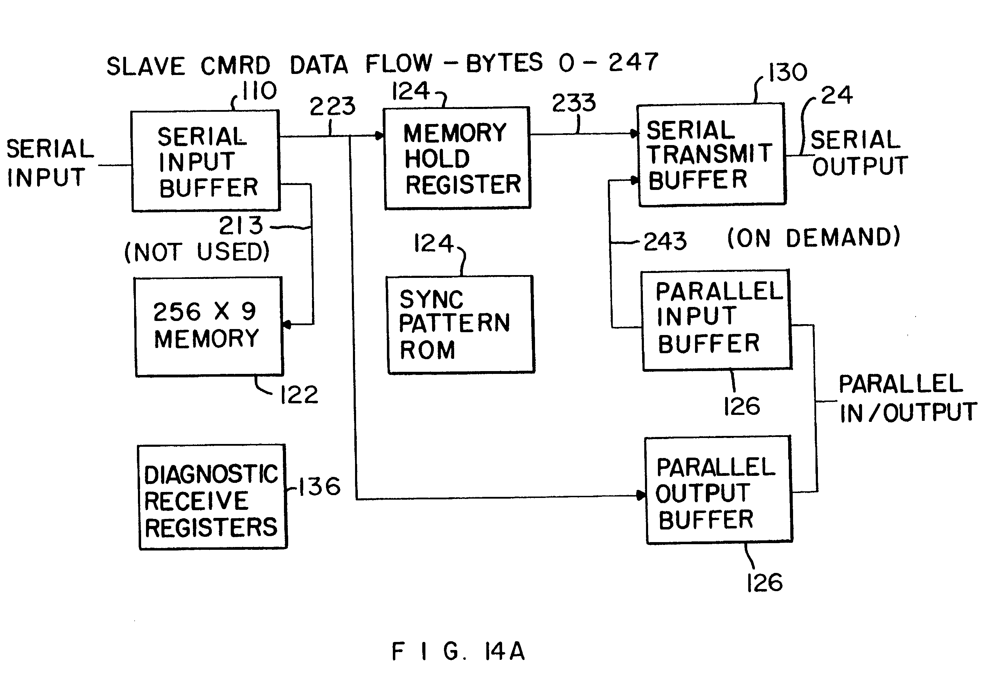

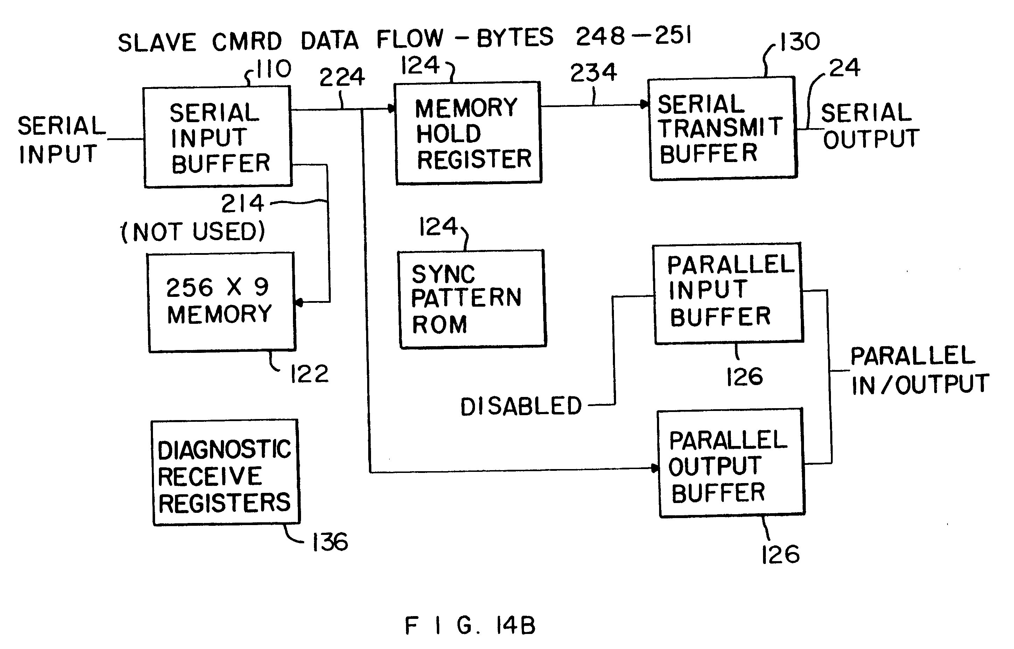

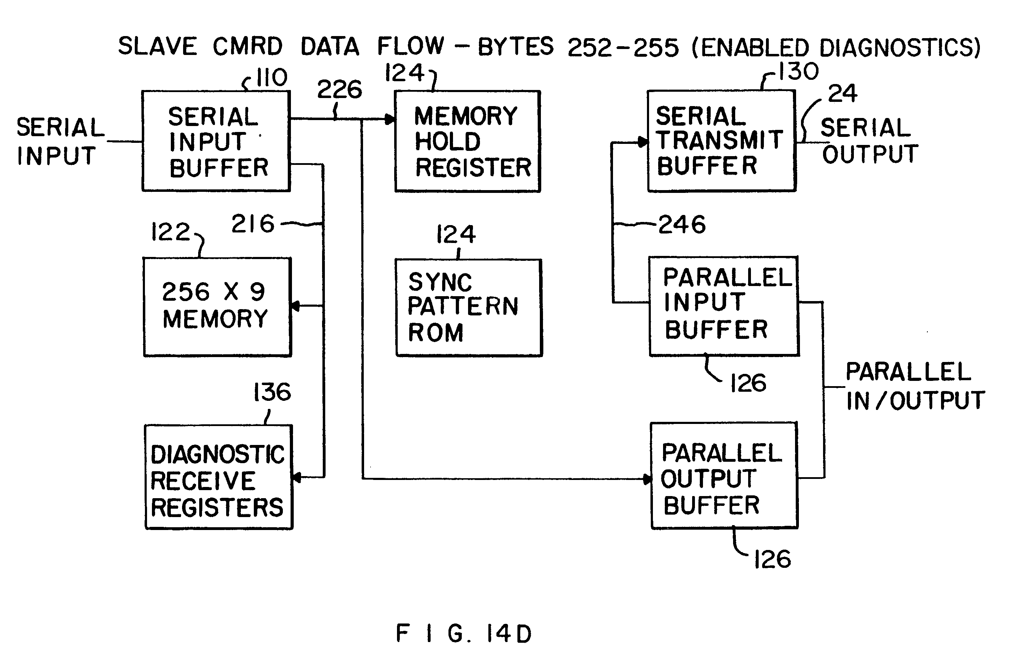

Referring now to Figures 14a through 14d, data transfer for a CMRD in the slave mode may be seen. As mentioned previously, data transfer for the slave CMRD's is very similar to the master CMRD. Therefore, in referring to Figure 14a it can be seen that data for bytes 0 through 247 would first go from the serial input buffer at Block 110 over Line 223 to the memory hold register and the parallel output buffer at Blocks 124 and 126 and also to the memory at Block 122. It should be noted that, as mentioned previously, data is physically entered into the memory from the serial input buffer over Line 213 but is never read out. Thereafter, data from the memory hold register is transferred over Line 233 to the serial transmit buffer. Data from the parallel input buffer may now be presented over Line 243 to the serial transmit buffer in the event that the peripheral device has actually changed some of the data. Entry of data over Line 243 into the serial transmit buffer would overwrite the data from memory hold register presented over Line 233.

For a slave CMRD transmitting bytes 248 through 251, data would pass over Line 224 from the serial input buffer to the memory hold registers and the parallel output buffer over Line 224. This data would, in a fashion similar to the master CMRD data flow for bytes 248 through 251, make information available at the I/O port but would not allow information to be passed through the parallel input buffer with the result that the parallel input buffer is disabled as shown. Thereafter, data from the memory hold register is transferred over Line 234 to the serial transmit buffer.

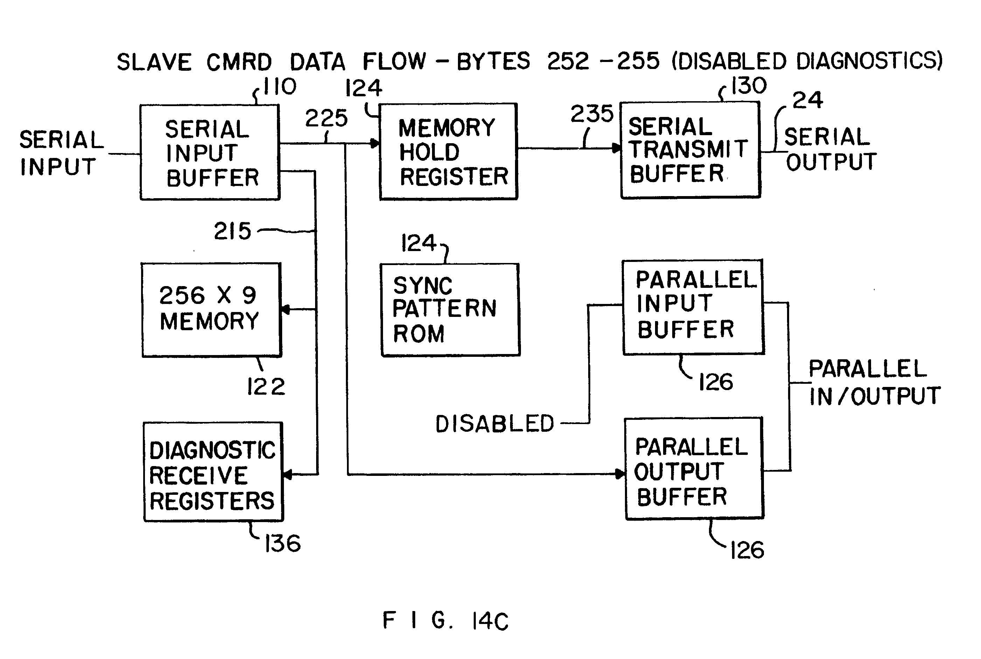

Referring now to Figure 14c, data flow for a slave CMRD for bytes 252 through 255 may be seen when the external diagnostic input (previously described) is disabled. Accordingly, data is transferred from the serial input buffer over Line 215 to the memory and the diagnostic receive registers, Blocks 122 and 136. Thereafter, data is shifted from the serial input buffer over Line 225 to the memory hold register and the parallel output buffer, Blocks 124, 126. Since the diagnostics are disabled, the parallel input buffer is disabled also with the result that data stored in the memory hold register is transferred over Line 235 to the serial transmit buffer. For data flow in a CMRD slave unit for bytes 252 through 255, where the external diagnostic input is enabled, data flow is slightly different. There, data is entered from the serial input buffer over Line 216 to the memory and the diagnostic receive register 136. Thereafter, data is also entered from the serial input buffer to the memory hold register and the parallel output buffer over Line 226. However, in this situation where the diagnostics are enabled, information can be put through the parallel input buffer (Block 126) and would flow from the parallel input buffer over Line 246 to the serial transmit buffer.

## IV-D : SYSTEM MANAGEMENT/DIAGNOSTICS

Readily seen is that the master CMRD is relatively independent of the slave CMRD's with the master CMRD acting as a kind of "buffer" and a master "timer". Accordingly, in the master mode the CMRD transmit and receive counters (Blocks 118, 112 respectively in Figure 4) are independent of each other. The receive counter, Block 112, loads the frame memory with data at a point in time which is one time slot less than the actual address. This is necessary because the transmit counter, Block 118, must load the memory hold register, Block 124, with data from the time slot previous to the one it is transmitting in a last-in first-out (LIFO) fashion. When a CMRD is in a slave mode, the transmit bit counter, Block 112, is phase locked to the incoming recovered clock signal while the transmit byte counter, Block 118, is set one byte ahead of the receive counter thereby telling the next slave CMRD in the loop what its own address number is. Further, while master or slave CMRD's contain identical receive and transmit bit address counters 112 and 118, it is only when a CMRD is in the master mode that the two counters are independent of each other such that the synchronization circuit, Blocks 114, 116, control the receive counter, Block 112, only. However, when a CMRD is in the slave mode the receive counter, Block 112, controls the transmit counter, Block 118. Therefore, for slave CMRD's, timing is generally just passed through each device while a master CMRD can and does make corrections. Additionally, the transmit counter 118 may be phase locked to an external or internal oscillator which is, in the preferred embodiment of the present invention, 2.04 MHz. Further, the transmit phase lock circuit, Block 120, runs at 18.432 MHz (preferably) and a comparator operates at 2.048 MHz in order to prevent propagation of receive clock jitter.

As mentioned earlier, the serial bit stream contains synchronization bytes (byte 248 through 251, R0 through R3 respectively). Further, bit pattern constraints allow resynchronization one frame after the first synchronization pattern has been detected as shown in Figure 3a. The synchronization pattern, although being capable of limitless variety, is preferably a 0 followed by sixteen consecutive 1's followed by a 0. Additionally, in order to prevent the synchronization pattern from occurring in the data bytes, an odd parity bit is attached to every eight-bit byte thereby the use of nine-bit bytes as previously mentioned. Additionally, the only exception to odd parity is when all 1's are present such that even parity is automatically applied, Block 128, although this is not detectable by a user or peripheral device.

Due to the complex nature of the CMRD and a CMRS, it is readily obvious that diagnostics are an important part of the present invention in order to isolate problems between hardware, the medium, or peripheral devices. Inherent in the present invention is the use of a "ring" structure thereby providing for loop-back of data in an automatic fashion. Additionally, a peripheral device or user can monitor an alarm lead as well as the odd parity format of incoming data and the contents of R4, the CMRD addressing feature (described more fully below) so that a peripheral device may detect problems internal or external to itself as well as bringing an alarm condition to the attention of downstream CMRD's, master or slave, by putting an appropriate message into the data stream. In order to facilitate diagnosing of problems, registers R4 through R7 (bytes 252 through 255) are used for diagnostic purposes primarily. These registers are only accessible by using the EXT-DIAG control lead with diagnostic commands being capable of transmission to individual CMRD's or as a global command to be accessed by all CMRD's (slave or master). The use of this type of "housekeeping" in the byte stream allows the entire CMRS to be diagnosed from the I/O port of any CMRD.

In a preferred embodiment of the present system, two registers, R4 and R5 (bytes 252 and 253), deal with a dynamic addressing function for each CMRD. Accordingly, a master CMRD will always transmit a 0 (or some other selected value) in register R4 with each slave CMRD which follows thereafter incrementing this 0 count by one (or some other selected valve in either a positive or negative direction). Therefore, the received data or number in register R4 by a master CMRD will show the number of CMRD's in a particular ring. Therefore, when a CMRD slave receives a number in R4, it will increment that number by one and pass it on to the next slave. Further, a CMRD will compare this incremented number with the number in R5 and if there is a match, then a CMRD knows it is being addressed.

This dynamic addressing scheme occupies little overhead in the data frame while enhancing the ability of the master CMRD to monitor and control the status of the ring, either upon occurrence of an event or continuously. For example, nodes may be added or removed from the ring without reprogramming the master CMRD, since the master will receive on the next frame a revised device number count which updates the number of devices active on line. Thus, if a device is physically removed, or if a device removes itself by means of an optical relay or otherwise such that the CMRD is no longer processing the data as described herein, the count received by the master CMRD in register 4 on the next frame will reflect this change. This data may then be used by the master to control its operation relative to ultimate loop timing, and to initiate desired diagnostic inquiries.

The dynamic addressing function may also be used to monitor or modify the status of individual CMRD's, without requiring the master to maintain an updated list identifying all nodes on the ring. For example, by generating a "2" and transmitting it in register R5, the master CMRD may interrogate the second slave CMRD on the ring. Such addressing may be used, for example, to interrogate the status of the addressed CMRD, which would then return one or more bytes in appropriate registers reflecting its status. Conversely, one or more bytes or registers may be used to transmit desired status or status changes to an addressed CMRD, such as instructing it to isolate its parallel data bus, etc. In this manner, the master CMRD may sequentially, or at random, interrogate and control all CMRD's presently on the ring to locate or isolate a fault.

Finally, the dynamic addressing scheme of the present invention may be used for primary addressing, such as by providing each CMRD with a look-up table correlating position on the ring with desired devices.

As an example of the diagnostics which may be provided, the contents of register R6 (byte 254) may contain a number of diagnostic commands. For a diagnostic command to be valid, it must be transmitted twice in sequential frames with the second occurrence requiring that all bits be inverted, thereby eliminating false commands. Each bit within the R6 command indicates if the command applies to all or only one CMRD. If it applies only to one CMRD, there must also be a match between registers R4 and R5. The first bit in register R6, bit 0, is a clear diagnostic command which clears the diagnostic counter (Block 132) within fifteen bytes and also clears the resynchronization event flag. This clear diagnostic command has a retriggerable timeout of fifteen frames. The second bit, bit 1, is a bypass I/O command which prevents any peripheral or external devices from entering any data into the CMRD. The third bit, bit 2, instructs the CMRD to loop register 7 at the I/O. This therefore allows for on-line monitoring of I/O ports or allows the contents of register 7 to be looped through the I/O port back into the CMRD without occupying a user time slot (bytes 0 through 247). Bit 3 is a send status command which tells a CMRD to read its internal status line into register R7. The fifth bit, bit 4, is a change master to slave command which can only be sent from a CMRD slave location at the same time the CMRD slave which is sending out the command is switched to master. This command thereby forces all CMRD's which are downstream to resynchronize and is useful to evaluate master clock inaccuracies at the master CMRD. Bit 5 is a transmit tone command which would be used with an order wire which is preferably run with the transmission medium and connects all devices in the CMRS (although not essential). Accordingly, with the use of a transmit tone when the serial bit stream is interrupted at a unknown location, each downstream CMRD may be instructed one-by-one to transmit a tone on the order wire such that the break will be between the last responding CMRD and the next CMRD with the contents of register R5 telling how many CMRD's downstream the fault is. Additionally, the generation of a tone on an order wire enables the use of a magnetic pickup coil to help locate the wire together with the transmission medium in walls, floors, ceilings, etc. Bit 6 of register R6 is a bypass command and would facilitate the mechanical transfer of the transmission medium so as to completely bypass a CMRD. This may be in the form of a relay or preferably a mechanical fiber optic transfer device thereby allowing a CMRD to be completely bypassed. Initiation of this command will cause the remaining CMRD's to resynchronize, although reinsertion of the CMRD will happen after a timeout period which cannot be accelerated although reinitiated. Bit 7 is a command type signal which indicates if the command is a global or a local instruction to the CMRD's.

Register R7 (byte 255) again contains eight bits similar to register R6 which,are generally used for a data field. This byte may be used to transfer data through I/O ports without interfering with CMRS or CMRD operation and may be used to loop data through one or all I/O ports for each CMRD slave or master or to read the status indicators of individual CMRD's. Accordingly, when used to read the status of a CMRD, each bit has a particular assignment. Accordingly, bit 0 is an external clock control (EXT-CLK-CTRL) which interrogates the status of the external clock control lead at the I/O port. Bit 1 is a M/S lead which indicates the status of the CMRD to determine whether it is in a master or a slave mode. Bit 2 is an external diagnostic lead which indicates the status of the external diagnostic access control lead. The fourth bit is bit 3 which is a write request permanent lead (WRQ PERM) which indicates the status of the permanent write request monitor circuit. Bit 4 is an I/O off lead which leads the status of the I/O off control lead while bit 5 is a RESYNC lead which permits a readout of the resynchronization indication flag. Bit 6 is an internal diagnostic lead (INT DIAG) which indicates the status of internal diagnostic processes, that is whether they are on or off. The last bit, bit 7, is a signal strength lead in the preferred embodiment of the present invention where fiber optic cable is utilized and is a control lead from the fiber optic receiver automatic gain control circuit to indicate high or low incoming light reception thereby performing a type of failure analysis.

## IV-E : CIRCUIT OPERATION

Having previously described general system operation, format of data, and a detailed description of the circuitry, an overview of data or information and actual circuit operation will now be discussed.

## IV-E-1 : CMRD AND CMRS TIMING

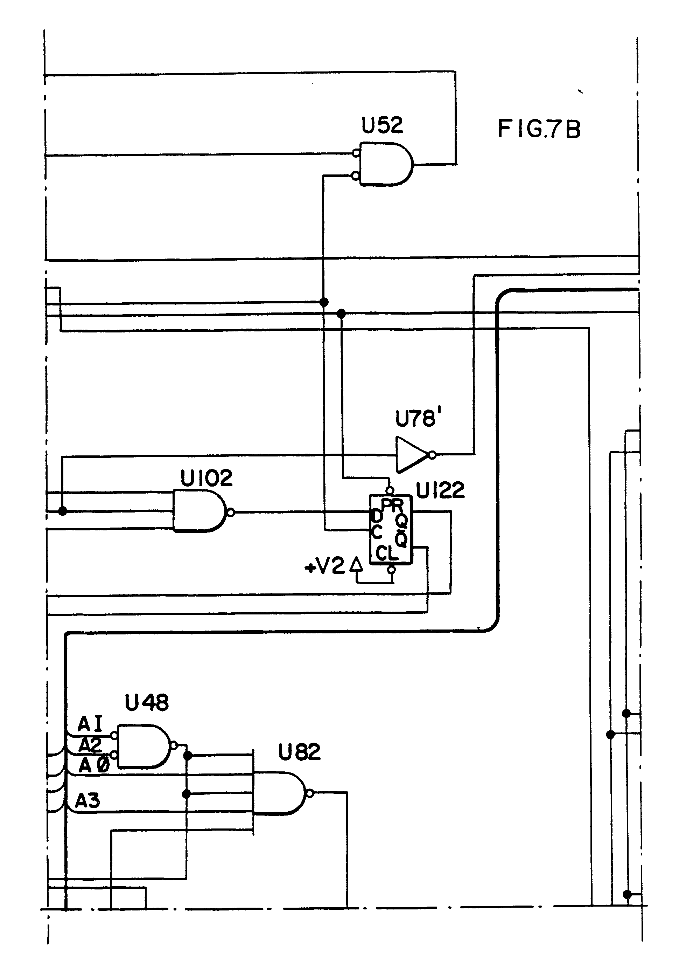

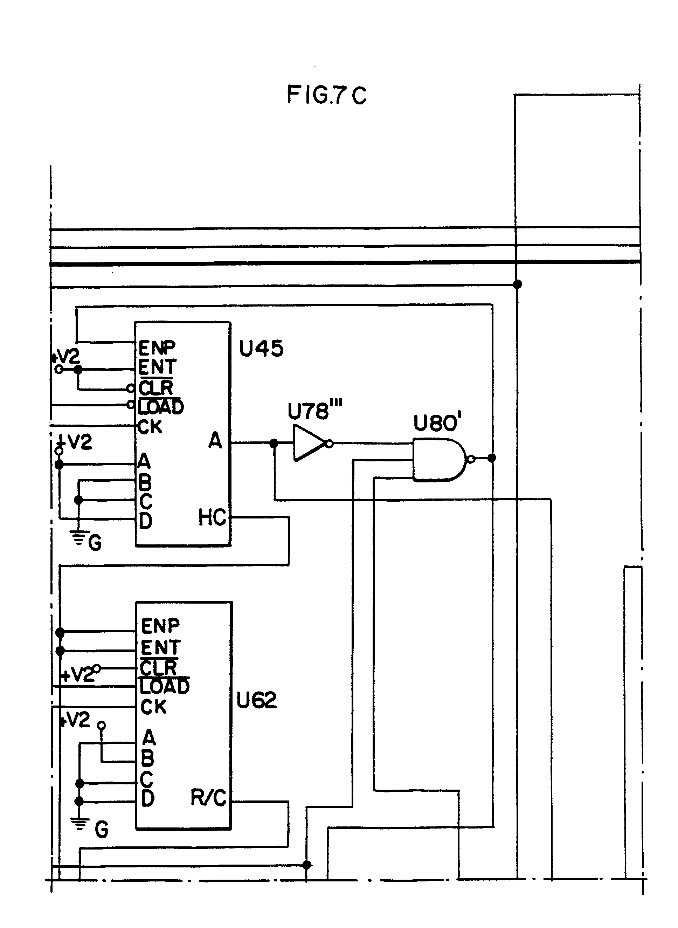

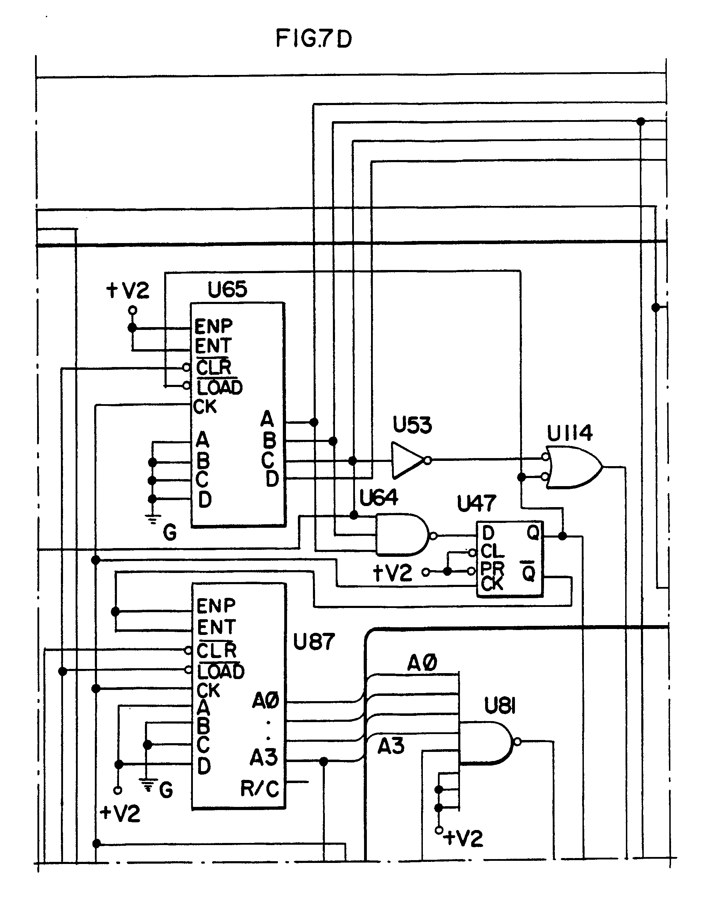

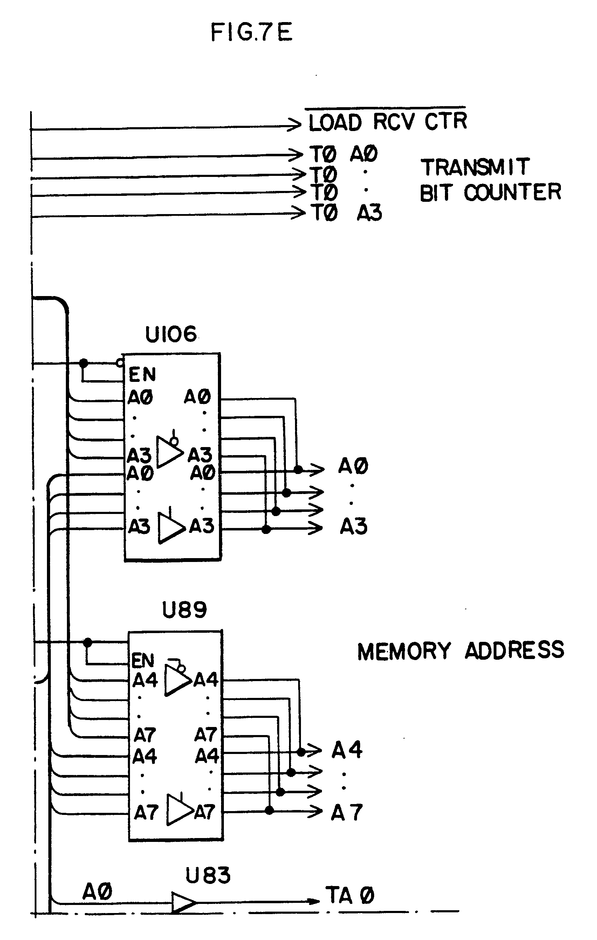

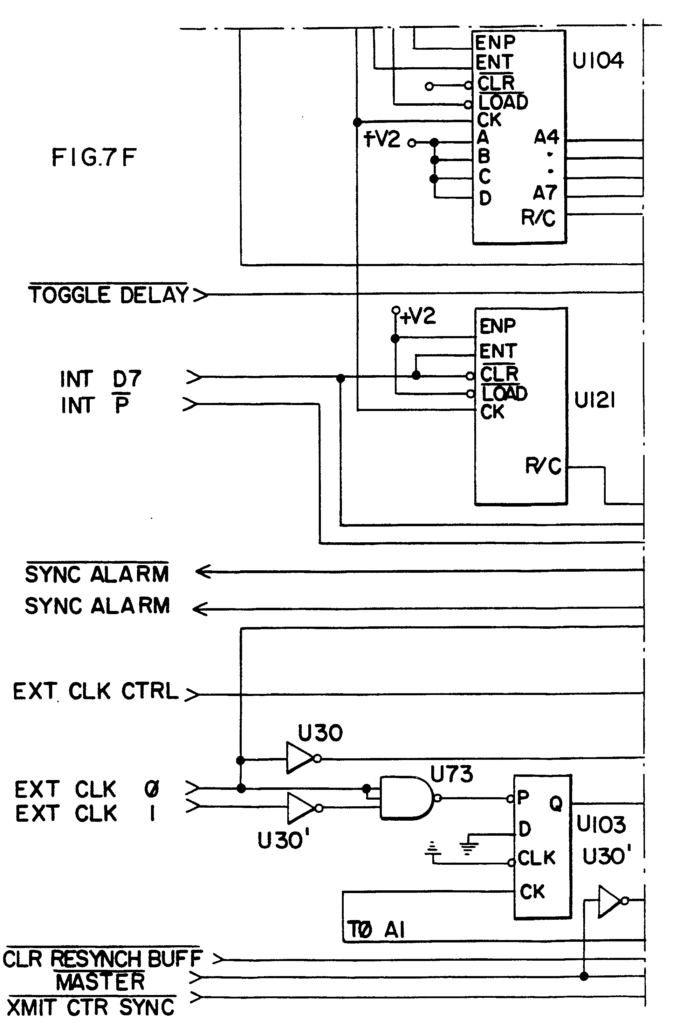

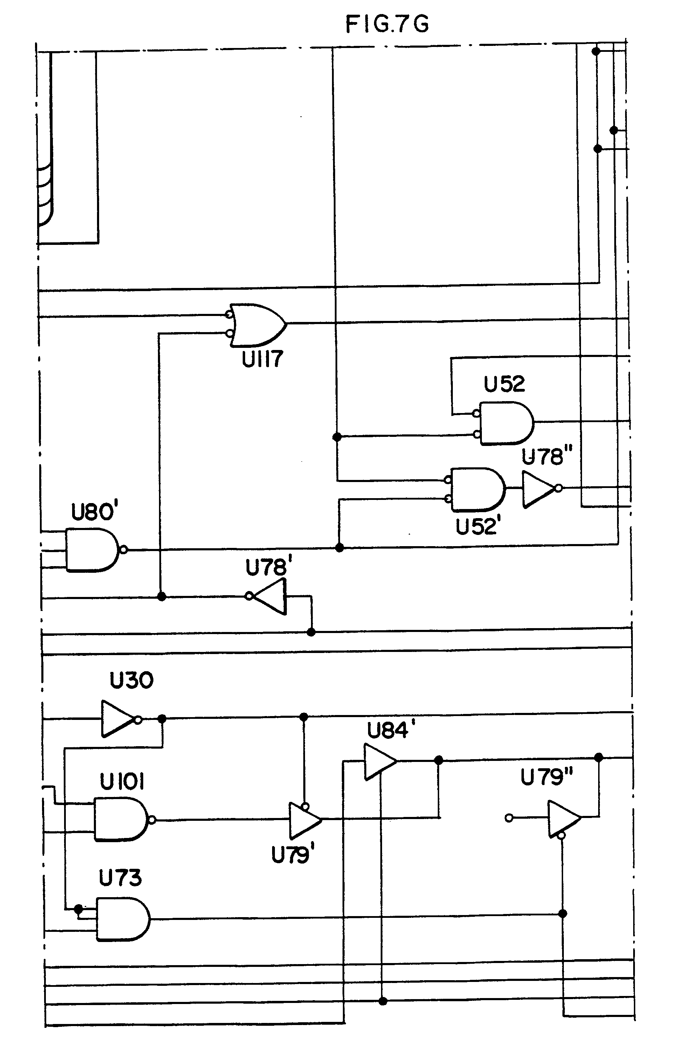

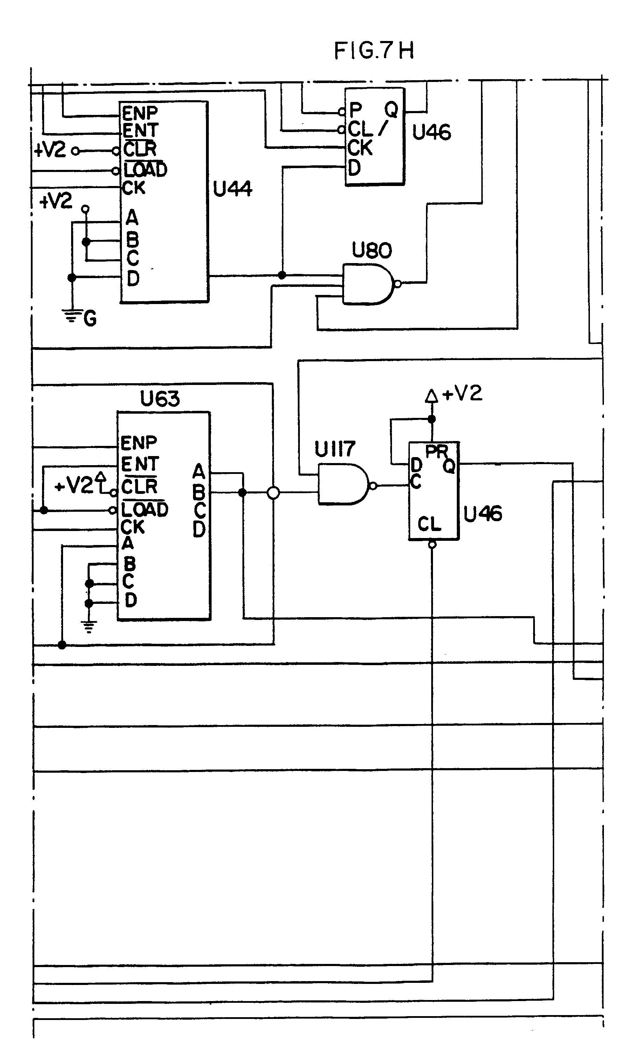

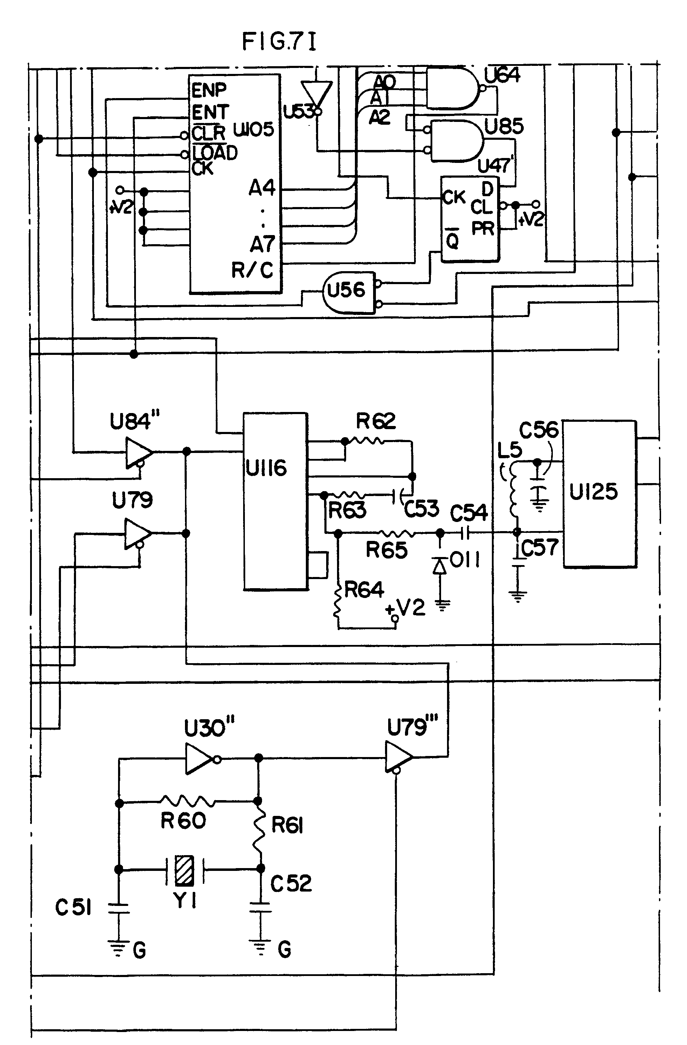

Referring to Figure 7, the transmit (U65, U85, U105) and receive (U119, U86, U104) address counters can be seen. The byte counter output of these counters are run through multiplexers (U106, U89) with the multiplexers being connected to the memory chip (U66). The clock pulse for the receive counter is supplied by the incoming data clock source while the clock supply for the transmit counter is supplied by local phase lock loop circuitry (U116, U125). The receive bit counter is comprised of a 4-bit counter (U119) and a flip-flop (U122) with the flip-flop used to add the parity or ninth bit. A clear pulse sets the counter to zero and when a count of five is reached, the flip-flop is set such that on the next clock pulse the counter is loaded with the count fourteen. Accordingly, the bit counter loads bits such that at count fourteen, bit zero is loaded ; at count fifteen, bit one is loaded ; at count zero, bit two is loaded ; at count one, bit three is loaded ; and so forth, until at count five, bit seven is loaded followed by count six where the parity bit is loaded. The reference signal for the phase lock circuit is received by U119 and in the slave mode comes from the receive counter while in a master mode from an external clock supply or a local oscillator run at preferably 2.048 MHz as previously mentioned. Also shown in Figure 7 is the frame synchronization circuitry. Here, a 4-bit counter U121 is used to detect the synchronization pattern. The input serial bit stream is used to enable and clear the counter. The counter is enabled for each ONE and is cleared for each ZERO. Accordingly, if fifteen consecutive ONE's are detected, the carry out of the counter will be set. Therefore, if a correct synchronization stream is being received the next bit should also be a ONE followed by a ZERO. The ZERO should occur at the same time as the parity bit time. Further, the carry bit of the counter, the D7 bit and parity bit, are inverted and then ANDed (U80) to produce a synchronization pulse which is compared with the decoded time slot 249 (R1) of the receive counter. If the two pulses occur at the same time then the CMRD is in synchronization.

Accordingly, a 4-bit counter U63 monitors the results of this synchronization pulse comparison. The counter is loaded when correct synchronization is received and counts up when correct synchronization is not received. The counter will count two missed synchronization pulses then hold. Accordingly, the counter output is a CMRD synchronization alarm indicator. The value loaded into the counter when correct synchronization is received depends on the state of the alarm counter. If there had been no alarm, the counter would be loaded with a zero. However, if there had been an alarm, the counter would be loaded with a ONE, thereby clearing the alarm indication but holding the counter ready to go back into alarm on the next incorrect synchronization. If the next synchronization is correct, the counter will be clear. The alarm counter thus counts two incorrect synchronizations, goes into alarm, and then two correct synchronizations to clear the alarm, although alarm indication is cleared after one correct synchronization.

Two of the alarm counter outputs are used by each CMRD with the lowest bit of the counter being called the alarm pending signal (as explained below). The next lowest bit of the alarm counter is the synchronization alarm signal which sets the resynchronization flip-flop (U46) to give a loss of frame status indication.

The synchronization counter is comprised of three 4-bit binary counters (U45, U62, U44) as shown in Figure 7. These counters are utilized to synchronize the receive address counter and are continuously operated. Any time a correct synchronization pattern is detected by the synchronization detector, the synchronization counter is reset. The synchronization counter counts 2,263 bits which is 251-by-9 bit time slots plus four bits. When the synchronization counter receives its maximum count, it is held until reset by the next correctly received synchronization pattern. The synchronization counter will reset the receive counter only if the CMRD is in alarm. This is done so that resetting of the receive counter occurs when the header pattern of data (bytes 0 through 247) are being transmitted thereby causing the least disturbance of the transmitted serial bit stream in the system.

Referring to Figure 8, the CMRD state control and address coding is shown. Readily obvious is the read and write control leads which are provided from this state control logic to all buffers and memory devices. Since every byte contains nine bits, the byte cycle can therefore be divided into nine time intervals. These time intervals are labeled 0 through 7 and P (for parity). Accordingly, during time intervals 0, 1 and 2 data is transferred from the serial/parallel converter buffer U3, U37 to the memory device U66. This transfer occurs in both master and slave modes. However, in the slave mode the frame memory outputs are disabled (as previously explained). During time intervals 3 and 4 data is moved from the memory hold register U88 to the standby serial transmit buffer U26, U28 or U27, U29. During time intervals 5 and 6 data is moved to the memory hold register from the memory in the master mode and the serial/parallel converter when a CMRD is in a slave mode. When new data is received during a time slot, it will be loaded into the time slot by the serial transmit buffer from the parallel I/O buffer during time intervals 7 and P.

As mentioned previously, it is possible for incoming data to be modified and transmitted out of a CMRD during the same time slot. This is accomplished by the use of double buffering which is done at the input/output buffer and the transmit register. When the data in the output buffer U49 or U50 is being read by an outside peripheral device, new data will arrive which has to be temporarily stored. The same is true for the transmit buffer in that, while one byte is serially shifted out of it U26, U28, the new byte to be transmitted has to be loaded into a standby buffer U27, U29. Actually, bits are removed from the serial bit stream one time slot before and transmitted one time slot after it is visible to the user. Therefore, there is a two time slot delay through each CMRD. Accordingly, in referring to Figure 9, the incoming data may be seen so as to run into a 4-bit parallel output shift register U93. The reason for this delay is to prevent data from being read from the input buffer U20 while new data is being loaded. The decision to add or delete a delay is made by comparing the DEMOD LOAD pulse signal with the DEMOD XMT EN. According, if both signals occur at the same time, then the converter is being loaded and read at the same time and the delay insertion is then toggled. Therefore, if there had been no delay, a delay is added ; while if there was a delay, then the delay time is removed. This delaying of time is used only by a CMRD in the master mode and is held out of the data paths when a CMRD is in a slave mode and will actually settle down after CMRD turn on.

The output of the delay shift register U93 is then run to the serial/parallel converter which is comprised of a parallel output shift register U3 and a flip-flop U37. When a byte has been completely loaded, it will be transferred to the input buffer U20 which is comprised of tri-stateable D-type flip-flops. The DEMOD LOAD pulse from the receive counter indicates that data has been loaded into the serial/parallel converter and is used to load the input buffer. The DEMOD XMT signal is used to place the input buffer data onto the CMRD internal bus. When the DEMOD XMT signal occurs during bits 0,1 and 2 of a time slot, the memory address multiplexers are set to pass receive address by the RCV XMT ADDR signal. At bit 1 time, the MEM RCV signal loads the frame memory. The bit 0 time is used as a memory data setup time while bit 2 time is used as a memory data hold time. Data is loaded into the frame memory in both the master and the slave modes while, as mentioned previously, the memory output is disabled when a CMRD is in the slave mode.

Data transfer next occurs from the memory hold register U88, an edge-triggered flip-flop in conjunction with a standard flip-flop U12, to the standby serial transmit buffer which is comprised of two parallel load shift registers called MOD0 and MOD1 (U26, U28 and U27, U29). The memory hold register output is enabled by the MHR XMT signal while the leading edge of the MOD RCV signal which has been delayed one bit time from the MHR XMT signal loads the standby serial transmit buffer. The data that is transferred is data that was previously on the transmission medium for the time slot that currently appears to the user and was in fact loaded while the user was viewing the previous time slot. This previously mentioned data transfer occurs during all time slots except R0 through R7. When a CMRD is in the master mode, during time R0 through R3 the standby serial transmit buffer is loaded with the contents of read-only registers R0 (U4, U5), R2 (U6, U7) and R3 (U8, U9) which are tri-stateable bus drivers. These registers are enabled to the CMRD internal bus by the R0,1 XMT, R2 XMT and R3 XMT signals. R0 which contains the 101010101 header pattern is sent twice, while R2 and R3 together form the framing synchronization pattern 011111111111111110. During the R4 time period, the self-address counters which are comprised of two 4-bit up/down counters U38, U39 are zeroed while the self-address buffer which is comprised of a buffer line driver U23 loads this zero on the CMRD internal bus at the R4 XMT time period. Data is loaded into time slots R5 and R6 in the normal fashion while the R7 time slot is loaded either normally or with the contents of the status buffer if diagnostics are active.

When a CMRD is in the slave mode, registers R0-R3, R5 and R6 are loaded with data received on the serial bit stream in the normal manner as previously mentioned. During time period R4, the self-address counter is incremented while the new address is placed on the CMRD internal bus during the R4 XMT time period. The incrementing of the self-address counter is accomplished by the SELF ADDR CLK, the generation of which is shown in Figure 8. A flip-flop U122 is used to enable a gate between R4 RCV and R5 RCV time periods. This gate passes the low bit of the receive byte counter to create a clock pulse between the R4 RCV and R5 RCV signals. Since the receive byte counter is one byte behind the transmit counter when the CMRD is in the slave mode, the clock pulse will increment the self-address counter after it has been loaded and before the new address must be transmitted. As previously mentioned, the R7 time slot is loaded either normally or with the contents of the status buffer if the diagnostics are active. During bit times 5 and 6, data is loaded into the memory hold register while at the same time it is loaded into the standby parallel I/O buffer U49, U50. When a CMRD is in the master mode, this data is loaded from the frame memory by the MEM XMT signal. However, when a CMRD is in the slave mode, the data is loaded directly from the serial/parallel converter with the DEMOD XMT signal. Although the MEM XMT signal occurs when a CMRD is in the slave mode, it has no effect since the memory outputs are disabled for a CMRD slave unit.

During bit time 7 and parity, data is transferred only if there is an I/O flag (as shown in Figure 10). The I/O flag is set by the WRQ during data time slots and by the rising edge of the byte clock if the LOOP at the R7 diagnostic command is active. This flag is cleared at the end of every time slot but will also be held clear when R0 through R3 are being transmitted, during a SYNC ALARM condition if the unit is in a slave mode and the external diagnostics are not active, when the I/O OFF or BYPASS I/O commands are active, or during R4 through R7 unless the external diagnostics are active (except when LOOP at the R7 command is active).

When a WRQ occurs and none of the clearing conditions previously mentioned are in effect, the I/O flag will load data from the parallel I/O input buffer into the serial transmit buffer, replacing the data that was previously loaded. Thus data may be modified during the same time slot that it was read.

IV-E-2 : CMRD PARITY GENERATOR

The purpose of the CMRD parity generator (comprised of a nine-bit odd-even parity generator) is used to detect an all ONES pattern on the internal parallel bus. When an all ONES data word is detected upon loading the serial transmit buffer, the parity bit is inverted giving even parity. When an all ONES data word is detected upon loading the parallel I/O output buffer, the parity is also inverted restoring odd parity. Thus the user always sees odd parity. The ODD PARITY circuit as shown on Figure 7 is used to control generation of this parity bit. When a CMRD is in the master mode, the parity bit is always regenerated. This thereby prevents false synchronization patterns from remaining in memory. When a CMRD is in a slave mode, parity is always left unchanged during alarm conditions or when transmitting registers R0 through R7. This is done to prevent corrupting or distorting the synchronization pattern which is sent to other CMRD's.

IV-E-3 : CMRD INPUT/OUTPUT READ/WRITE CONTROL

The read/write control for the input and output of data transfers is shown in Figure 10. The incoming WRQ line starts a 4-bit counter which comes to a stop after two counts. This thereby creates a delay for the input to settle before being clocked into the CMRD. The output of the counter clocks the I/O flag flip-flop indicating that data is available in the I/O buffer. The counter output also generates the WAK which may be used to make the external peripheral equipment remove the WRQ line. The WAK output is gated with the byte clock so that it will be a continuous series of pulses instead of a single pulse. This thereby provides continual resetting edges to peripheral equipment. If the WRQ signal is not removed by the external or peripheral equipment, and is "permanently" asserted, a 4-bit counter will time out and indicate on the WRQ PERM status line that a permanent WRQ is present at the I/O interface. This status information can be read out via R7 using the diagnostics command. The peripheral or external equipment must remove a WRQ signal before new data can be accepted by a CMRD.

IV-E-4 : CMRD DIAGNOSTIC CIRCUITS

As mentioned previously, four bytes of the CMRD bit stream have been set aside for diagnostic purposes and have been referred to as R4 through R7. The diagnostic circuitry allows a CMRS to be monitored while in operation or to be taken off-line if there is a problem. Also as mentioned previously, R4 is the self-addressing counter which the master CMRD will always transmit a zero in. Every following CMRD slave unit will increment R4 by one, while a peripheral device monitoring R4 will always see the same number appearing in R4 because this is the identity of the CMRD to which it is attached. Accordingly, in order to communicate with any individual CMRD, register R5 is loaded with the number of the CMRD to be addressed. If a match between the contents R4 and R5 is detected, the device knows it has been addressed. A valid address command must be sent twice in sequential fashion with the first occurrence being non-inverted and the second occurrence being inverted. This command is first loaded into a tri-stateable flip-flop which acts as an inverting buffer and on the next frame is loaded into another tri-stateable flip-flop which acts as an inverting buffer. Coincident with the loading into the inverting buffer, the inverter command is loaded into the non-inverting buffer. The inverting and non-inverting values are compared by an 8-bit identity comparator such that if the comparison is valid, a CMD VALID signal is asserted or initiated.

There are two conditions which will cause a CMRD to respond to a diagnostic command. The first condition is that a CMRD address match exists while the second is that a global command is properly received. Bit 7 of the command word, as previously mentioned, is the local/global command. Accordingly, an incoming command from the comparator is loaded into a tri-stateable D-type flip-flop which acts as a buffer. The loading of this buffer is controlled by a flip-flop to prevent false command responses with the flip-flop being set, thereby loading the buffer, during an R7 RCV time period when a CMD VALID signal has been asserted. No new commands may be accepted until the flip-flop is reset which occurs only when an IDLE command (all ONE's) is received or when the CMRD goes into an alarm condition.

Coincident with the incoming command being accepted as valid, a synchronous 4-bit counter which acts as a timer is started which counts fifteen frames. While this timer is active the command word is gated through two octal buffer/line drivers having tri-stateable outputs which act as transmission gates to their respective logic circuits. When the timer does time out, the transmission gates transfer +V2 (representing an all ONE's, IDLE command) to the command logic circuitry. This diagnostic time out can be accelerated by transmitting a CLR DIAGNOSTICS command. This clear command will cause the timer to be incremented by the byte clock rather than at the frame rate, which is the R6 RCV pulse rate.

The diagnostics commands are :

CLEAR DIAGNOSTIC – This command causes the diagnostic timer to run at the Byte Clock rate, clearing the diagnostic command faster than normal and also clears the RESYNC status indication.

BYPASS I/O – This command will prevent data from the I/O port entering the serial bit stream of the CMRD.

This condition is also signalled on the alarm lead to peripheral devices.

LOOP R7 AT I/O – This command allows the use of R7 to monitor the I/O bus. Data in the R7 byte slot is transmitted on the I/O bus and automatically clocked into the I/O input data buffer.

SEND STATUS – This command tells the CMRD to read the status lines inside the CMRD and is transmitted in the byte slot for R7. The status buffer R7 (a hexagonal bus driver) transmits this information onto the internal data bus shown in Figure 9. The status lines being monitored are :

The external clock control lead ;

The external master/slave control lead ;

The external diagnostic control lead ;

The internal permanent write request flag ;

The external I/O OFF control lead ;

The internal resynchronization event flag ; and

The internal diagnostic in progress lead.

CHANGE MASTER TO SLAVE – This command momentarily changes the master CMRD to a slave.

TRANSMIT TONE – This command places a tone on an order wire to be used to identify the exact fault location in a ring.

BYPASS CMRD – This command allows for bypassing the entire CMRD by fiber optic relay or the like.

LOCAL/GLOBAL – This command identifies the addressed CMRD : LOCAL for an individually addressed CMRD ; GLOBAL for all CMRD's.

Continuously Sent Diagnostic Commands – If a command is sent continuously (alternating inverting, non-inverting), the diagnostic timer will be retriggered and the command that was accepted as valid will continue to operate. No new commands will be accepted until an IDLE command is sent.

It is to be understood that many variations of the present invention may be practiced without departing from the scope of the present invention. For example, custom circuitry may be utilized in order to cut down on component counts or physical size, while faster or lower speed circuitry may be used. Additionally, devices which are capable of performing in a master or a slave mode exclusively may be utilized thereby, for example, removing the necessity for memory in a slave unit. Further, different types of synchronization patterns or links may be utilized while different methods of error detection other than parity may be used.

## Claims

1. A common medium time division multiplex ring communication system including a plurality of common medium time division multiplex ring devices (26), hereinafter referred to as CMRD's, which receive, monitor, and retransmit serial bit stream data during a plurality of first time slots and a plurality of second time slots for communication with other such CMRD's connected by a common communication medium (24), wherein a plurality of peripheral devices (36, 40, 42) are connected to a CMRD (26) such that each peripheral device may communicate with other peripheral devices associated with other CMRD's only during said first time slots by means of said serial bit stream data over the common medium (24) ; characterized by

means (44) for allowing one of said peripheral devices (36, 40, 42) associated with a given CMRD (26) to communicate locally with another peripheral device associated with the same CMRD (26) during said second time slots without utilization of the common medium (24) or any other CMRD (26).

2. A common medium time division multiplex ring system as claimed in claim 1, characterized by means for organizing the serial bit stream data into information frames (120-130), each frame including a multiplicity of individual time slots, wherein each CMRD includes means for synchronizing said CMRD to said information frames such that said first and second time slots within a frame may be accessed by said CMRD (110-120), each CMRD further having a data bus (44) connecting said peripheral devices to said CMRD (26) ; and in that

said second time slots include control time slots for transmission of information between one or more CMRD's but not between said peripheral devices, said system further comprising means for permitting one of said peripheral devices (36, 40, 42) to communicate with another of said peripheral devices associated with the same CMRD by means of said data bus (44) during said control time slots.

3. A common medium time division multiplex ring system as claimed in claim 1, characterized by means (120-130) for organizing the serial bit stream data into information frames, each frame including a multiplicity of said first and second time slots ; and in that each CMRD includes means for synchronising said CMRD to said information frames such that individual time slots within a frame may be accessed by said CMRD (110-12), each CMRD further having a data bus (44) connecting said peripheral devices to said CMRD (26), first means for determining when one of said peripheral devices desires to pass information to said CMRD (26) for transmission over said common medium (24), and second means for determining when data received by said CMRD (26) from said common medium (24) is intended to be passed to one of said peripheral devices (36, 40, 42), the system being further characterized by means for enabling communication between one of said peripheral devices (36, 40, 42) and another of said peripheral devices associated with the same CMRD (26) by means of said data bus (44) when neither said first or second means determines that communication between said CMRD (26) and any of said peripheral devices (36, 40, 42) associated with it is desired.

4. A common medium time division multiplex ring system as claimed in claim 1, characterized by means (120-130) for organizing the serial bit stream data into information frames, each frame including a multiplicity of individual time slots, wherein each CMRD includes means for synchronizing said CMRD to said information frames such that individual time slots within a frame may be accessed by said CMRD (110-120) ; and in that said information frame includes at least one dynamic address byte (R4), said dynamic address byte being set to an initial value by one of said CMRD's, and thereafter incremented by each of the remaining CMRD's active in said ring.

5. A common medium time division multiplex ring system as claimed in claim 4, characterized in that said information frame includes a comparison address byte (R5), and in that said CMRD's include means for comparing the contents of said comparison address byte to said dynamic address byte and generating a signal when said bytes match, whereby individual CMRD's (26) active in said loop may be addressed.


## Ansprüche

1. Zeitmultiplex-Ringsystem mit gemeinsamem Medium, umfassend mehrere Zeitmultiplex-Ringeinrichtungen (26), im folgenden als CMRDs bezeichnet (CMRD = common medium ring device), die während mehrerer erster Zeitschlitze und während mehrerer zweiter Zeitschlitze serielle Bitstromdaten zur Kommunikation mit anderen derartigen, durch ein gemeinsames Übertragungsmedium (24) verbundenen CMRDs empfangen, überwachen und zurücksenden, wobei mehrere Peripheriegeräte (36, 40, 42) an ein CMRD (26) derart angeschlossen sind, daß jedes Peripheriegerät mit anderen Peripheriegeräten, die anderen CMRDs zugeordnet sind, nur während der ersten Zeitschlitze mittels der seriellen Bitstromdaten über das gemeinsame Medium (24) kommunizieren kann, gekennzeichnet durch

eine Einrichtung (44), die es gestattet, daß eines der Peripheriegeräte (36, 40, 42), das einem gegebenen CMRD (26) zugeordnet ist, lokal mit einem anderen, demselben CMRD zugeordneten Peripheriegerät während der zweiten Zeitschlitze kommuniziert, ohne daß das gemeinsame Medium (24) oder irgend ein anderes CMRD benutzt wird.

2. Ringsystem nach Anspruch 1, gekennzeichnet durch eine Einrichtung zum Organisieren der seriellen Bitstromdaten in Informationsrahmen (120-130), von denen jeder Rahmen eine Mehrzahl individueller Zeitschlitze enthält, wobei jedes CMRD eine Einrichtung zum Synchronisieren des CMRD mit den Informationsrahmen enthält, derart, daß auf die ersten und die zweiten Zeitschlitze innerhalb eines Rahmens durch das CMRD (110-120) zugegriffen werden kann, und jedes CMRD weiterhin einen Datenbus (44) enthält, welcher die Peripheriegerät mit dem CMRD (26) verbindet ; wobei

die zweiten Zeitschlitze Steuerzeitschlitze enthalten für die Informationsübertragung zwischen einem oder mehreren CMRDs, jedoch nicht zwischen Peripheriegeräten, wobei das System weiterhin eine Einrichtung enthält, die es einem der Peripheriegeräte (36, 40, 42) erlaubt, mit einem anderen der Peripheriegeräte, die demselben CMRD gegeordnet sind, über den Datenbus (44) während der Steuerzeitschlitze zu kommunizieren.

3. Ringsystem nach Anspruch 1, gekennzeichnet durch eine Einrichtung (120-130) zum Organisieren der seriellen Bitstromdaten zu Informationsrahmen, von denen jeder Rahmen eine Mehrzahl der ersten und der zweiten Zeitschlitze enthält ; wobei jedes CMRD eine Einrichtung zum Synchronisieren des CMRDs mit den Informationsrahmen enthält, derart, daß auf individuelle Zeitschlitze innerhalb eines Rahmens seitens der CMRD (110-12) zugegriffen werden kann, wobei jedes CMRD weiterhin einen Datenbus (44) aufweist, welcher die Peripheriegeräte mit dem CMRD (26) verbindet, eine erste Einrichtung zur Bestimmung, wann eines der Peripheriegeräte dem CMRD (26) Information zur Übertragung über das gemeinsame Medium (24) zuzuleiten beabsichtigt, und eine zweite Einrichtung zum Bestimmen, wann Daten, die seitens des CMRD (26) von dem gemeinsamen Medium (24) empfangen wurden, zu einem der Peripheriegeräte (36, 40, 42) zu leiten beabsichtigt ist, wobei das System weiterhin gekennzeichnet ist durch eine Einrichtung zur Ermöglichung der Kommunikation zwischen einem der Peripheriegeräte (36, 40, 42) und einem anderen der demselben CMRD (26) zugeordneten Peripheriegeräte über den Datenbus (44), wenn weder die erste noch die zweite Einrichtung feststellt, daß eine Kommunikation zwischen dem CMRD (26) und irgendeinem der diesem zugeordneten Peripheriegeräte (36, 40, 42) angefordert wird.

4. Ringsystem nach Anspruch 1, gekennzeichnet durch eine Einrichtung (120-130) zum Organisieren der seriellen Bitstromdaten zu Informationsrahmen, von denen jeder Rahmen eine Mehrzahl individueller Zeit-

EP 0 230 116 B1

schlitze enthält, wobei jedes CMRD eine Einrichtung zum Synchronisieren dieses CMRD mit den Informationsrahmen enthält, derart, daß auf individuelle Zeitschlitze innerhalb eines Rahmens von dieser CMRD (110-120) zugegriffen werden kann, wobei der Informationsrahmen mindestens ein dynamisches Adreß-Byte (R4) enthält, welches von einem der CMRDs auf einen Anfangswert eingestellt und anschließend von jedem der übrigen, in dem Ring aktiven CMRDs inkrementiert wird.

5. Ringsystem nach Anspruch 4, dadurch gekennzeichnet, daß der Informationsrahmen ein Vergleichsadreß-Byte (R5) enthält, und daß die CMRDs eine Einrichtung zum Vergleichen des Inhalts des Vergleichsadreß-Bytes mit dem dynamischen Adreß-Byte und zum Erzeugen eines Signals bei Byte-Übereinstimmung enthalten, wodurch individuelle, in der Schleife aktive CMRDs (26) adressiert werden können.

## Revendications

1. Un système de communication en anneau fonctionnant en multiplex temporel sur un support commun, comprenant un ensemble de dispositifs d'anneau fonctionnant en multiplex temporel sur un support commun (26), qu'on appellera ci-après "dispositifs CMRD", qui reçoivent, contrôlent et réémettent des données de train de bits série au cours d'un ensemble de premiers créneaux temporels et d'un ensemble de seconds créneaux temporels, pour la communication avec d'autres dispositifs CMRD connectés par un support de communication commun (24), dans lequel un ensemble de dispositifs périphériques (36, 40, 42) sont connectés à un dispositif CMRD (26), de façon que chaque dispositif périphérique puisse communiquer avec d'autres dispositifs périphériques qui sont associés à d'autres dispositifs CMRD, uniquement pendant les premiers créneaux temporels, au moyen des données de train de bits série, sur le support commun (24) ; caractérisé par

des moyens (44) pour permettre à l'un des dispositifs périphériques (36, 40, 42), associé à un dispositif CMRD donné (26), de communiquer de façon locale avec un autre dispositif périphérique associé au même dispositif CMRD (26), pendant les seconds créneaux temporels, sans utiliser le support commun (24) ou n'importe quel autre dispositif CMRD (26).

2. Un système en anneau fonctionnant en multiplex temporel avec un support commun selon la revendication 1, caractérisé par des moyens destinés à organiser les données de train de bits série en trames d'information (120-130), chaque trame comprenant un ensemble de créneaux individuels, dans lequel chaque dispositif CMRD comprend des moyens pour synchroniser ce dispositif CMRD sur les trames d'information, de façon que le dispositif CMRD (110-120) puisse accéder aux premiers et seconds créneaux temporels dans une trame, chaque dispositif CMRD comportant en outre un bus de données (44) qui connecte les dispositifs périphériques au dispositif CMRD (26) ; et en ce que

les seconds créneaux temporels comprennent des créneaux temporels de commande pour la transmission d'information entre un ou plusieurs dispositifs CMRD, mais non entre les dispositifs périphériques, ce système comprenant en outre des moyens pour permettre à l'un des dispositifs périphériques (36, 40, 42) de communiquer avec un autre des dispositifs périphériques qui sont associés au même dispositif CMRD, au moyen du bus de données (44), pendant les créneaux temporels de commande.

3. Un système en anneau fonctionnant en multiplex temporel sur un support commun selon la revendication 1, caractérisé par des moyens (120-130) pour organiser les données de train de bits série en trames d'information, chaque trame comprenant un ensemble des premiers et seconds créneaux temporels ; et en ce que chaque dispositif CMRD comprend des moyens pour synchroniser ce dispositif CMRD sur les trames d'information, de façon que le dispositif CMRD (110-120) puisse accéder à des créneaux temporels individuels dans une trame, chaque dispositif CMRD comportant en outre un bus de données (44) qui connecte les dispositifs périphériques au dispositif CMRD (26), des premiers moyens pour déterminer le moment auquel l'un des dispositifs périphériques désire transmettre de l'information au dispositif CMRD (26), pour la transmission sur le support commun (24), et des seconds moyens pour déterminer le moment auquel des données qui sont reçues par le dispositif CMRD (26) à partir du support commun (24) sont destinées à être transmises à l'un des dispositifs périphériques (36, 40, 42), le système étant caractérisé en outre par des moyens destinés à permettre une communication entre l'un des dispositifs périphériques (36, 40, 42) et un autre des dispositifs périphériques qui sont associés au même dispositif CMRD (26), au moyen du bus de données (44), lorsque ni les premiers moyens, ni les seconds moyens, ne déterminent qu'une communication entre le dispositif CMRD (26) et l'un quelconque des dispositifs périphériques (36, 40, 42) qui lui sont associés est désirée.

4. Un système en anneau fonctionnant en multiplex temporel sur un support commun selon la revendication 1, caractérisé par des moyens (120-130) pour organiser les données de train de bits série en trames d'information, chaque trame comprenant un ensemble de créneaux temporels individuels, dans lequel chaque dispositif CMRD comprend des moyens pour synchroniser ce dispositif CMRD sur les trames d'information, de façon que le dispositif CMRD (110-120) puisse accéder à des créneaux temporels individuels dans une trame;

25

et en ce que la trame d'information comprend au moins un multiplet d'adresse dynamique (R4), ce multiplet d'adresse dynamique étant fixé à une valeur initiale par l'un des dispositifs CMRD, et étant ensuite incrémenté par chacun des dispositifs CMRD restants qui sont actifs dans l'anneau.

5. Un système en anneau fonctionnant en multiplex temporel sur un support commun selon la revendication 4, caractérisé en ce que la trame d'information comprend un multiplet d'adresse de comparaison (R5), et en ce que les dispositifs CMRD comprennent des moyens pour comparer le contenu du multiplet d'adresse de comparaison avec le multiplet d'adresse dynamique, et pour générer un signal lorsque ces multiplets coïncident, ce qui permet d'adresser des dispositifs CMRD individuels (26) qui sont actifs dans la boucle.

FIG. 1A

F I G. IB

F I G. 2

F I G. IC

FRAMING

BYTE 0:BYTE 1:——————:BYTE 248:BYTE 249:250:251:——:BYTE 255:BYTE 0:

OR

BYTE 0:BYTE 1:—————: RO : RI :R2:R3:——: R7 :BYTE 0:

←——————————————125 μS——————————————→

←TIME OF
I/O FRAMING
CLOCK PULSE

←TIME OF
INTERNAL
SYNCHRONI-
ZATION

FIG. 3A

EP 0 230 116 B1

FIG. 3B

18 MHZ DEMOD CLOCK

18 MHZ DEMOD RCVR

INPUT DELAY SHIFT REG

DELAY SELECT TOGGLE

18MHZ DEMOD SHIFT REG

DEMOD LATCH EN

110

FIG.4A

126

I/O INPUT LATCH

LD

EN

ICLOCK

2MHZ PARALLEL I/O

I/O OUT 1 LATCH

P

OUTPUT LOAD EN CONTROL

FIG.4

LD EN P

I/O OUT 2 LATCH

A B C D F G H E I J

FIG.4B

FIG.4C

## FIG.4D

FIG.4E

DEMOD LOAD

128

OLD PARITY

PARITY
SELECT

PARITY
CONTROL

I/O FLAG

PARITY
GENERATE

STATE
CONTROL

138

ALL
ONES
DETECT

I/O XMIT

DEMOD XMIT

MOD RCV

FIG.4 F

FIG.4G

FIG.4H

FIG.4 I

MEM RCV

MHR/IO RCV

MHR XMIT

| PARITY LD EN MEMORY HOLD REGISTER | EN R0/1 PATTERN ROM | EN R2 PATTERN ROM | EN R3 PATTERN ROM |

124

EP 0 230 116 B1

FIG.4J

24

SERIAL BITSTREAM

FIG. 4K

FIG.5A

MOD DATA
MOD CK

EP 0 230 116 B1

FIG.5B

FIG.6

FIG.6A

FIG.6B

FIG.6C

DEMOD LD

RØ AI

RØ AØ

$\overline{RCV}$/XMIT ADDR

U78

+V2

ENP
ENT
$\overline{CLR}$
$\overline{LOAD}$
CK
IA
ID
+V2

UII9

OA
OB
OC
OD
R/C

U83'

DEMOD CLK

U83

G

RØ A3

FIG.7A

FIG.7

| 7A | 7B | 7C | 7D | 7E |
|----|----|----|----|----|
| 7F | 7G | 7H | 7I | 7J |

ENP
ENT
$\overline{CLR}$
$\overline{LOAD}$
CK
+V2
A
B
C
D

U86

AØ
AI
A2
A3
R/C

RI. $\overline{AI}$. $\overline{A2}$

FIG.7B

U52

U78'

U102

U122

PR
D
C   Q
    Q̄
CL

+V2

U48

A I
A2
A0
A3

U82

# FIG.7 C

# FIG.7D

# FIG.7E

LOAD RCV CTR

TØ AØ
TØ ·
TØ ·
TØ A3

TRANSMIT
BIT COUNTER

UIO6

EN
AØ          AØ
·
·
A3          A3
AØ          AØ
·
A3          A3

AØ
·
A3

U89

MEMORY ADDRESS

EN
A4          A4
·
·
A7          A7
A4          A4
·
A7          A7

A4
·
A7

U83

AØ          TA Ø

FIG.7F

# FIG.7G

## FIG.7H

FIG.7I

FIG.7J

FIG.8A

FIG.8

| 8A | 8B | 8C | 8D |
|----|----|----|----|
| 8E | 8F | 8G | 8H |

T̄ CLK

TØ  A3

TØ  A2

TØ  AI

TØ  AØ

U74

U74'

UIO8

UIO8'

U98

UII4

U98'

UII4'

U98

UIO8

I/O  FLAG  CLR

T  CLK

I/O  FLAG

MASTER

XMIT CNT SYNCH

RØ  AI

U780

U781

57

FIG.8 B

FIG.8C

FIG.8D

$\overline{\text{MEM RCV}}$

$\overline{\text{MHR I/O RCV}}$

$\overline{\text{DEMOD XMIT}}$

$\overline{\text{I/O XMIT}}$

$\overline{\text{MEM XMIT}}$

$\overline{\text{MOD RCV}}$

OLD PARITY

$\overline{\text{RCV / XMIT ADDR}}$

R0 , RI

$\overline{\text{R0, I XMIT}}$

U III'

U112

$\overline{\text{R2 XMIT}}$

MHR I/O RCV

U112'   U59   U100

$\overline{\text{R3 XMIT}}$

$\overline{\text{R4 XMIT}}$

$\overline{\text{R7 STAT}}$

U67

60

FIG.8E

FIG. 8F

ODD PARITY

STAT

A0
A1
A2

A0
A1
A2

ALM

A2

U94

R̄0̄ – R̄7̄

ALM

A0
A1
A2

U75'

ALM

A0
A1
A2

A2
A1

Ā0̄

FIG.8G

U95 $\overline{R4}$

U113 $\overline{R7}$

U111 $\overline{R07}$

U36'

U110

U97

$\overline{\text{MHR XMIT}}$

$\overline{\text{R4 RCV}}$

U122

PR

D    Q

C    $\overline{Q}$

CL

U48

SELF ADDR CLK

U110'

$\overline{A0}$
$\overline{A1}$
$\overline{A2}$

$\overline{\text{R5 RCV}}$

U91

RØ  A3

U92

1
2
4
5

$\overline{\text{R6 RCV}}$

U92'

$\overline{\text{R7 RCV}}$

$\overline{\text{R4-R7 XMIT}}$

$\overline{\text{RØ-R3 XMIT}}$

CMD  HOLD

$\overline{\text{R7 XMIT}}$

FIG.H

64

FIG.9A

TA0

$\overline{\text{MOD RCV}}$

TA0

T CLK

$\overline{\text{R01 XMT}}$

$\overline{\text{R2 XMT}}$

$\overline{\text{R3 XMT}}$

$\overline{\text{MHR XMT}}$

$\overline{\text{MHR I/O RCV}}$

$\overline{\text{R4 XMT}}$

$\overline{\text{MASTER}}$

$\overline{\text{R4 RCV}}$

D0

SELF ADDR CLK

$\overline{\text{R5 RCV}}$

A0

D7

P

A7

$\overline{\text{MEM XMT}}$

$\overline{\text{MEM RCV}}$

U66

A0    D0

A7    D7

$\overline{\text{OE}}$    P

$\overline{\text{CS}}$

$\overline{\text{WE}}$

U10

$\overline{\text{R7 STAT}}$

EXT CLK CTL

EXT $\overline{\text{M/S}}$

$\overline{\text{EXT DIAG}}$

WRG PERM

$\overline{\text{I/O OFF}}$

RESYNCH

CMRD STATUS

$\overline{\text{EN}}$

G

D0

D5

$\overline{\text{INT DIAG}}$

U13

D6

U13'

G

D7

FIG.9

| 9A | 9B | 9C | 9D |
|----|----|----|----|
| 9E | 9F | 9G | 9H |

# FIG.9 B

FIG.9C

CMRD ADDR

ALM RCVD

FIG.9D

S/LOAD I

S/LOAD Ø

TCLK

U26

CK-EN
S/LOAD Ø
CK

DØ     OUT

MOD Ø

D7     IN

UII

UI2'

CK
D
CL     Q
PR

+V2

U28

CK-EN
S/LOAD Ø
CK

P      OUT

MODØ   IN

# FIG.9E

## FIG. 9F

## FIG.9 G

$\overline{\text{CMD - VALID}}$

C0
C1
C2
C3
C4
C5
C6
C7

U7

AI    D6
.      D7
A3    P

U8

AI    D0
.     .
.     .
A6    D5

U9

AI    D6
.      D7
A3    P

+V2

G

71

FIG.9H

FIG.10A

FIG.10

| A | C |
|---|---|
| B |   |

FIG.IOB

FIG.IOC

EXT CLK Ø

EXT CLK I

CLK Ø

CLK I

EXT CLK CTRL

$\overline{\text{MASTER}}$

$\overline{\text{TA Ø}}$

TA Ø

MHR I/O RCV

DØ/

D7

P

DØ

U 51

D7

U 70

P

ALL I'S

FIG.11A

FIG.11

| A | B | C | D |
|---|---|---|---|
| E | F | G | H |

FIG.11B

FIG.11C

U33 CLK Ø

$\overline{\text{CLK Ø}}$
CLK1
$\overline{\text{CLK 1}}$

EN

+V2

U34

EN

RI01

G

CLK Ø
$\overline{\text{CLK Ø}}$

CLK1
$\overline{\text{CLK1}}$

U85

RI04
RI34

$\overline{\text{EXT CLK}}$

U32

C63

U16

WRQ

EN

D0 RI05
$\overline{\text{D0}}$
D1
$\overline{\text{D1}}$
D2
$\overline{\text{D2}}$
D3

G

D0

D3

$\overline{\text{D3}}$ RI12

U17

D4 RI13
$\overline{\text{D4}}$

EN

G

D4

D7

D7

$\overline{\text{D7}}$ RI20

U114

WRQ

EN

P RI21

G

P

$\overline{\text{P}}$ RI22

+V2

## FIG.IID

EXTERNAL
$\overline{\text{EXT-CLK}}$ CLOCK CONTROL

CLK Ø
$\overline{\text{CLK Ø}}$ } BYTE CLOCK

CLK I
$\overline{\text{CLK I}}$ } FRAME CLOCK

DØ
$\overline{\text{DØ}}$
D I
$\overline{\text{D I}}$
D2
$\overline{\text{D2}}$
D3
$\overline{\text{D3}}$
D4           BIDIRECTIONAL
$\overline{\text{D4}}$           DATA BUS
D5
$\overline{\text{D5}}$
D6
$\overline{\text{D6}}$
D7
$\overline{\text{D7}}$
P
$\overline{\text{P}}$

# FIG.11E

MOD PARITY

ODD PARITY

GENERATE PARITY/
PASS ON PARITY

U84   P

U70'

U90

I/O XMT

I CLK

WRQ

WAK

EXT M/S

EXT-DIAG

I/O-OFF

ALARM RCVD

SYNC ALARM

BYPASS CMRD

BYPASS I/O

U52

U99

FIG.11F

FIG.11G

+V2　UI5

EN
EN
G

D∅
D∅
DI
DI
D2
D2
D3
D3

UI8

EN
EN
G

D4
D4
D5
D5
D6
D6
D7
D7

U 32'

EN
G

WRQ
WRQ

UI

M/S　　M/S
　　R126
EXT DIAG
I/O OFF
I/O OFF
G　EN
EN　I/O OFF
R129
ALM
R130 WAK
U2　R131　WAK

FIG.11H

# I/O DATA BUS TIMING — READ DATA FROM CMRD

F I G. 12 A

# I/O DATA BUS TIMING – WRITE DATA INTO CMRD

BYTE CLOCK

FRAME CLOCK

BYTE 0

TRUE
FALSE ............................ WRQ

TRUE
FALSE ............................ WAK

## F I G. 12B

EP 0 230 116 B1

## MASTER CMRD DATA FLOW – BYTES 0–247

24
SERIAL INPUT

110 124
210

124

SERIAL INPUT BUFFER

MEMORY HOLD REGISTER

220

130
SERIAL TRANSMIT BUFFER

24
SERIAL OUTPUT

241 (ON DEMAND)

124
SYNC PATTERN ROM

122 ─ 256 X 9 MEMORY

PARALLEL INPUT BUFFER

126

PARALLEL IN/OUTPUT

230

136 ─ DIAGNOSTIC RECEIVE REGISTERS

PARALLEL OUTPUT BUFFER

126

48           F I G. 13A

EP 0 230 116 B1

MASTER CMRD DATA FLOW – BYTES 248-251

FIG. 13B

EP 0 230 116 B1

MASTER CMRD DATA FLOW — BYTES 252—255

FIG. 13C

48

EP 0 230 116 B1

SLAVE CMRD DATA FLOW – BYTES 0 – 247

F I G. 14A

EP 0 230 116 B1

SLAVE CMRD DATA FLOW — BYTES 248—251

F I G. 14B

EP 0 230 116 B1

SLAVE CMRD DATA FLOW – BYTES 252 –255 (DISABLED DIAGNOSTICS)

F I G. 14C

SLAVE CMRD DATA FLOW — BYTES 252-255 (ENABLED DIAGNOSTICS)

F I G. 14D